# EUROPEAN PATENT APPLICATION

(11) **EP 4 793 077 A1**
(43) Date of publication of application: **19.08.2026**
(21) Application number: 24876321.1
(22) Date of filing: 06.09.2024
(51) Int. Cl.: B60K 17/04

(54) **MULTI-DRIVE AXLE POWER TRANSMISSION STRUCTURE OF NOVEL MULTI-PURPOSE SHAFT TRANSMISSION SYSTEM FOR ALL-TERRAIN VEHICLE**

(30) Priority: 10.10.2023 CN 202311302680
(71) Applicant: Ma, Liang, Yangquan, Shanxi 045008 (CN)
(72) Inventor: MA, Yixuan, Yangquan, Shanxi 045008 (CN); MA, Yilong, Yangquan, Shanxi 045008 (CN); MA, Liang, Yangquan, Shanxi 045008 (CN)
(74) Representative: Metida
(86) International application number: PCT/CN2024/117326
(87) International publication number: WO 2025/077501

(57) **Abstract**

The present invention provides a multi-drive axle power transmission structure of a novel multi-purpose shaft transmission system for an all-terrain vehicle. The multi-drive axle power transmission structure has extensive use, can be applied to multi-drive axle power transmission of an all-terrain amphibious vehicle or wheeled armored vehicle, and can effectively improve the smoothness of high-speed advancing of the all-terrain amphibious vehicle and wheeled armored vehicle on the off-road pavement, and improve the comfort of a driver and passengers. Due to a drive axle gear transmission box shell being mounted at an end portion of an axle tube of an entire drive axle, the entire drive axle provided with a left drive wheel and a right drive wheel can span higher obstacles. Moreover, the off-road performance of the vehicle on complex terrains is greatly improved by a multi-drive axle power transmission system. An input shaft bevel gear right-angle transmission box shell of multiple sets of novel multi-purpose shaft transmission box bodies and a transmission shaft universal joint, etc. connected with an engine in series are mounted in a vehicle body chassis of the all-terrain amphibious vehicle or wheeled armored vehicle, and the chassis armor can effectively prevent explosive fragments and shock waves from damaging the transmission system in the vehicle body chassis.

## Description

### TECHNICAL FIELD

The present invention relates to the technical field of power transmission structures for all-terrain amphibious vehicles and wheeled armored vehicles, and particularly to a multi-drive axle power transmission structure of a new multi-purpose shaft drive system for all-terrain vehicles.

### BACKGROUND TECHNOLOGY

All modern all-terrain amphibious vehicles and armored vehicles have their body and drive axle integrated into a single structural form. The drive axle structure is similar to that of the above-mentioned vehicle, but this structure of the rear drive axle cannot well adapt to the driving on off-road surfaces and also cannot take into account the comfort of the driver and passengers. The reason for this is that the vehicle body is short or the installation position between the engine and the drive axle is greatly limited. Therefore, most models design and install the vehicle body frame and drive axle as an integrated structure, with the vehicle body frame and the drive hard shaft fixed in a rigid structure. Due to the integration of the vehicle body frame and the drive axle, only the chain drive structure can be used to arrange and install multiple drive axles to transmit power. Taking the "Chain Drive Device for Amphibious All-Terrain Vehicle" with application number CN200520010330.5 as an example, the chain drive device occupies the precious space resources of the all-terrain amphibious vehicle body, reducing the effective utilization space. However, only in this way can the power from the engine to the drive shaft be effectively transmitted through the chain and sprocket. However, such a drive method has its drawbacks. Due to the integration of the vehicle body frame and the drive axle, the durability of the transmission system is greatly reduced. Due to the integration of the vehicle body frame and the drive axle, the rebound responsiveness of the drive axle on uneven roads decreases, and it cannot effectively reduce the impact force from the road surface in a timely manner, causing severe jolts when the vehicle is driving on uneven roads. Due to the rigid connection of the vehicle body frame and the drive axle, when the drive axle bounces, the vehicle body frame can only rotate around the center of gravity of the vehicle body, and the multiple drive axles connected rigidly cannot form a cross-axis condition. Therefore, when the vehicle is driving on off-road surfaces, the tracking performance of each wheel is poor and cannot closely follow the road surface in real time. There is always one wheel in the air, reducing the power transmission efficiency. The comfort of the driver and passengers is greatly reduced. Therefore, a drive axle structure with excellent performance, high transmission efficiency, and the ability to adapt to off-road conditions needs to be designed. A new multi-purpose shaft drive system for all-terrain vehicles that can ensure both road driving performance and the comfort of drivers and passengers, while also allowing the separation and independent installation of the vehicle body and drive axle, is imperative.

### INVENTION CONTENT

To solve the problems in the existing technology, the present invention proposes a specific technical solution for the multi-drive axle power transmission structure of a new multi-purpose shaft drive system for all-terrain vehicles, as follows:

The new multi-purpose shaft transmission box adopts a vertical installation method to transfer power. Taking the double-axle structure of the front axle as an independent suspension steering front double axle and the double-axle structure and the matching rear axle as an integral drive axle double rear axle structure as an example, the universal joint output shaft bevel gear transmission box shell of the new multi-purpose shaft transmission box installed in a vertical position, the first set of transmission box shell, the second set of transmission box shell and the third set of transmission box shell, as well as the left universal joint output shaft bearing seat and the right universal joint output shaft bearing seat of each set of transmission box shell and the universal joint output splined shaft are installed in a horizontal arrangement at the middle position between the front and rear drive axles along the longitudinal axis of the all-terrain amphibious vehicle, armored vehicle or wheeled vehicle chassis.

The left and right universal joint output shaft bearing seats of the first set of universal joint output shaft bevel gear right-angle transmission box housing arranged laterally and the universal joint output splined shaft are installed at the middle position of the first drive shaft at the front of the vehicle chassis. The left and right independent suspension knuckle shaft steering knuckles of the first group of drive axles are laterally arranged and installed at the positions of the first drive shaft on the left and right sides of the front of the all-terrain amphibious vehicle, wheeled armored vehicle, etc.

The left and right bearing seats of the second set of universal joint output shaft bevel gear right-angle transmission box housing and the universal joint output splined shaft are installed at the middle position of the second drive shaft at the front of the vehicle chassis. The left and right independent suspension knuckle shaft steering knuckles of the second set of drive axles are installed horizontally at the front of the left and right sides of the vehicle body of all-terrain amphibious vehicles, wheeled armored vehicles, etc., at the position of the second drive shaft.

At the same time, the third and fourth integral drive axles are laterally arranged and installed at the positions of the third and fourth drive shafts at the rear of the all-terrain amphibious vehicle, wheeled armored vehicle, etc. The left and right universal joint output shaft bearing seats of the third set of universal joints and the universal joint output splined shaft are laterally arranged and installed at the positions between the two sets of bridge tubes of the third and fourth integral drive axles, and the three shafts are installed in parallel with each other.

The first, second and third sets of transmission box shells of the universal joint output shaft bevel gear transmission box shell of the new multi-purpose shaft transmission box body are each formed into an integral structure with the left and right universal joint output shaft bearing seats, the universal joint output splined shaft and the vehicle chassis, maintaining a relatively stationary power transmission position with respect to the vehicle body.

The left independent suspension knuckle of the first set of drive axles under the vehicle chassis is connected to the left side of the vehicle body through double A-shaped arms, and the right independent suspension knuckle is connected to the right side of the vehicle body through double A-shaped arms. The left independent suspension knuckle of the second set of drive axles is connected to the left side of the vehicle body through double A-shaped arms, and the right independent suspension knuckle is connected to the right side of the vehicle body through double A-shaped arms. Meanwhile, the third and fourth integral drive axles are flexibly connected to the vehicle chassis through longitudinal four-link and transverse Panhard rods. The suspension supports the vehicle body with coil springs, air springs or leaf springs.

The multi-drive axle power transmission structure of the new multi-purpose shaft drive system for all-terrain vehicles includes a new multi-purpose shaft drive box, characterized by:

The new multi-purpose shaft transmission box is composed of three parts: the input shaft bevel gear right-angle transmission box shell, the intermediate transmission shaft support protection tube, and the universal joint output shaft bevel gear right-angle transmission box shell. The input shaft bevel gear right-angle transmission box shell and the input splined shaft and bevel gear bearing assembly installed inside, the intermediate transmission shaft support protection tube with a suitable length and the intermediate transmission shaft and driven bevel gear assembly installed inside the tube cavity, the universal joint output shaft bevel gear right-angle transmission box shell and the output shaft bevel gear bearing assembly installed inside, the driven bevel gear at the left end, the driven bevel gear at the right end, and the universal joint output splined shaft are combined. The input shaft bevel gear right-angle transmission box shell is composed of multiple cylindrical shells of different diameters. The input shaft bevel gear right-angle transmission box shell includes a large bearing seat cylindrical shell, an active bevel gear cylindrical shell, a small bearing seat cylindrical shell, a driven bevel gear cylindrical shell in the vertical direction, and a driven bevel gear bearing seat cylindrical shell, which are combined to form an irregular input shaft bevel gear right-angle transmission box shell. The active bevel gear cylindrical shell and the small bearing seat cylindrical shell in the horizontal position of the input shaft are welded together. In the vertical direction, the driven bevel gear cylindrical shell is welded to the active bevel gear cylindrical shell and the small bearing cylindrical shell in the horizontal direction to form an integrated structure. The flange of the active bevel gear cylindrical shell in the horizontal direction is fastened to the flange of the large bearing seat cylindrical shell with bolts. In the vertical direction, the flange of the driven bevel gear bearing seat cylindrical shell is fastened to the flange of the driven bevel gear cylindrical shell with bolts. The input shaft bevel gear right-angle transmission box shell of the new multi-purpose shaft transmission box is installed with There is an input shaft active bevel gear assembly and a middle transmission shaft driven bevel gear assembly. The input splined shaft, which is in a horizontal position and extends longitudinally backward from the universal joint of the engine transmission shaft or the universal joint of the middle transmission shaft, is inserted into the input bevel gear right-angle transmission box housing of the new multi-purpose shaft transmission box body, which is installed in a longitudinal position and in parallel and coaxially. Inside the input bevel gear right-angle transmission box housing, there are two sets of large bearings installed in the large bearing seat in the horizontal direction of the input shaft. Inside the large bearing holes, there are internal splined shaft sleeves that can mesh with the input splined shaft. Moreover, the inner end of the internal splined shaft sleeve of a suitable length is welded with a bevel gear, forming an integrated internal splined shaft bevel gear assembly. Inside the small bearing seat in the horizontal direction of the input shaft in the input bevel gear right-angle transmission box housing, there are two sets of small bearings installed. On both sides of the small bearing holes, there are shims for adjusting the clearance. The input splined shaft of the universal joint of the engine transmission shaft or the universal joint of the middle transmission shaft is inserted into the internal splined hole of the integrated internal splined shaft bevel gear installed in the large bearing hole of the input bevel gear right-angle transmission box housing and meshes with the splined shaft part of the input shaft to transmit power. The smooth shaft part on the same axis then passes through the bearing holes of the two sets of small bearings installed in the small bearing seat and the splined shaft part exposed outside the end of the input bevel gear right-angle transmission box housing is connected with a universal joint and fastened with a large nut. The output splined shaft at the end of the output shaft bearing seat of the input bevel gear right-angle transmission box housing, which is in a horizontal position and extends longitudinally forward and backward, and the input splined shafts at both ends of the universal joint of the middle transmission shaft, are the co-axial splined shafts of the input shaft of the input bevel gear right-angle transmission box housing.

The intermediate transmission shaft support and protection tube of the new multi-purpose shaft transmission box is composed of multiple sets of cylindrical shell tubes of different diameters and lengths, including: a cylindrical shell of the driven conical gear bearing seat in the vertical direction, a cylindrical shell of the intermediate transmission shaft support and protection tube of suitable length, and a cylindrical shell of the end input shaft conical gear bearing seat of the intermediate transmission shaft, which are welded into a coaxial intermediate transmission shaft support and protection tube. In the vertical direction, the flange of the cylindrical shell of the driven conical gear of the input shaft conical gear right-angle transmission box is fastened to the flange of the cylindrical shell of the driven conical gear bearing seat of the intermediate transmission shaft support and protection tube with bolts. In the vertical direction, the flange of the cylindrical shell of the end input shaft conical gear bearing seat of the intermediate transmission shaft support and protection tube is fastened to the flange of the cylindrical shell of the end input shaft conical gear bearing seat installed on the universal joint output shaft conical gear right-angle transmission box with bolts. The driven conical gear installed in the input shaft conical gear right-angle transmission box in a vertical direction perpendicular to the horizontal input shaft is installed in the bearing seat of the cylindrical shell of the driven conical gear in the vertical direction, and the input shaft driving conical gear installed on the horizontal input splined shaft meshes with the driven conical gear of the intermediate transmission shaft installed in the vertical direction to transmit power. The cylindrical shell of the driven conical gear bearing seat in the vertical direction is welded to the cylindrical shell of the intermediate transmission shaft support and protection tube. The tube cavity of the intermediate transmission shaft support and protection tube, which is installed in a vertical direction, is equipped with an intermediate transmission shaft of suitable length. Both ends of the intermediate transmission shaft are splined shaft parts. The upper splined head part is inserted into the splined hole of the center of the driven bevel gear in the input shaft bevel gear right-angle transmission box housing and meshes with the splined groove. The lower splined head part is inserted into the right-angle transmission box housing of the universal joint output shaft bevel gear and meshes with the splined grooves in the center splined holes of the left and right output shaft driven bevel gears installed on the horizontal universal joint output splined shaft to transmit power.

The universal joint output shaft bevel gear right-angle transmission box shell of the new multi-purpose shaft transmission box is composed of multiple cylindrical shells of different diameters, including: the cylindrical shell of the left universal joint output shaft bearing seat and the cylindrical shell of the right universal joint output shaft bearing seat at the horizontal position, the cylindrical shell of the universal joint output shaft bevel gear at the middle position, and the cylindrical shell of the bevel gear at the end of the intermediate transmission shaft installed vertically. On the left and right sides of the cylindrical shell of the universal joint output shaft bevel gear, the cylindrical shells of the left and right output shaft bearing seats are welded. A group of cylindrical shells of the bevel gear at the end of the intermediate transmission shaft is installed in the vertical direction of the cylindrical shell of the universal joint output shaft bevel gear. The flange of the cylindrical shell of the bevel gear bearing seat at the end of the intermediate transmission shaft support protection tube is fastened to the flange of the cylindrical shell of the bevel gear at the end of the intermediate transmission shaft of the universal joint output shaft bevel gear right-angle transmission box shell with bolts.

The conical gear at the end of the intermediate transmission shaft installed vertically in the housing of the universal joint output shaft conical gear right-angle transmission box is the input shaft conical gear meshing with the intermediate transmission shaft in the housing of the universal joint output shaft conical gear right-angle transmission box. The input shaft conical gear and the bearing are combined and installed in the cylindrical shell of the bearing seat at the end of the output shaft conical gear of the intermediate transmission shaft, and mesh with the left output shaft driven conical gear and the right output shaft driven conical gear installed on the universal joint output splined shaft at the horizontal position in the housing of the universal joint output shaft conical gear right-angle transmission box to transmit power.

Two sets of bearings are respectively installed in the output shaft bearing seat on the left and the output shaft bearing seat on the right, which are in a horizontal position inside the right-angle transmission box housing of the universal joint. The left output shaft driven bevel gear and the right output shaft driven bevel gear are respectively installed in the two sets of bearing holes. The end of the universal joint output splined shaft is inserted into the center holes of the left driven bevel gear and the right driven bevel gear. The middle position of the left driven bevel gear and the right driven bevel gear installed on the end of the universal joint output splined shaft. A sliding gear sleeve is inserted onto the output splined shaft of the end universal joint. The center holes of the left and right driven bevel gears have no internal splined grooves and are smooth holes. However, the center hole of the sliding gear sleeve inserted onto the output splined shaft of the end universal joint has an internal splined groove structure and meshes with the output splined shaft. At the same time, the sliding gear sleeve can slide left and right, meshing with the inner teeth of the left or right driven bevel gear on the output splined shaft of the end universal joint respectively, thereby enabling the driven bevel gear and the output splined shaft of the end universal joint to rotate in both forward and reverse directions, providing the vehicle with the function of forward and reverse gears. Meanwhile, the left and right end universal joint output shaft bearing seats, which are installed horizontally on the outside of the right-angle transmission box housing of the universal joint output shaft bevel gear, have the left and right ends of the end universal joint output splined shaft installed with the left end constant velocity ball cage universal joint outer cage and the right end constant velocity ball cage universal joint respectively, to output power to both sides and provide convenient conditions for the subsequent installation of the drive half shaft.

A half shaft differential can be optionally installed in the conical gear right-angle transmission box housing of the universal joint output shaft, enabling the two constant velocity ball cage universal joints installed at the left and right ends of the universal joint output splined shaft to have a differential function. Inside the conical gear right-angle transmission box housing of the universal joint output shaft, two sets of bearings are respectively installed in the left and right universal joint output shaft bearing seats at the horizontal position. The left and right edges of the differential housing flanges are respectively installed in the bearing holes of these two sets of bearings. Inside the differential housing, a differential gear assembly is installed, and an output shaft differential driven conical large gear is installed outside the differential housing and meshes with the input conical gear that meshes with the vertical intermediate transmission shaft in the conical gear right-angle transmission box housing of the universal joint output shaft. At the same time, two transmission splined half shafts are respectively installed in the bearing holes of the left and right universal joint output shaft bearing seats and mesh with the left and right differential conical gears installed in the differential housing through their central splined holes. The left end of the splined half shaft is equipped with the left end constant velocity ball cage universal joint, and the right end of the splined half shaft is equipped with the right end constant velocity ball cage universal joint, simultaneously transmitting power to both sides.

Furthermore, for the multi-drive axle power transmission system, the integral drive axle used is the same type of integral drive axle, with an integral drive shaft installed inside the integral drive axle tube. The transmission box housing installed at the left or right end of the integral drive axle tube, which has an elliptical cross-section, is composed of a rectangular shell and two semi-cylindrical shell ends of the rectangular shell, as well as an integral drive axle gear or chain wheel and chain transmission box housing with an elliptical cross-section and a suitable length for installing a suitable transmission gear set or transmission chain wheel set. Taking the drive axle gear transmission box housing as an example, in the gear transmission box of the drive axle is equipped with multiple sets of transmission gears arranged in sequence and meshing with each other. On the inner walls of the drive axle gear transmission box at the positions of the left and right ends of the integral drive axle tube, there are left and right symmetrical drive axle tube bearing seats welded. Inside these symmetrical bearing seats, there is an integral drive shaft inserted, and on this integral drive shaft, there is a large drive gear installed. On both sides of the large drive gear, there are bearings installed on the integral drive shaft, which are also installed in the symmetrical bearing seats on the left and right inner walls of the drive axle gear transmission box, keeping the large drive gear in the middle of the two bearing seats for transmission. On the inner walls of the middle position of the drive axle gear transmission box on the left and right sides, there are symmetrical bearing seats for the intermediate transmission gear set. Inside these two bearing seats, there are bearings and the intermediate transmission gear shaft installed, and on the intermediate transmission gear shaft between the two bearing seats, there is an intermediate transmission gear installed. On the inner walls of the left and right sides of the input shaft end of the drive axle gear transmission box, there are symmetrical input shaft bearing seats installed. Inside the bearing holes of these two bearing seats, there are splined shafts of the constant velocity ball cage universal joint outer cage inserted, and on the splined shafts between the two bearing seats, there is a small input shaft drive gear installed. The splined shaft of the constant velocity ball cage universal joint outer cage passes through the bearing seat at the input shaft end of the drive axle gear transmission box, and its extended part is fastened with a nut. On the bearing seats at the left and right ends of the integral drive axle tube, there are two sets of bearings installed to fix the integral drive shaft inside the drive axle tube. At both ends of the integral drive shaft, there are splines, allowing the installation of flange plates for fixing the wheel tires and flange plates for fixing the brake discs. The extended parts of the flange plates at both ends of the integral drive shaft are fastened with nuts. Outside the drive axle tube, there are welded longitudinal and transverse push-pull rod brackets, shock absorber spring brackets, brake pump brackets and other accessories to control the movement posture of the integral drive axle.

To expand the broader applicability of the integral drive axle, according to the vehicle usage requirements, the large transmission gear installed on the integral drive shaft within the gear transmission box of the integral drive axle can be replaced with a differential large gear assembly with differential function, and the integral drive shaft installed within the axle tube of the integral drive axle can be replaced with two drive axle half shafts on the left and right sides that are compatible with the differential assembly. The feature is that the differential large gear assembly is installed in the gear transmission box of the drive axle. At the middle position of the two symmetrical axle tube bearing seats, the edges of the protrusions on the left and right sides of the differential housing are respectively embedded in the left and right axle tube bearing seats of the gear transmission box of the drive axle. Within the differential housing, a differential conical gear assembly is installed. The splined shafts of the two drive axle half shafts inserted into the left and right ends of the integral drive axle tube are respectively inserted into the left and right differential housing of the differential. The conical gears are installed in the center splined shaft holes and mesh with each other to transmit power. Bearings are installed in the bearing seats at the left and right ends of the integral drive axle housing to fix the left and right drive axle half shafts, enabling a differential function between the two half shafts.

The transmission chain and sprocket assembly in the integral drive axle chain and sprocket transmission box housing is an improvement of the transmission gear structure in the integral drive axle gear transmission box housing. Specifically, the large transmission gear installed on the integral drive shaft at the middle position between the left and right symmetrical drive axle tube bearing seats in the integral drive axle gear transmission box housing is replaced with a large transmission sprocket. The intermediate transmission gear installed on the intermediate transmission gear shaft at the middle position in the integral drive axle gear transmission box housing is replaced with an intermediate chain guide wheel. The small transmission gear installed on the splined shaft of the outer ball cage of the constant velocity ball cage universal joint between the left and right symmetrical input shaft bearing seats at the input shaft end in the integral drive axle gear transmission box housing is replaced with a small transmission sprocket. The transmission sprockets are meshed with a set of transmission chains to transmit power, and the intermediate chain guide wheel assists in the smooth operation of the chain. The integral drive axle chain and sprocket transmission box housing and the integral drive axle gear transmission box housing have the same shape, the same installation position, the same function, and the same installation position of each shaft in the transmission box housing.

Furthermore, the transmission structure feature of the special all-terrain amphibious vehicle or wheeled armored vehicle with four drive axles 8x8 drive wheels is:

The double-axle structure of the new multi-purpose shaft drive system for all-terrain vehicles features a front axle with four-wheel drive and independent suspension steering, which is a front double-axle structure. When the two sets of new multi-purpose shaft drive box bodies with universal joint output shaft bevel gear right-angle transmission box shells in this scheme are applied to two sets of independent suspension knuckle shaft steering drive axles, the left and right universal joint output shaft bearing seats and the left and right universal joint output spline shafts of the first set of new multi-purpose shaft drive box bodies with universal joint output shaft bevel gear right-angle transmission box shells are laterally arranged and installed at the middle position of the first drive axle at the front of the all-terrain amphibious vehicle or wheeled armored vehicle body, which is also the middle position between the left and right constant velocity ball cage universal joints and left and right drive half shafts of the left and right knuckle shaft steering drive axles installed on both sides of the vehicle body, and are integrated with the vehicle body chassis.

When the power is transmitted by a pair of independent suspension knuckle shaft steering axle drive bridges, the two knuckle shaft steering axles installed on the left and right sides of the vehicle body of all-terrain amphibious vehicles, wheeled armored vehicles, etc., and on the same axis are connected to the vehicle frame through one of the preferred connection methods such as double A-shaped arms, multi-link trailing arms or longitudinal swing arms, with the first group of independent suspension. Taking the transmission of power through the knuckle steering knuckles with ball joints as an example, the first set of the new multi-purpose shaft transmission box assembly at the front of the vehicle body, the universal joint output shaft bevel gear right-angle transmission box housing, the left power transmission half shaft, the first set of independent suspension knuckle steering knuckles on the left side of the vehicle body, the constant velocity ball joint universal joint, the right power transmission half shaft, and the first set of independent suspension knuckle steering knuckles on the right side of the vehicle body, the constant velocity ball joint universal joint, together form the first set of independent suspension steering front axle structure. The constant velocity ball joint universal joint of the knuckle steering knuckles on the left side and the right side of the first set of independent suspension are installed in the center holes of the left and right knuckle steering knuckles on both sides of the vehicle body and connected to the vehicle body through double A-shaped arms. They are arranged and installed on the left and right sides of the first drive shaft at the front of the vehicle body of all-terrain amphibious vehicles, wheeled armored vehicles, etc. At the same time, the axes of the two coaxial knuckle steering knuckles on the left and right sides, the constant velocity ball joint universal joint, are located at the left and right universal joint output shaft bearing seats of the first set of universal joint output shaft bevel gear right-angle transmission box housing, which is installed as an integral structure with the vehicle body, and the lower part of the vehicle body. Moreover, the axes of the two coaxial constant velocity ball joint universal joints of the left and right knuckle steering knuckles have a sufficient stroke distance from the vehicle chassis.

The left end of the universal joint output splined shaft on the left side of the first set of universal joint output shaft bevel gear right-angle transmission box housing installed on the first drive axle position of the vehicle body chassis is equipped with a left end constant velocity ball cage universal joint outer cage and is fastened with a center screw. At the same time, the left end of the universal joint output splined shaft of the first set of universal joint output shaft bevel gear right-angle transmission box housing is also installed with a left side constant velocity ball cage universal joint outer cage, and a transmission half shaft extending laterally to the left is inserted into the inner cage center splined hole of the left side constant velocity ball cage universal joint outer cage. The inner cage installed on the right end of the transmission half shaft is meshed with the constant velocity ball cage universal joint outer cage, and the transmission half shaft extends laterally to the left and is inserted into the right side of the left independent suspension knuckle shaft steering knuckle shaft hole, which is equipped with a telescopic constant velocity ball cage universal joint outer cage. The left end of the transmission half shaft is meshed with the center splined hole of the inner cage and transmits power.

The right end of the right universal joint output splined shaft of the first set of universal joint output shaft bevel gear right-angle transmission box shell installed at the first drive axle position on the vehicle body chassis is simultaneously equipped with a right end constant velocity ball cage universal joint outer cage and is fastened with a center screw. Inside the inner cage center splined hole of the right constant velocity ball cage universal joint outer cage simultaneously installed at the right end of the universal joint output splined shaft of the first set of universal joint output shaft bevel gear right-angle transmission box shell, a splined shaft extending laterally to the right is inserted and installed. The drive half shaft, with the inner ball cage installed at the left end of the drive half shaft meshing with the outer ball cage of the constant velocity ball cage universal joint, and the center splined hole of the inner ball cage through which the drive half shaft transmitting power to the right extends laterally to the right into the steering knuckle shaft hole of the independent suspension on the right side of the vehicle body, and the outer ball cage of the constant velocity ball cage universal joint with telescopic function is installed to the left. The right end of the drive half shaft meshes with the center splined hole of the inner ball cage and transmits power.

When the two sets of new multi-purpose shaft transmission box bodies' universal joint output shaft bevel gear right-angle transmission box shells in this scheme are applied to the independent suspension knuckle steering knuckles, the left and right universal joint output shaft bearing seats and the outwardly extended universal joint output splined shafts of the second set of new multi-purpose shaft transmission box bodies' universal joint output shaft bevel gear right-angle transmission box shells are also laterally arranged and installed at the middle position of the second set of independent suspension drive axles of the all-terrain amphibious vehicle or wheeled armored vehicle's body at the second drive axle position in the front part of the vehicle body. At the same time, they are installed in the middle position between the constant velocity ball cage universal joints and the left drive half shaft of the left knuckle steering knuckle and the constant velocity ball cage universal joints and the right drive half shaft of the right knuckle steering knuckle, which are simultaneously installed on both sides of the vehicle body, and are integrated with the vehicle body chassis.

When two sets of independent suspension knuckle shaft steering axles are used to transmit power, the two knuckle shaft steering axles installed on the left and right sides of the all-terrain amphibious vehicle, wheeled armored vehicle, etc., and on the same axis are connected to the vehicle frame through one of the preferred connection methods such as double A-shaped arms, multi-link trailing arms or longitudinal swing arms. Taking the second set of independent suspension knuckle shaft steering axles as an example, the second set of new multi-purpose shaft transmission box bodies are combined at the front of the vehicle body. The universal joint output shaft bevel gear right-angle transmission box housing, the left transmission half shaft for transmitting power to the left, the constant velocity ball cage universal joint of the second set of independent suspension knuckle shaft steering axles on the left side of the vehicle body, the right transmission half shaft for transmitting power to the right, and the constant velocity ball cage universal joint of the second set of independent suspension knuckle shaft steering axles on the right side of the vehicle body form a second set of independent suspension steering double front axles structure. The constant velocity ball cage universal joints of the second set of independent suspension knuckle shaft steering axles on the left and right sides are installed in the center holes of the two coaxial knuckle shaft steering axles and connected to the vehicle body through double A-shaped arms. They are arranged and installed on the left and right sides of the second drive shaft at the front of the vehicle body. At the same time, the axes of the two coaxial knuckle shaft steering axles on the left and right sides are located at the left and right universal joint output shaft bearing seats of the second set of universal joint output shaft bevel gear right-angle transmission box housing, which is installed as an integral structure with the vehicle body, and the lower part of the vehicle body. The centerlines of the constant velocity ball cage universal joints of the steering knuckle and the right side knuckle shaft steering knuckle have a sufficient stroke clearance from the vehicle chassis.

The left end of the left universal joint output shaft splined shaft head on the left side of the second set of universal joint output shaft bevel gear right-angle transmission box housing installed at the second drive axle position on the vehicle chassis is simultaneously equipped with a left constant velocity ball cage universal joint outer cage and is fastened with a center screw. The inner cage center splined hole of the left constant velocity ball cage universal joint outer cage installed on the left end of the universal joint output splined shaft of the second set of universal joint output shaft bevel gear right-angle transmission box housing is inserted with a transmission half shaft extending laterally to the left. The inner cage of the transmission half shaft's right end is meshed with the outer cage of the constant velocity ball cage universal joint, and the transmission half shaft extends laterally to the left into the right side of the outer cage of the telescopic constant velocity ball cage universal joint installed in the axle steering knuckle hole of the left independent suspension of the vehicle body, and the left end of the transmission half shaft is meshed with the center splined hole of the inner cage to transmit power.

The right ball cage of the right universal joint output shaft of the second set of universal joint output shaft bevel gear right-angle transmission box shell installed at the second drive axle position on the vehicle chassis is simultaneously equipped with a right end constant velocity ball cage universal joint outer cage and fastened with a center screw. The inner cage center splined hole of the right constant velocity ball cage universal joint outer cage installed on the right end of the universal joint output splined shaft of the second set of universal joint output shaft bevel gear right-angle transmission box shell is inserted with a transmission half shaft extending laterally to the right. The inner cage of the transmission half shaft's left end is meshed with the outer cage of the constant velocity ball cage universal joint, and the transmission half shaft extends laterally to the right into the leftward installed outer cage of the constant velocity ball cage universal joint with telescopic function in the axle hole of the independent suspension knuckle shaft of the vehicle's right side, and the right end of the transmission half shaft is meshed with the center splined hole of the inner cage to transmit power.

The right-angle transmission box housing of the universal joint output shaft bevel gear of the independent suspension knuckle of the said matching set is located in An inter-axle differential can be optionally installed between the left universal joint output shaft bearing housing and the right universal joint output shaft bearing housing, enabling the left constant velocity ball cage universal joint installed on the left end of the universal joint output splined shaft at the outer left end of the left universal joint output shaft bearing housing and the right constant velocity ball cage universal joint installed on the right end of the universal joint output splined shaft at the outer right end of the right universal joint output shaft bearing housing, as well as the two drive half shafts and tires on the left and right sides, to have differential function.

The rear axle of the said double-axle structure is a four-wheel drive integral drive axle double rear axle structure. The third integral drive axle and the fourth integral drive axle that are installed in conjunction are composed of tubular axle tubes of suitable lengths, and an elliptical drive axle gear or sprocket chain drive box housing installed at the left end of the third integral drive axle tube and a housing installed at the left end of the fourth integral drive axle tube. The elliptical drive axle gear or sprocket chain drive box shell at the right end of the integral drive axle tube is combined into an integral drive axle housing. The two sets of rear drive integral drive axles share a new multi-purpose shaft drive box.

The left and right universal joint output shaft bearing seats and the universal joint output splined shafts extending laterally to both sides of the third set of new multi-purpose shaft transmission box body's universal joint output shaft bevel gear right-angle transmission box shell are arranged and installed at the rear of the all-terrain amphibious vehicle or wheeled armored vehicle, in the middle position between the third and fourth integral drive bridges, and are installed as an integral structure with the vehicle chassis. At the same time, the left and right universal joint output shaft bearing seats and the universal joint output splined shafts extending laterally to both sides of the universal joint output shaft bevel gear right-angle transmission box shell are installed in parallel with the third and fourth integral drive bridges of the double rear axles.

The left and right universal joint output shaft splined ends extending outward from the left and right universal joint output shaft bearing seats on the left and right sides of the bevel gear right-angle transmission housing of the third set of new multi-purpose shaft transmission box body are simultaneously installed with the left and right constant velocity ball cage universal joints and fastened with a center screw. A drive half shaft extending laterally to the left is inserted into the center splined hole of the inner cage of the left constant velocity ball cage universal joint, and a drive half shaft extending laterally to the right is inserted into the center splined hole of the inner cage of the right constant velocity ball cage universal joint.

To correspond to the installation position of the left bearing seat of the output shaft of the third universal joint, the left end of the output shaft splined end of the bevel gear right-angle transmission box shell of the third universal joint, the constant velocity ball cage universal joint installed at the left end, and the transmission half shaft for outputting power to the left, the third integral drive axle gear (or sprocket chain) transmission box shell is preferably installed in a horizontal position at the left end of the third integral drive axle tube. The installation position of the drive axle gear (or sprocket chain) transmission box shell installed at the left end of the third integral drive axle tube can be parallel to the ground in a horizontal state, or in a vertical state or any position convenient for the installation of the transmission half shaft. Among them, the horizontal position for power transmission is the best demonstration example.

The third integral drive axle gear or chain sprocket transmission box housing installed at the left end of the integral drive axle is in a horizontal installation position, with the universal joint and input splined shaft located at the left side and rear end of the third integral drive axle. The outer ball cage of the telescopic constant velocity ball cage universal joint installed on the right side of the input splined shaft of the integral drive axle gear or chain sprocket transmission box housing is connected to the universal joint of the third set of new multi-purpose shaft transmission box body. The left end of the left output shaft splined shaft of the left universal joint of the conical gear right-angle transmission box shell is installed to the left, and the outer ball cage of the constant velocity ball cage universal joint is in a corresponding position. Preferably, the drive half shaft for leftward power output is arranged laterally and installed in the outer ball cage of the constant velocity ball cage universal joint installed to the left at the left end of the left output shaft splined shaft of the left universal joint of the conical gear right-angle transmission box shell. The drive half shaft, which is inserted into the center splined hole of the inner ball cage, extends laterally to the left and is meshed with the center splined hole of the inner ball cage of the constant velocity ball cage universal joint with telescopic function extending to the right from the right side of the input shaft bearing housing of the transmission box shell of the third set of new multi-purpose shaft transmission box and transmits power.

To correspond to the position of the right bearing housing of the third universal joint output shaft conical gear right-angle transmission box shell and the constant velocity ball cage universal joint installed at the right end of the universal joint output splined shaft, as well as the installation position of the drive half shaft that transmits power to the right, the fourth integral drive axle gear or sprocket chain transmission box shell is preferably installed in a horizontal position at the right end of the fourth integral drive axle tube. The installation position of the drive axle gear (or sprocket chain transmission box shell) at the right end of the fourth integral drive axle tube can be parallel to the ground in a horizontal state, or in a vertical state or any position convenient for the installation of the drive half shaft, among which the horizontal position for power transmission is the best demonstration example.

The fourth integral drive axle gear (or sprocket chain) transmission box housing installed at the right end of the integral drive axle is in a horizontal installation position, with the universal joint and the input splined shaft located at the right side and the front end of the fourth integral drive axle. The outer ball cage of the telescopic function constant velocity ball joint installed on the left side of the input splined shaft of the integral drive axle gear (or sprocket chain) transmission box housing is in a relative position to the outer ball cage of the constant velocity ball joint installed on the right end of the splined shaft of the right side bearing housing of the universal joint output shaft of the third set of new multi-purpose shaft transmission box housing. At the same time, it is preferred to install the drive half shaft for rightward power output horizontally in the outer ball cage of the constant velocity ball joint installed on the right end of the splined shaft of the right side bearing housing of the universal joint output shaft of the third set of new multi-purpose shaft transmission box housing. The drive half shaft extends laterally to the left into the outer ball cage of the telescopic function constant velocity ball joint installed on the left side of the input shaft bearing housing of the integral drive axle gear (or sprocket chain) transmission box housing at the right end of the fourth integral drive axle, and meshes with the splined hole at the center of the inner ball cage to transmit power.

When the third set of the new multi-purpose shaft transmission box is used to drive the third and fourth integral drive axles, an inter-axle differential can be optionally installed at the middle position of the left and right universal joint output splined shafts in the right-angle transmission box housing of the universal joint output shaft bevel gear of the new multi-purpose shaft transmission box, so that the left constant velocity ball cage universal joint and the transmission half shaft outputting power to the left, as well as the right constant velocity ball cage universal joint and the transmission half shaft outputting power to the right, have a differential function.

The double front axle drive bridge applied to the four-axle drive is an independent suspension steering bridge. The first set of new multi-purpose shaft transmission box and the second set of new multi-purpose shaft transmission box, which are respectively matched with the two sets of independent suspension front drive axles, and the double rear axle drive bridge are integral drive bridges that share a set of new multi-purpose shaft transmission box. They are the same type of new multi-purpose shaft transmission box. To synchronize the rotational speeds of the wheel pairs between the double front axles and the double rear axles, the transmission ratio of the drive axle gears or chain and sprocket transmission box installed on the third integral drive axle and the fourth integral drive axle can be adjusted to make the rotational speeds of the front wheel set and the rear wheel set the same.

When the integral drive axle is used to expand the application to the double rear axle drive of all-terrain amphibious vehicles or wheeled armored vehicles, an inter-axle differential can be optionally installed between the left and right half shafts of the third integral drive axle gear (or sprocket chain) transmission box housing and the fourth integral drive axle gear or sprocket chain transmission box housing, so that the left and right two half shafts inside the integral drive axle tube and the driving wheels installed at both ends have a differential function.

The multi-drive axle transmission structure of the new multi-purpose all-terrain vehicle transmission system, when extended to the three-drive axle 6x6 drive wheel all-terrain UTV, ATV or amphibious vehicle and wheeled armored vehicle transmission structure, has the following characteristics: The transmission mode of the extended three-drive axle structure is improved from the four-drive axle transmission mode. Among them, the front double-axle structure of the double-axle structure is a four-wheel drive independent suspension steering front double-axle structure. The first set of left independent suspension knuckle shaft steering knuckles' constant velocity ball cage universal joints and the left power output drive half shafts installed, as well as the first set of right independent suspension knuckle shaft steering knuckles' constant velocity ball cage universal joints and the right power output drive half shafts installed, are combined with the first set of new multi-purpose shaft transmission box body's universal joint output shaft bevel gear right-angle transmission box housing to transmit power. At the same time, the second set of left independent suspension knuckle shaft steering knuckles' constant velocity ball cage universal joints and the left power output drive half shafts installed, as well as the second set of right independent suspension knuckle shaft steering knuckles' constant velocity ball cage universal joints and the right power output drive half shafts installed, are combined with the second set of new multi-purpose shaft transmission box body's universal joint output shaft bevel gear right-angle transmission box housing to transmit power.

When expanding the three-drive bridge 6x6 drive structure, the first set of independent suspension drive axles of the front double axles of the two sets of independent suspension knuckle steering knuckles is removed, and only the first set of left independent suspension knuckle steering knuckles' constant velocity ball cage universal joint and the drive half shaft outputting power to the left, as well as the first set of right independent suspension knuckle steering knuckles' constant velocity ball cage universal joint and the drive half shaft outputting power to the right, are retained. These are combined with the first set of new multi-purpose shaft transmission box body's universal joint output shaft bevel gear right-angle transmission box housing to transmit power. In the expansion of the three-drive bridge structure, the rear double axles of the double-axle structure are integral drive axles. Between the third set of integral drive axles and the fourth set of integral drive axles of the two rear drives, the third set of new multi-purpose shaft transmission box body's universal joint output shaft bevel gear right-angle transmission box housing is shared to transmit power. The first set of independent suspension front axle and the two sets of integral drive rear axles are combined to form the transmission structure of the three-drive bridge 6x6 drive wheels. In the above structure, the second set of independent suspension knuckle steering knuckles and constant velocity ball cage universal joints, as well as the second set of new multi-purpose shaft transmission box body's universal joint output shaft bevel gear right-angle transmission box housing, are omitted. Only the first set of new multi-purpose shaft transmission box body's universal joint output shaft bevel gear right-angle transmission box housing and the third set of new multi-purpose shaft transmission box body's universal joint output shaft bevel gear right-angle transmission box housing are used among the three sets of drive axles to transmit power.

When the integral drive axle is used to expand the application to the double rear axle drive of all-terrain amphibious vehicles or wheeled armored vehicles, an inter-axle differential can be optionally installed between the left and right half shafts of the third integral drive axle gear (or sprocket chain) transmission box housing and the fourth integral drive axle gear or sprocket chain transmission box housing, so that the left and right two half shafts inside the integral drive axle tube and the driving wheels installed at both ends have a differential function.

The multi-drive axle power transmission structure of the new multi-purpose axle drive system for all-terrain vehicles is extended to the structural features of a special all-terrain amphibious vehicle or wheeled armored vehicle with an overall four-drive axle 8x8 drive wheel. The structure is characterized by a double-axle structure of the front axle, which is a four-wheel drive integral drive axle double front axle structure. The first integral drive axle is composed of a tubular axle tube of suitable length and an elliptical drive axle gear (or sprocket chain) transmission box housing installed at the left end of the first integral drive axle tube to form an integral drive axle housing. The second integral drive axle is the same, composed of a tubular axle tube of suitable length and an elliptical drive axle gear or sprocket chain transmission box housing installed at the right end of the second integral drive axle tube to form an integral drive axle housing. A set of new multi-purpose axle transmission boxes is shared between the first and second integral drive axles of the two groups of front axles in the double-axle drive.

The left and right universal joint output shaft bevel gear bearing seats and the universal joint output splined shafts extending laterally to both sides of the first set of new multi-purpose shaft transmission box body's universal joint output shaft bevel gear right-angle transmission box shell are installed in the front chassis position of the all-terrain amphibious vehicle or wheeled armored vehicle, in the middle position between the first and second integral drive axles, and are installed as an integral structure with the vehicle chassis. At the same time, the left and right universal joint output shaft bearing seats and the universal joint output splined shafts extending laterally to both sides of the universal joint output shaft bevel gear right-angle transmission box shell are installed in a parallel position with the first and second integral drive axles of the double-drive front axle.

The left end universal joint output splined shaft, which extends outward from the left side of the universal joint output shaft bearing seat of the first set of new multi-purpose shaft transmission box body installed on the chassis of the all-terrain amphibious vehicle or wheeled armored vehicle in a transverse arrangement, is simultaneously equipped with the outer ball cage of the left end constant velocity ball cage universal joint. Meanwhile, the right end universal joint output splined shaft, which extends outward from the right side of the universal joint output shaft bearing seat, is simultaneously equipped with the outer ball cage of the right end constant velocity ball cage universal joint, and they are fastened with a central screw.

At the same time, the left end of the splined shaft of the left universal joint output shaft installed in the left universal joint output shaft bearing seat on the left side of the first set of universal joint output shaft bevel gear right-angle transmission box housing is inserted into the center splined hole of the inner ball cage installed in the outer ball cage of the constant velocity ball cage universal joint. The inner ball cage installed on the left end of the transmission half shaft extending laterally to the left is meshed with the outer ball cage of the constant velocity ball cage universal joint installed on the left end of the universal joint output splined shaft. The transmission half shaft extending laterally to the left transmits power to the inner ball cage installed on the right side of the input shaft bearing seat outside the transmission box housing of the left drive axle gear or sprocket chain drive box installed on the first integral drive axle of the double drive front axle, and is meshed with the center splined hole of the inner ball cage.

The first integral drive axle gear or chain sprocket transmission box shell installed at the left end of the integral drive axle is in a horizontal position. The universal joint and the input splined shaft are located at the left side and the rear end of the first integral drive axle. The outer ball cage of the telescopic constant velocity ball joint installed on the right side of the input splined shaft of the integral drive axle gear or chain sprocket transmission box shell is in a relative position to the outer ball cage of the constant velocity ball joint installed on the left side of the splined shaft end of the universal joint output shaft of the first set of new multi-purpose shaft transmission box. The preferred leftward power transmission half shaft is arranged horizontally and installed on the universal joint output shaft of the first set of new multi-purpose shaft transmission box. The end of the output splined shaft of the universal joint installed on the left side of the outer housing of the right-angle transmission box with conical gears is installed in the outer cage of the constant velocity ball cage universal joint to the left. At the same time, the transmission half shaft installed in the center splined hole of the inner cage of the constant velocity ball cage universal joint extends laterally to the left and reaches the outer side of the input shaft bearing seat on the right side of the transmission box housing of the first integral drive axle at the left end of the drive axle tube, and is meshed with the center splined hole of the inner cage of the constant velocity ball cage universal joint with telescopic function extending out to the right, and transmits power.

At the same time, the inner ball cage is inserted into the center splined hole of the outer ball cage of the constant velocity ball joint installed on the right end of the splined shaft of the output shaft of the first universal joint on the right side of the right-angle transmission box housing of the first universal joint output shaft cone gear. The transmission half shaft extending laterally to the right is installed in the inner ball cage, and the left end of the transmission half shaft is engaged with the outer ball cage of the constant velocity ball joint installed on the right end of the splined shaft of the output shaft of the first universal joint. The transmission half shaft extends laterally to the right and is engaged with the inner ball cage of the outer ball cage of the constant velocity ball joint with telescopic function installed on the left side of the input shaft bearing housing outside the transmission box housing of the right side of the second integral drive axle of the double drive front axle to transmit power.

The second integral drive axle gear or chain sprocket transmission box shell installed at the right end of the integral drive axle is in a horizontal installation position, with the universal joint and the input splined shaft located at the right side and the front end of the second integral drive axle. The outer ball cage of the telescopic constant velocity universal joint installed on the left side of the input splined shaft of the integral drive axle gear or chain sprocket transmission box shell is in a relative position to the outer ball cage of the constant velocity universal joint installed on the right side of the splined shaft end of the universal joint output shaft of the first set of new multi-purpose shaft transmission box body. At the same time, the preferred rightward power transmission half shaft is installed horizontally in the outer ball cage of the constant velocity universal joint installed on the right side of the splined shaft end of the universal joint output shaft of the first set of new multi-purpose shaft transmission box body. The transmission half shaft, which is inserted into the center splined hole of the inner ball cage in the constant velocity universal joint, extends laterally to the right and is installed in the outer ball cage of the telescopic constant velocity universal joint extending to the left from the input shaft bearing seat on the left side of the drive axle gear (or chain sprocket) transmission box shell welded to the right end of the second integral drive axle bridge tube, where the inner and outer ball cages mesh with each other to transmit power.

When the first set of the new multi-purpose shaft transmission box body's universal joint output shaft bevel gear right-angle transmission box shell is used to drive the first and second integral drive axles of the two sets of double front axles to transmit power, inside the first set of the new multi-purpose shaft transmission box body's universal joint output shaft bevel gear right-angle transmission box shell, An inter-axle differential can be optionally installed at the middle position of the output splined shafts of the two sets of constant velocity ball cage universal joints on the left and right sides, enabling the constant velocity ball cage universal joint and the drive half shaft transmitting power to the left, which are installed at the left end of the output splined shaft of the left universal joint, to have a differential function with the constant velocity ball cage universal joint and the drive half shaft transmitting power to the right, which are installed at the right end of the output splined shaft of the right universal joint.

The integral drive axle is extended to be applied in the transmission system of the four-wheel drive 8x8 drive wheels. When the new multi-purpose shaft transmission box is used in conjunction with the integral drive axle to transfer power to the double rear axles, the double-axle structure of the rear axle is a four-wheel drive integral drive axle double rear axle structure. Among them, the third integral drive axle is composed of a tubular axle tube of suitable length and an elliptical drive axle gear or sprocket chain drive box housing installed at the left end of the third integral drive axle tube to form the integral drive axle housing. Similarly, the fourth integral drive axle is composed of a tubular axle tube of suitable length and an elliptical drive axle gear or sprocket chain drive box housing installed at the right end of the fourth integral drive axle tube to form the integral drive axle housing. The double rear axle structure shares the second set of new multi-purpose shaft transmission boxes between the third and fourth integral drive axles of the two sets of rear axles in the double-axle drive.

The left and right universal joint output shaft bearing seats and the universal joint output splined shafts extending laterally to both sides of the bevel gear right-angle transmission box shell of the second set of new multi-purpose shaft transmission box are installed in a transverse arrangement at the rear chassis position of the all-terrain amphibious vehicle or wheeled armored vehicle, in the middle position between the third and fourth integral drive axles, and are installed as an integral structure with the vehicle chassis. At the same time, the left and right universal joint output shaft bearing seats and the universal joint output splined shafts extending laterally to both sides of the bevel gear right-angle transmission box shell are installed in a parallel position with the third and fourth integral drive axles of the double-drive rear axle.

The left bearing of the universal joint output shaft of the conical gear right-angle transmission box shell of the second set of the new multi-purpose shaft transmission box body is laterally arranged and installed on the vehicle chassis of the all-terrain amphibious vehicle or the wheeled armored vehicle. The left-end equal-speed ball cage universal joint outer cage is simultaneously installed on the left-end outwardly extending splined output shaft of the universal joint, while on the right-end outwardly extending splined output shaft of the universal joint from the bearing housing of the right universal joint output shaft, the corresponding component is also installed. The outer cage of the right-end constant-velocity ball cage universal joint is installed and fastened with a central screw.

At the same time, the left end of the splined shaft of the left universal joint output shaft, which is installed in the inner ball cage of the constant velocity ball cage universal joint inside the left universal joint output shaft bearing housing on the left side of the second set of universal joint output shaft bevel gear right-angle transmission box housing, is inserted with a transmission half shaft extending laterally to the left, and the right end of the transmission half shaft is equipped with an inner component. The ball cage meshes with the outer ball cage of the constant velocity ball cage universal joint installed at the left end of the output splined shaft of the universal joint. It also meshes with the center splined hole of the inner ball cage of the constant velocity ball cage universal joint installed on the leftward extending drive half shaft with telescopic function, and transmits power to the input shaft bearing housing on the right side of the drive gear or sprocket chain drive box shell installed on the left side of the third integral drive axle of the dual-drive rear axle.

The third set of integral drive axle gear or sprocket chain drive box shell installed at the left end of the integral drive axle is in a horizontal installation position. The universal joint and the input splined shaft are located at the left side and the rear end of the third integral drive axle. The outer ball cage of the telescopic constant velocity universal joint installed on the right side of the input splined shaft of the integral drive axle gear or sprocket chain drive box shell is in a relative position to the outer ball cage of the constant velocity universal joint installed on the left side of the splined shaft end of the universal joint output shaft of the second set of new multi-purpose shaft drive box body's universal joint output shaft bevel gear right-angle drive box shell. Preferably, the drive half shaft for leftward power transmission is installed horizontally in the outer ball cage of the constant velocity universal joint installed on the left side of the splined shaft end of the universal joint output shaft of the second set of new multi-purpose shaft drive box body's universal joint output shaft bevel gear right-angle drive box shell. At the same time, the drive half shaft installed in the center splined hole of the inner ball cage of the constant velocity universal joint extends laterally to the right and is engaged with the center splined hole of the inner ball cage of the telescopic constant velocity universal joint installed on the right side of the input shaft bearing seat of the integral drive axle gear or sprocket chain drive box shell welded at the left end of the integral drive axle bridge tube to transmit power.

The inner cage of the constant velocity ball cage universal joint installed in the outer cage of the constant velocity ball cage universal joint at the right end of the output shaft splined shaft of the second set of universal joint output shaft bevel gear right-angle transmission box housing is provided with a splined hole at the center, into which a transmission half shaft extending laterally to the right is inserted and installed. The inner cage installed at the left end of the transmission half shaft meshes with the outer cage of the constant velocity ball cage universal joint installed at the right end of the output shaft splined shaft of the universal joint, and the transmission half shaft extends laterally to the right to the input shaft bearing housing outside the transmission box housing on the right side of the fourth integral drive axle of the dual drive rear axle, and meshes with the inner cage of the constant velocity ball cage universal joint with telescopic function installed on the left side of the drive axle gear or sprocket chain drive box housing to transmit power.

The fourth integral drive axle gear or sprocket chain drive box housing installed at the right end of the integral drive axle is in a horizontal position, with the universal joint and input splined shaft located at the right side and the front end of the fourth integral drive axle. The input splined shaft on the outer left side of the integral drive axle gear or sprocket chain drive box housing is installed to the left. The outer ball cage of the telescopic constant velocity ball cage universal joint is in a relative position to the right side of the output shaft bearing housing of the right output shaft splined end of the second set of new multi-purpose shaft transmission box universal joint output shaft bevel gear right-angle transmission box housing. At the same time, the preferred right output power drive half shaft is horizontally arranged and installed in the outer ball cage of the right output shaft splined end of the second set of new multi-purpose shaft transmission box universal joint output shaft bevel gear right-angle transmission box housing, and the drive half shaft is inserted into the center splined hole of the inner ball cage of the constant velocity ball cage universal joint and extends laterally to the left into the outer ball cage of the telescopic constant velocity ball cage universal joint with the center splined hole of the inner ball cage, which is extended out of the left side of the input shaft bearing housing of the drive axle gear (or sprocket chain) transmission box housing welded at the right end of the fourth integral drive axle tube, and the power is transmitted through the meshing of the center splined holes of the inner and outer ball cages.

When the second set of the new multi-purpose shaft transmission box body's universal joint output shaft bevel gear right-angle transmission box shell is used to drive the third and fourth integral drive axles of the two sets of double rear axle drive axles, an inter-axle differential can be optionally installed in the middle position of the left and right two sets of constant velocity ball cage universal joint output splined shafts in the second set of the new multi-purpose shaft transmission box body's universal joint output shaft bevel gear right-angle transmission box shell, so that the constant velocity ball cage universal joint and the drive half shaft transmitting power to the left installed at the left end of the left universal joint output splined shaft and the constant velocity ball cage universal joint and the drive half shaft transmitting power to the right installed at the right end of the right universal joint output splined shaft have a differential function.

When the integral drive axle is used in the all-terrain amphibious vehicle or the wheeled armored vehicle body to transmit power through four sets of drive axles, since the four sets of drive axles are of the same integral drive axle structure and do not have the steering function of wheel hub tire deflection, it is necessary to install an inter-axle differential assembly between the left and right drive axle half shafts in each integral axle tube within the first set of integral drive axle gear or sprocket chain transmission box housing, the second set of integral drive axle gear or sprocket chain transmission box housing, the third integral drive axle gear or sprocket chain transmission box housing, and the fourth integral drive axle gear or sprocket chain transmission box housing. Only in this way can the left and right drive axle half shafts installed on the inter-axle differential in the integral axle tubes of the first set of integral drive axles, the second set of integral drive axles, the third set of integral drive axles, and the fourth set of integral drive axles, as well as the drive wheels installed at the ends of the two half shafts, have a differential function, enabling the wheels on the left and right sides of the vehicle body chassis to have a speed difference and allowing the vehicle to achieve tire slippage and steering functions.

The vehicle body equipped with the 8×8 drive wheel structure of the four-wheel drive integral drive axle is installed with two sets of brake and steering systems on the left and right. Among the four integral drive axles installed on the vehicle chassis, there are the first integral drive axle and the second one. The first, second, third and fourth integral drive axles are each equipped with two sets of braking systems, one on the left and one on the right. On each integral drive axle, the left braking system is installed on the left wheel hub, and the right braking system is installed on the right wheel hub. When a vehicle in motion uses the braking system on one side, the rotational speed of the driving wheels on that side of the vehicle decreases. Meanwhile, under the action of the differential, the rotational speed of the half shaft and driving wheels on the opposite side of the same axle increases, resulting in a speed difference between the driving wheels on the left and right sides of all four integral drive axles. This enables the vehicle to perform tire sliding steering or turn around in place.

The multi-purpose shaft transmission structure of the new all-terrain vehicle multi-purpose drive axle system is extended to the transmission structure of the three-axle drive 6x6 drive wheel and four-axle drive 8x8 drive wheel. For the front axle of the double-axle structure, which is a four-wheel drive independent suspension steering front double axle structure, the left and right universal joint output shaft bearing seats of the first set of new multi-purpose shaft transmission box body's universal joint output shaft bevel gear right-angle transmission box shell must be in a horizontal position and installed laterally on the chassis of the all-terrain amphibious vehicle or wheeled armored vehicle to better install the universal joint and transmission half shaft for power transmission. However, in order to obtain the power transmitted from the remote engine, the input shaft bevel gear right-angle transmission box shell of the first set of new multi-purpose shaft transmission box body installed in a vertical position and the universal joint output shaft bevel gear right-angle transmission box shell must be rotated 90° in the axial position of the intermediate transmission shaft to install and fix the intermediate transmission shaft support protection tube and flange, so that the input splined shaft in the input shaft bevel gear right-angle transmission box shell of the new multi-purpose shaft transmission box body installed in a vertical position is in a longitudinal installation position, parallel to the longitudinal axis of the all-terrain amphibious vehicle or wheeled armored vehicle body, and the universal joint output shaft in the universal joint output shaft bevel gear right-angle transmission box shell installed laterally on the chassis of the all-terrain amphibious vehicle or wheeled armored vehicle is at a 90° transmission phase difference in the axial position of the intermediate transmission shaft.

The left and right universal joint output shaft bearing seats of the bevel gear right-angle transmission box shell of the second set of new multi-purpose shaft transmission box must be installed horizontally and laterally on the chassis of the all-terrain amphibious vehicle or wheeled armored vehicle to better install the universal joint and drive half shaft for power transmission. However, in order to obtain the power transmitted from the remote engine, the input shaft bevel gear right-angle transmission box shell and the universal joint output shaft bevel gear right-angle transmission box shell of the second set of new multi-purpose shaft transmission box, which are installed vertically, must have the intermediate transmission shaft support protection tube and flange plate rotated 90° and fixed at the axial position of the intermediate transmission shaft, so that the input splined shaft in the input shaft bevel gear right-angle transmission box shell of the vertically installed new multi-purpose shaft transmission box is in a longitudinal installation position, and is in line with the entire vehicle. The longitudinal axes of the hulls of the all-terrain amphibious vehicle or wheeled armored vehicle are parallel to each other, and the output shaft of the universal joint installed in the bevel gear right-angle transmission box shell at the chassis position of the all-terrain amphibious vehicle or wheeled armored vehicle has a 90° transmission phase difference with the intermediate transmission shaft in the axial position.

The left and right universal joint output shaft bearing seats of the third set of new multi-purpose shaft transmission box body's universal joint output shaft bevel gear right-angle transmission box shell of the double rear axle structure of the four-wheel drive integral drive axle of the double-axle structure rear axle must be installed in a horizontal position and transversely on the chassis of the all-terrain amphibious vehicle or wheeled armored vehicle to better install the universal joint and the drive half shaft for power transmission. However, in order to obtain the power transmitted from the remote engine, the input shaft bevel gear right-angle transmission box shell of the third set of new multi-purpose shaft transmission box body installed in a vertical position and the universal joint output shaft bevel gear right-angle transmission box shell must be rotated 90° in the axial position of the intermediate transmission shaft to install and fix the intermediate transmission shaft support protection tube and flange, so that the input splined shaft in the input shaft bevel gear right-angle transmission box shell of the new multi-purpose shaft transmission box body installed in a vertical position is in a longitudinal installation position, parallel to the longitudinal axis of the all-terrain amphibious vehicle or wheeled armored vehicle body, and at a 90° transmission phase difference with the universal joint output shaft in the universal joint output shaft bevel gear right-angle transmission box shell installed transversely on the chassis of the all-terrain amphibious vehicle or wheeled armored vehicle in the axial position of the intermediate transmission shaft.

When applying the integral drive axle to the transmission structure of the 8x8 drive wheel configuration with four-axle drive, the front axle of the double-axle structure is the integral drive axle for the double front axle configuration. The left and right universal joint output shaft bearing seats of the first set of new multi-purpose shaft transmission box body's universal joint output shaft bevel gear right-angle transmission box shell must be installed horizontally and laterally on the chassis of the all-terrain amphibious vehicle or wheeled armored vehicle to better install the universal joint and the transmission half shaft for power transmission. However, in order to obtain the power transmitted from the remote engine, the input shaft bevel gear right-angle transmission box shell of the first set of new multi-purpose shaft transmission box body installed vertically must be rotated 90° along with the intermediate transmission shaft support protection tube and flange plate and fixed at the axial position of the intermediate transmission shaft, so that the input splined shaft inside the input shaft bevel gear right-angle transmission box shell of the vertically installed new multi-purpose shaft transmission box body is in a longitudinal installation position, parallel to the longitudinal axis of the all-terrain amphibious vehicle or wheeled armored vehicle body, and at a 90° transmission phase difference with the universal joint output shaft inside the universal joint output shaft bevel gear right-angle transmission box shell installed laterally on the chassis of the all-terrain amphibious vehicle or wheeled armored vehicle at the axial position of the intermediate transmission shaft.

The left and right universal joint output shaft bearing seats of the second set of new multi-purpose shaft transmission box body's universal joint output shaft bevel gear right-angle transmission box shell of the double rear axle structure of the four-wheel drive integral drive axle with the corresponding double-axle structure rear axle must be installed horizontally and transversely on the chassis of the all-terrain amphibious vehicle or wheeled armored vehicle to better install the universal joint and the drive half shaft for power transmission. However, in order to obtain the power transmitted from the remote engine, the input shaft bevel gear right-angle transmission box shell of the second set of new multi-purpose shaft transmission box body installed vertically and the universal joint output shaft bevel gear right-angle transmission box shell must be fixed by rotating the intermediate transmission shaft support protection tube and the flange plate by 90 degrees in the axial position of the intermediate transmission shaft, so that the input splined shaft in the input shaft bevel gear right-angle transmission box shell of the new multi-purpose shaft transmission box body installed vertically is in a longitudinal installation position, parallel to the longitudinal axis of the all-terrain amphibious vehicle or wheeled armored vehicle body, and at a 90-degree transmission phase difference with the universal joint output shaft in the universal joint output shaft bevel gear right-angle transmission box shell installed transversely on the chassis of the all-terrain amphibious vehicle or wheeled armored vehicle.

The multi-purpose shaft transmission structure of the new type of all-terrain vehicle is applied to the power transmission of all-terrain amphibious vehicles or wheeled armored vehicles. The new type of multi-purpose shaft transmission box must be installed in a vertical arrangement at the chassis position of the vehicle body. Therefore, for the double-axle structure, the front axle is a four-wheel drive independent suspension steering front double-axle structure. The first set of new type multi-purpose shaft transmission boxes in a longitudinal installation position, the input shaft bevel gear right-angle transmission box shell input splined shaft and the transmission shaft connected in series with the engine, as well as the transmission shaft universal joint and other combined components, are installed in the middle position inside the chassis of the all-terrain amphibious vehicle or wheeled armored vehicle. The second set of new type multi-purpose shaft transmission boxes in a longitudinal installation position, the input shaft bevel gear right-angle transmission box shell input splined shaft and the transmission shaft connected in series with the engine, as well as the transmission shaft universal joint and other combined components, are installed in the middle position inside the chassis of the all-terrain amphibious vehicle or wheeled armored vehicle.

The third set of the new multi-purpose shaft transmission box body, which is installed in a longitudinal position and shared by the two sets of rear integral drive axles of the dual-axle structure of the four-wheel drive integral drive axle dual rear axle structure, along with the input shaft bevel gear right-angle transmission box housing, the input splined shaft, the transmission shaft connected in series with the engine, and the universal joint of the transmission shaft, etc., are installed in the middle position inside the vehicle body chassis of the all-terrain amphibious vehicle or wheeled armored vehicle, and the power output from the engine end is transmitted in series through the transmission shaft and universal joint to each set of longitudinally installed components. The input shaft splined shaft of the new multi-purpose shaft transmission box is installed on the external input shaft bevel gear right-angle transmission box shell, providing rotational driving force for each set of new multi-purpose shaft transmission boxes. The chassis armor can effectively prevent the damage to the internal transmission system of the vehicle chassis caused by explosive fragments and shock waves. Meanwhile, the first set of universal joint output shaft bevel gear right-angle transmission box shell of the new multi-purpose shaft transmission box installed on the external position of the all-terrain amphibious vehicle or wheeled armored vehicle chassis, with the universal joint drive half shafts installed on the left and right sides, and the corresponding second set of universal joint output shaft bevel gear right-angle transmission box shell with the universal joint drive half shafts installed on the left and right sides, as well as the third set of universal joint output shaft bevel gear right-angle transmission box shell with the universal joint drive half shafts installed on the left and right sides, along with the third integral drive axle and the fourth integral drive axle and other combined components, are made of high-strength alloy materials with a large redundancy design to enhance the anti-destruction capability against explosive fragments and shock waves, thereby improving the battlefield survivability of the all-terrain amphibious vehicle or wheeled armored vehicle to maintain rapid movement.

The overall drive axle is extended to be applied in the transmission structure of the 8x8 drive wheel configuration with four-axle drive. The front axle of the double-axle structure is the first set of new multi-purpose shaft transmission box bodies installed in a longitudinal position, which are shared by the two sets of front overall drive axles of the four-wheel drive overall drive axle double front axle structure. The input shaft bevel gear right-angle transmission box housing, input shaft splined shaft, and the transmission shaft connected in series with the engine, as well as the transmission shaft universal joint and the end output shaft universal joint, etc., are all installed in the middle position of the vehicle body chassis of the all-terrain amphibious vehicle or wheeled armored vehicle. The rear axle of the double-axle structure is the second set of new multi-purpose shaft transmission box bodies installed in a longitudinal position, which are shared by the two sets of rear overall drive axles of the four-wheel drive overall drive axle double rear axle structure. The input shaft bevel gear right-angle transmission box housing, input shaft splined shaft, and the intermediate transmission shaft, as well as the transmission shaft universal joint, etc., are all installed in the middle position of the vehicle body chassis of the all-terrain amphibious vehicle or wheeled armored vehicle.

The input splined shaft of the transmission shaft universal joint connected to the engine rear output transmission shaft, which is in a longitudinal installation position parallel to the vehicle body longitudinal axis, is inserted into the input shaft bevel gear right-angle transmission box housing of the first set of new multi-purpose shaft transmission box bodies arranged in parallel and coaxially in a longitudinal installation position. The output splined shaft of the output shaft universal joint at the end of the input shaft bevel gear right-angle transmission box housing of the first set of new multi-purpose shaft transmission box bodies, which is connected to the engine middle transmission shaft in a longitudinal installation position parallel to the vehicle body longitudinal axis, is in a horizontal position at the rear side of the universal joint and extends longitudinally backward, and is inserted into the input shaft of the second set of new multi-purpose shaft transmission box bodies arranged in parallel and coaxially in a longitudinal installation position. At the same time, the engine middle transmission shaft transmits power to the output splined shaft at the rear side of the universal joint in a horizontal position and extending longitudinally backward, which is coaxial with it. The conical gear right-angle transmission box is installed inside the shell and transmits power. The chassis armor can effectively prevent the damage to the internal transmission system of the vehicle chassis caused by the shock wave of explosive fragments.

The first set of universal joint output shaft bevel gear right-angle transmission box shells of the new multi-purpose shaft transmission box bodies installed on the external position of the chassis of the all-terrain amphibious vehicle or wheeled armored vehicle, the left and right universal joint drive half shafts, and the first and second integral drive bridge combination components, as well as the second set of universal joint output shaft bevel gear right-angle transmission box shells of the new multi-purpose shaft transmission box bodies, the left and right universal joint drive half shafts, and the third and fourth integral drive bridge combination components are all made of high-strength alloy materials with a large redundancy design to enhance the anti-destruction capability against explosive fragment shock waves and thereby improve the battlefield survivability of the all-terrain amphibious vehicle or wheeled armored vehicle in maintaining rapid movement.

The constant velocity ball cage universal joint used in the novel multi-purpose shaft transmission system of the present invention serves as an exemplary illustration. In this transmission system, it is not specifically limited to the constant velocity ball cage universal joint. To reduce the actual production and usage costs, the exemplary constant velocity ball cage universal joint in the present invention can be replaced with a cross-axis universal joint or a flexible universal joint coupling, or other types of universal joints for power transmission.

The structure and method of applying the novel multi-purpose shaft transmission system of the present invention to the power transmission of three-drive axle 6×6 drive wheels and four-drive axle 8×8 drive wheels are provided for demonstration purposes. In the vehicle transmission system, it is not limited to the power transmission of three-drive axles and four-drive axles. To meet the higher requirements of special vehicles for off-road performance and load-bearing capacity, multiple sets of the novel multi-purpose shaft transmission boxes can be installed on the chassis of long special vehicles in a reasonable combination mode, along with multiple sets of independent suspension knuckle shaft steering knuckles and multiple sets of integral drive axle transmission systems, to transmit power.

In the present invention, the three sets of transmission gears or sprocket chains installed in the integral drive axle transmission box shell used in conjunction with the new multi-purpose shaft transmission system are for demonstration purposes only. In this transmission system, it is not specifically limited to three sets of transmission gears or sprocket chains. During production and use, the number of transmission gears or sprocket chains installed in the integral drive axle transmission box shell can be increased or decreased according to the actual working conditions to achieve the best transmission matching.

Compared with the existing technology, the technical solution described above has the following beneficial effects:

The advantages of applying the multi-purpose shaft transmission system of the all-terrain vehicle with the multi-drive axle power transmission structure to the transmission structure of the special all-terrain amphibious vehicle or wheeled armored vehicle with four drive axles and 8x8 drive wheels are:

The wide range of applications of this transmission structure enables it to be used for power transmission in multi-drive axles of all-terrain amphibious vehicles or wheeled armored vehicles, as well as in small multi-drive axle all-terrain karts, UTVs, ATVs, and large multi-drive axle missile transport vehicles and special heavy-duty transport equipment.

When the multi-drive axle is used to transfer power in all-terrain amphibious vehicles or wheeled armored vehicles, each set of drive axles can be equipped with air springs, coil springs, or leaf springs. This can effectively improve the ride smoothness of all-terrain amphibious vehicles and wheeled armored vehicles when traveling at high speed on off-road surfaces, enhancing the comfort of the drivers and passengers.

Since the gear or sprocket chain transmission box housing of the drive axle is installed at the end of the integral drive axle tube, the integral drive axle with left and right pairs of drive wheels can overcome higher obstacles. Meanwhile, the power transmission system with multiple drive axles significantly improves the off-road performance of all-terrain amphibious vehicles or wheeled armored vehicles in complex terrains.

The new multi-purpose shaft transmission box for power transmission in all-terrain amphibious vehicles or wheeled armored vehicles must be installed in a vertical arrangement at the vehicle chassis position. The input shaft bevel gear right-angle transmission box housing and the universal joint of the transmission shaft connected in series with the engine, among other combined components of multiple sets of the new multi-purpose shaft transmission boxes, are installed inside the vehicle chassis of the all-terrain amphibious vehicle or wheeled armored vehicle. The chassis armor can effectively prevent the damage to the internal transmission system of the vehicle chassis caused by explosive fragments and shock waves.

The universal joint output shaft bevel gear right-angle transmission box housing, universal joint drive shaft assembly, and integral drive axle assembly, which are installed on the external position of the all-terrain amphibious vehicle or wheeled armored vehicle chassis, are made of high-strength alloy materials with a large redundancy design to enhance the anti-destruction capability of the transmission components against explosive fragments and shock waves, thereby improving the battlefield survivability of the all-terrain amphibious vehicle or wheeled armored vehicle to maintain rapid movement.

### DESCRIPTION OF DRAWINGS

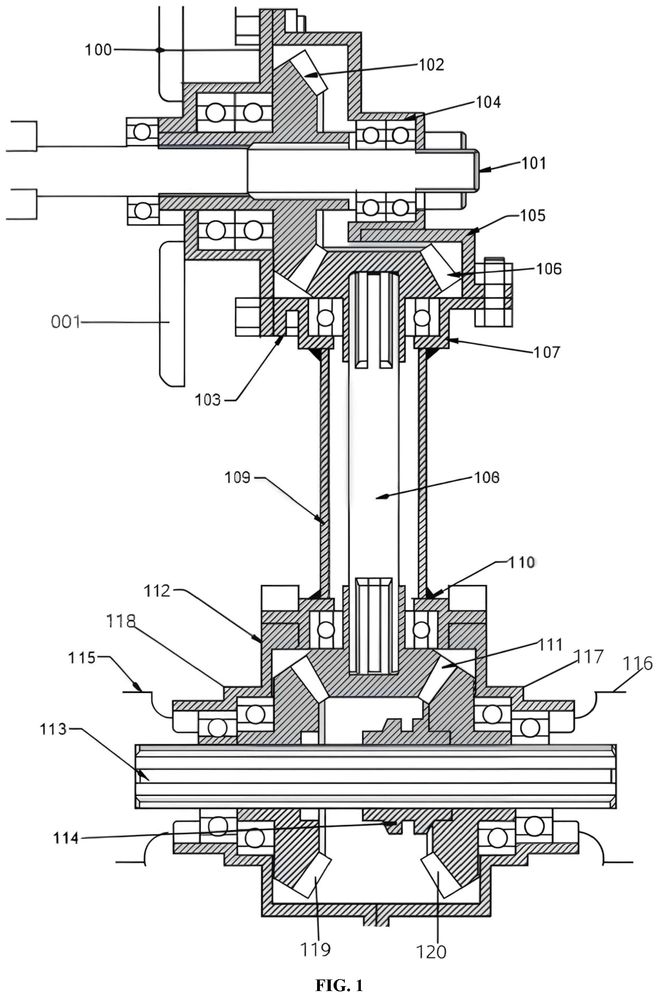

Figure 1 shows the cross-sectional view of the new multi-purpose shaft transmission housing.
Figure 2 is a top view of a four-drive-axle 8x8 drive wheel configuration featuring an independent suspension knuckle steering knuckle double front axle drive, double steering front axles, and an integral drive axle double rear axle combination.
Figure 3 shows the left view of the four drive wheels of the 8x8 four-drive-axle assembly of four integral drive axles.
Figure 4 shows the top view of the four drive wheels of the 8x8 four-drive-axle.

As shown in the figure;
100 - Input shaft conical gear right-angle transmission box housing;
101 - Input spline shaft of the right-angle drive box housing with conical gears for the input shaft of the new multi-purpose shaft drive box body;
102 - Driving bevel gear;
103 - The cylindrical housing of the driving bevel gear of the large bearing housing of the input splined shaft of the right-angle drive box of the conical gear of the input shaft;
104 - Small bearing housing cylindrical shell of the cylindrical housing of the driving bevel gear of the right-angle bevel gear transmission box of the input shaft bevel gear.
105 - Cylindrical housing of driven bevel gear;
106 - The driven conical gear installed at the end of the intermediate drive shaft;
107 - Flange of the cylindrical housing of the driven bevel gear bearing housing;
108 - Intermediate drive shaft of the new multi-purpose shaft drive housing;
The intermediate transmission shaft support and protection tube of the 109 new type multi-purpose shaft transmission box.
110 - Flange of the cylindrical housing of the conical gear bearing housing at the end of the intermediate drive shaft output shaft;
111 - The driving bevel gear at the end of the intermediate drive shaft;
112 - Universal joint output shaft bevel gear right-angle transmission box;
113 - Universal joint output spline shaft;
114 - Intermediate sliding tooth sleeve;
115 - Left universal joint outer ball cage of the output splined shaft of the universal joint;
116 - Right side outer ball cage of universal joint output spline shaft
117 - Right side universal joint output shaft bearing housing;
118 - Left universal joint output shaft bearing housing;
119 - Left conical driven gear;
120 - Right conical driven gear;
1400 - Input shaft bevel gear right-angle transmission housing of the first set of new multi-purpose shaft transmission box bodies;
1401 - Input shaft bevel gear right-angle drive housing of the second set of new multi-purpose shaft drive box body;
1402 - The first set of universal joint output shaft bevel gear right-angle transmission box housing for the new type of multi-purpose shaft transmission box body;
1403 - The universal joint output shaft bevel gear right-angle transmission box housing of the second set of new multi-purpose shaft transmission box bodies;
1404 - Third group of new multi-purpose shaft drive box body input shaft bevel gear right-angle drive box shell;
1405 - Drive half shaft of the second group for power output to the left;
1406 - Drive half shaft of the second group for rightward power output;
1407 - Drive half shaft of the third group outputting power to the left
1408 - Drive half shaft of the third group for rightward power output
1409 - Third Integral Drive Axle
1410 - Fourth Integral Drive Axle
1411 - Third integral drive axle gear (or sprocket chain) transmission box housing
1412 - Fourth integral drive axle gear (or sprocket chain) transmission box housing
1413 - The right side of the gear transmission box housing of the third group integral drive axle is equipped with a constant velocity ball cage universal joint with telescopic function.
1414 - The left side of the gear transmission box housing of the fourth group integral drive axle is equipped with a constant velocity ball cage universal joint with telescopic function.
1415 - First group of drive half shafts transmitting power to the right;
1416 - The universal joint output shaft bevel gear right-angle transmission box housing of the third set of new multi-purpose shaft transmission box bodies;
1417 - Constant velocity ball cage universal joint of the left independent suspension knuckle of the first group;
1418 - Constant velocity ball cage universal joint of the right independent suspension knuckle of the first group;
1419 - Constant velocity ball cage universal joint of the left independent suspension knuckle of the second group;
1420 - Right independent suspension knuckle ball joint of the second group; equal speed ball cage universal joint;
1421 - First group of drive half shafts outputting power to the left;
1501 - The input shaft bevel gear right-angle transmission box housing of the first set of new multi-purpose shaft transmission box bodies;
1502 - The universal joint output shaft bevel gear right-angle transmission box housing of the first set of new multi-purpose shaft transmission box bodies;
1503 - The input shaft bevel gear right-angle transmission housing of the second set of new multi-purpose shaft transmission box body;
1504 - The universal joint output shaft bevel gear right-angle transmission box housing of the second set of new multi-purpose shaft transmission box bodies;
1505 - Fourth integral drive axle gear (or sprocket chain) transmission box housing;
1506 - Fourth Group Integral Drive Axle;
1507 - First group integral drive axle;
1508 - First group integral drive axle gear (or sprocket chain) transmission box housing;
1509 - The right side of the gear transmission box housing of the first set of integral drive axle is equipped with a constant velocity ball cage universal joint with telescopic function;
1510 - Second set of integral drive axle;
1511 - Second group integral drive axle gear (or sprocket chain) transmission box housing;
1512 - The left side of the gear transmission box housing of the second set of integral drive axle is equipped with a telescopic constant velocity ball cage universal joint.
1513 - Third group integral drive axle;
1514 - The right side of the gear transmission box housing of the third group integral drive axle is equipped with a constant velocity ball cage universal joint with telescopic function.
1515 - The left side of the gear transmission box housing of the fourth group integral drive axle is equipped with a constant velocity ball cage universal joint with telescopic function.
1516 - Third group integral drive axle gear (or sprocket chain) transmission box housing;
1517 - First group of drive half shafts outputting power to the left;
1518 - First group of drive half shafts transmitting power to the right;
1519 - Drive half shaft of the second group for power output to the left;
1520 - Drive half shaft of the second group for rightward power output;
1521 - Series engine output drive shaft;
1522 - Input shaft universal joint;
1523 - Output shaft universal joint;
1524 - Connect the intermediate drive shaft between the first and second sets of input shaft bevel gear right-angle drive box housings in series.
1525 - Input shaft universal joint;

### EMBODIMENTS OF THE PRESENT INVENTION

Example 1: The multi-drive bridge power transmission structure of the new multi-purpose shaft transmission system for all-terrain vehicles includes a new multi-purpose shaft transmission box, characterized in that the new multi-purpose shaft transmission box is composed of three parts: an input shaft bevel gear right-angle transmission box housing, an intermediate transmission shaft support and protection tube, and a universal joint output shaft bevel gear right-angle transmission box housing. The input shaft bevel gear right-angle transmission box housing 100 and the input splined shaft 101 and the bevel gear bearing assembly 102 installed inside, the intermediate transmission shaft support and protection tube 109 of suitable length and the intermediate transmission shaft 108 and the driven bevel gear 106 installed inside the tube cavity, the universal joint output shaft bevel gear right-angle transmission box housing 112 and the output shaft bevel gear bearing assembly 111 installed inside, the driven bevel gear 119 at the left end and the driven bevel gear 120 at the right end, as well as the universal joint output splined shaft 113 at the end are combined. The input shaft bevel gear right-angle transmission box housing 100 is composed of multiple cylindrical shell bodies of different diameters, and the input shaft bevel gear right-angle transmission box housing 100 includes a main cylindrical shell body with a large bearing seat. The conical gear cylindrical housing (103) of the driving cone gear, the small bearing housing cylindrical housing (104), the cylindrical housing (105) of the driven cone gear in the vertical direction and the cylindrical housing (107) of the driven cone gear bearing housing are combined to form an irregular input shaft conical gear right-angle transmission box housing. The cylindrical housing (103) of the driving cone gear in the horizontal position and the small bearing housing cylindrical housing (104) are welded together. In the vertical direction, the cylindrical housing (105) of the driven cone gear is welded to the cylindrical housing (103) of the driving cone gear and the small bearing housing cylindrical housing (104) to form an integrated structure. The flange of the cylindrical housing (103) of the driving cone gear in the horizontal direction is fastened to the flange of the large bearing housing cylindrical housing with bolts. The flange of the cylindrical housing (107) of the driven cone gear bearing housing in the vertical direction is fastened to the flange of the cylindrical housing (105) of the driven cone gear with bolts. The input shaft conical gear right-angle transmission box housing (100) of the new multi-purpose shaft transmission box is equipped with the input shaft (101), the driving cone gear assembly (102), and the driven cone gear assembly (108) of the intermediate transmission shaft. The input splined shaft (101) of the engine transmission shaft universal joint (1522) or the intermediate transmission shaft universal joint (1525) is in a horizontal position and extends longitudinally backward, and is inserted into the input shaft conical gear right-angle transmission box housing (100) of the new multi-purpose shaft transmission box which is installed in a longitudinal and coaxial position. In the input shaft conical gear right-angle transmission box housing (100), two sets of large bearings are installed in the large bearing housing (103) of the input shaft in the horizontal direction, and an internal splined shaft sleeve with internal teeth that can mesh with the input splined shaft (101) is installed in the large bearing hole. Moreover, the inner end of the internal splined shaft sleeve of suitable length is welded with a conical gear, forming an integrated internal splined shaft conical gear assembly (102). In the small bearing housing (104) of the input shaft in the horizontal direction of the input shaft conical gear right-angle transmission box housing (100), two sets of small bearings are installed, and adjustment shims are installed on both sides of the small bearing holes. The input splined shaft (101) of the engine transmission shaft universal joint (1522) or the intermediate transmission shaft universal joint (1525) is inserted into the internal splined hole of the integrated internal splined shaft conical gear (102) installed in the large bearing hole of the input shaft conical gear right-angle transmission box housing (100), and meshes with the splined part of the input shaft (101) to transmit power. The smooth shaft part of the same axis passes through the bearing holes of the two sets of small bearings installed in the small bearing housing (104) and the splined shaft part exposed at the end of the input shaft conical gear right-angle transmission box housing (100) is equipped with a universal joint and fastened with a large nut. The output splined shaft (101) extending horizontally and longitudinally forward and backward at the end of the input shaft conical gear right-angle transmission box housing (100) and the universal joints at both ends of the intermediate transmission shaft are connected to the input splined shaft (101), which is the coaxial splined shaft (101) of the input shaft of the input shaft conical gear right-angle transmission box housing (100).

The intermediate transmission shaft support and protection tube 109 of the novel multi-purpose shaft transmission box is composed of multiple sets of cylindrical shell tubes of different diameters and lengths, including: a vertical driven conical gear bearing seat cylindrical shell 107, an intermediate transmission shaft support and protection tube shell 109 of suitable length, and the end of the intermediate transmission shaft 108. The cylindrical shell 110 of the input shaft bevel gear bearing housing is welded to the intermediate transmission shaft support and protection tube 109 in the same axis. In the vertical direction, the flange of the cylindrical shell 105 of the driven bevel gear of the input shaft bevel gear right-angle transmission box housing is fastened to the flange of the cylindrical shell 107 of the driven bevel gear bearing housing of the intermediate transmission shaft support and protection tube 109 with bolts. In the vertical direction, the flange of the cylindrical shell 110 of the input shaft bevel gear bearing housing at the end of the intermediate transmission shaft support and protection tube 109 is fastened to the flange of the cylindrical shell 110 of the input shaft bevel gear bearing housing installed on the universal joint output shaft bevel gear right-angle transmission box housing 112 with bolts. The driven bevel gear 106, which is installed in the bearing housing of the cylindrical shell 107 in the vertical direction and is in a vertical installation direction with respect to the input shaft 101 in the horizontal position within the input shaft bevel gear right-angle transmission box housing, meshes with the input shaft driving bevel gear 102 installed on the horizontal input splined shaft 101 and transmits power. The intermediate transmission shaft 108 of suitable length is installed in the tube cavity of the intermediate transmission shaft support and protection tube 109, which is in a vertical installation direction with respect to the horizontal input shaft 101. Both ends of the intermediate transmission shaft 108 are splined shaft parts. The upper splined head part meshes with the splined slot in the center splined hole of the driven bevel gear 106 that meshes with the input shaft driving bevel gear 102 in the input shaft bevel gear right-angle transmission box housing 100. The lower splined head part meshes with the splined slot in the center splined hole of the end input bevel gear 111 of the intermediate transmission shaft, which meshes with the left output shaft driven bevel gear 119 and the right output shaft driven bevel gear 120 installed on the horizontal universal joint output splined shaft 113, and transmits power.

The conical gear right-angle transmission box shell 112 of the universal joint output shaft of the new multi-purpose shaft transmission box body is composed of multiple cylindrical shells of different diameters, including: the cylindrical shell 118 of the left universal joint output shaft bearing seat and the cylindrical shell 117 of the right universal joint output shaft bearing seat at the horizontal position, the cylindrical shell 112 of the universal joint output shaft conical gear at the middle position, and the cylindrical shell 110 of the conical gear at the end of the intermediate transmission shaft installed in the vertical position. The cylindrical shells 118 and 117 of the left and right output shaft bearing seats are welded to the left and right sides of the cylindrical shell 112 of the universal joint output shaft conical gear. A group of cylindrical shells 110 of the conical gear at the end of the intermediate transmission shaft is installed in the vertical direction on the cylindrical shell 112 of the universal joint output shaft conical gear. The flange of the cylindrical shell 110 of the conical gear bearing seat at the end of the intermediate transmission shaft support protection tube 109 is fastened to the flange of the cylindrical shell 110 of the conical gear at the end of the intermediate transmission shaft of the universal joint output shaft conical gear right-angle transmission box shell 112 with bolts.

The output bevel gear 111 at the end of the intermediate transmission shaft 108, which is installed vertically in the universal joint output shaft bevel gear right-angle transmission box housing 112, is the input shaft bevel gear 111 that meshes with the intermediate transmission shaft 108. The input shaft bevel gear 111 and the bearing are combined and installed in the cylindrical housing of the output bevel gear bearing seat 110 at the end of the intermediate transmission shaft. It meshes with the left output shaft driven bevel gear 119 and the right output shaft driven bevel gear 120 installed on the universal joint output splined shaft 113 in the horizontal position within the universal joint output shaft bevel gear right-angle transmission box housing 112 to transmit power.

Two sets of bearings are installed in the left output shaft bearing seat 118 and the right output shaft bearing seat 117, which are in a horizontal position inside the universal joint output shaft bevel gear right-angle transmission box housing 112. The left output shaft driven bevel gear 119 and the right output shaft driven bevel gear 120 are respectively installed in the two sets of bearing holes. The end universal joint output splined shaft 113 is inserted into the center holes of the left driven bevel gear 119 and the right driven bevel gear 120. The sliding gear sleeve 114 is inserted into the end universal joint output splined shaft 113. The center holes of the left driven bevel gear 119 and the right driven bevel gear 120 are smooth holes without internal splined grooves, while the center hole of the sliding gear sleeve 114 inserted into the end output splined shaft 113 has an internal splined groove structure and meshes with the end universal joint output splined shaft 113. The sliding gear sleeve 114 can slide left and right and mesh with the inner teeth of the left driven bevel gear 119 or the right driven bevel gear 120 on the end universal joint output splined shaft 113, thereby enabling the end output shaft driven bevel gear and the output splined shaft to have the function of forward and reverse rotation, providing the vehicle with the reverse gear function. Meanwhile, the left universal joint output shaft bearing seat 118 and the right universal joint output shaft bearing seat 117, which are in a horizontal position outside the universal joint output shaft bevel gear right-angle transmission box housing 112, have the left end constant velocity ball cage universal joint outer cage 115 and the right end constant velocity ball cage universal joint 116 installed at the left and right ends of the end universal joint output splined shaft 113, respectively, to output power to both sides, providing convenient conditions for the subsequent installation of the drive half shaft.

The semi-axle differential can be optionally installed in the conical gear right-angle transmission box housing 112 of the universal joint output shaft, enabling the two constant velocity ball cage universal joints installed at the left and right ends of the universal joint output splined shaft 113 to have differential function. Inside the conical gear right-angle transmission box housing 112 at the horizontal position, two sets of bearings are respectively installed in the left universal joint output shaft bearing seat 118 and the right universal joint output shaft bearing seat 117. The edges of the protrusions on both sides of the differential housing are respectively installed in the bearing holes of these two sets of bearings, and inside the differential housing, a differential is installed. There is a differential gear assembly. Outside the differential housing, there is an end output shaft differential driven bevel gear, which meshes with the input shaft bevel gear 111 installed in the right-angle transmission box housing 112 of the universal joint output shaft. Meanwhile, two transmission splined half shafts are installed in the bearing holes of the left universal joint output shaft bearing housing 118 and the right universal joint output shaft bearing housing 117, respectively. These two splined half shafts mesh with the center splined holes of the left and right differential bevel gears installed in the differential housing. At the end of the left splined half shaft, there is a left end constant velocity ball cage universal joint 115, and at the end of the right splined half shaft, there is a right end constant velocity ball cage universal joint 116, which simultaneously transmit power to both sides.

The driving bevel gear 102 is installed on the input shaft 101 in the horizontal direction within the right-angle transmission box shell 100 of the new multi-purpose shaft transmission box and at the middle position of the two sets of bearing seats, and it meshes with the driven bevel gear 106 installed at the input end of the intermediate transmission shaft 108 in the vertical direction. They rotate simultaneously to transmit power, converting the horizontal output power of the engine or motor into vertical output power.

At the input end bearing housing 105 of the vertical intermediate transmission shaft support and protection tube 109, the intermediate transmission shaft 108 and the driven bevel gear 106 at the input end are installed and rotate simultaneously, meshing with the driving bevel gear 102. The intermediate transmission shaft 108 also drives the intermediate transmission shaft 108 within the tube cavity of the intermediate transmission shaft support and protection tube 109, which meshes with the splined shaft hole of the driven bevel gear 106, to rotate simultaneously. The intermediate transmission shaft 108 transmits power to the end output shaft bevel gear 111 installed in the end bearing housing 110 of the intermediate transmission shaft support and protection tube 109, which meshes with the splined shaft of the intermediate transmission shaft 108, to output power. It also drives the active bevel gear 111 installed in the universal joint output shaft bevel gear right-angle transmission box housing 112 to rotate simultaneously. The universal joint output shaft splined shaft 113 installed in the output shaft bearing housings at the left and right ends in the horizontal position within the universal joint output shaft bevel gear right-angle transmission box housing 112 of the new multi-purpose shaft transmission box body, and the left driven bevel gear 119 and the right driven bevel gear 120 installed horizontally in the left and right output shaft bearing housings mesh and rotate simultaneously, driving the universal joint output shaft 113 to rotate and transmit power.

Since the center shaft holes of the two sets of driven bevel gears installed on the bearing seat of the universal joint output shaft are smooth holes without internal splines, they cannot mesh with the splined shaft of the universal joint output. Therefore, the two sets of driven bevel gears meshing with the active bevel gear 111 at the end of the intermediate transmission shaft 108 can rotate simultaneously in both forward and backward directions, while the two sets of driven bevel gears on the universal joint output splined shaft 113 are in the middle position. The center hole of the sliding splined sleeve 114 that is inserted onto the splined output shaft 113 of the universal joint is structured with internal splined grooves and meshes with the splined grooves of the splined output shaft 113. Meanwhile, the sliding sleeve 114 can slide left and right. When it slides to the left, it can mesh with the splined sleeve on the inner side of the driven conical large gear 119 at the left end; when it slides to the right, it can mesh with the splined sleeve on the inner side of the driven conical large gear 120 at the right end. Thus, the splined output shaft of the universal joint can rotate in both directions, enabling the vehicle to have a reverse gear function for moving forward and backward.

The integral drive axle used for power transmission in multi-drive axle systems is the same type of integral drive axle. An integral drive shaft is inserted and installed inside the integral drive axle housing. The drive axle gear or chain wheel and chain transmission box housing installed at the left or right end of the integral drive axle housing, with a longitudinal cross-section in the shape of an ellipse, is composed of a rectangular cross-section housing and two semi-cylindrical end housings at the two ends of the rectangular housing, as well as an integral drive axle gear or chain wheel and chain transmission box housing with an appropriate length and an internal structure suitable for installing a transmission gear set or a transmission chain wheel set. Taking the drive axle gear transmission box housing as an example, multiple sets of transmission gears arranged in sequence and meshing with each other are installed inside the drive axle gear transmission box housing. On the inner walls of the left and right sides of the integral drive axle housing at the position of the integral drive axle, there are left and right symmetrical drive axle housing bearing seats welded. The integral drive shaft is inserted and installed in the left and right symmetrical bearing seats of the drive axle housing. On the integral drive shaft, there is a first large drive gear, and on both sides of the first large gear, there are bearings installed on the integral drive shaft, which are also installed in the left and right symmetrical bearing seats on the inner walls of the drive axle gear transmission box housing, keeping the first large gear installed on the integral drive shaft in the middle transmission position between the left and right bearing seats of the drive axle housing. On the inner walls of the left and right sides of the middle position of the drive axle gear transmission box housing, there are left and right symmetrical bearing seats for the middle transmission gear set. Inside the left and right bearing seats, there are bearings and middle transmission gear shafts, and on the middle transmission gear shaft at the middle position between the two sets of bearings, there is a second middle transmission gear. On the inner walls of the left and right sides of the input shaft end of the drive axle gear transmission box housing, there are left and right symmetrical input shaft bearing seats. Inside the bearing holes of the left and right bearing seats, there are splined shafts of the outer ball cage of the constant velocity ball cage universal joint, and on the splined shafts at the middle position between the two sets of bearing seats, there is a third transmission small gear of the input shaft. The splined shaft of the outer ball cage of the constant velocity ball cage universal joint passes through the bearing seat at the input shaft end of the drive axle gear transmission box housing, and is fastened with a nut at the extended part. In the bearing seats at the left and right ends of the integral drive axle housing, there are left and right sets of bearings to fix the integral drive shaft installed in the cavity of the integral drive axle housing. At both ends of the integral drive shaft, there are splines, which can be used to install and fix the wheels. The flange plates for mounting the tires and the flange plates for installing and fixing the brake discs are fastened with nuts on the extended parts of the two end flange plates of the integral drive shaft. Outside the integral drive axle tube, there are also welded brackets for longitudinal and transverse push-pull rods, shock absorber spring brackets, brake pump brackets and other accessories to control the movement posture of the integral drive axle.

To expand the broader applicability of the integral drive axle, according to the vehicle usage requirements, the first large gear installed on the integral drive shaft in the gear transmission box housing of the integral drive axle can be replaced with a differential large gear assembly with differential function, and the integral drive shaft installed in the bridge tube of the integral drive axle can be replaced with two drive axle half shafts on the left and right that are compatible with the differential. The feature is that the differential large gear assembly is installed in the gear transmission box housing of the drive axle. In the middle position of the two symmetrical bridge tube bearing seats, the flange edges on the left and right sides of the differential housing are respectively embedded in the left and right bridge tube bearing seats of the gear transmission box housing. Inside the differential housing, a differential conical gear assembly is installed. The splined shafts of the left and right drive axle half shafts inserted into the left and right ends of the integral drive axle bridge tube are respectively inserted into the center splined shaft holes of the left and right differential conical gears in the differential housing and mesh with each other to transmit power. Bearings are installed in the bearing seats at the left and right ends of the integral drive axle bridge tube to fix the left and right drive axle half shafts, enabling the left and right drive axle half shafts to have a differential function.

The transmission chain and sprocket assembly in the integral drive axle chain and sprocket transmission box housing is an improvement of the transmission gear structure in the integral drive axle gear transmission box housing. Specifically, the first large transmission gear installed on the integral drive shaft at the middle position between the left and right symmetrical drive axle tube bearing seats in the integral drive axle gear transmission box housing is replaced with a first large sprocket; the second intermediate transmission gear installed on the intermediate transmission gear shaft at the middle position in the integral drive axle gear transmission box housing is replaced with an intermediate chain guide wheel; and the third small transmission gear installed on the outer ball cage splined shaft of the constant velocity ball cage universal joint between the left and right symmetrical input shaft bearing seats at the input shaft end in the integral drive axle gear transmission box housing is replaced with a third small sprocket. The transmission chains are used to mesh with each other between the various sprockets to transmit power, and the intermediate chain guide wheel assists in the smooth operation of the chains. The integral drive axle chain and sprocket transmission box housing and the integral drive axle gear transmission box housing have the same shape, the same installation position, the same function, and the same installation position of each shaft in the transmission box housing.

The transmission structure feature of the special all-terrain amphibious vehicle or wheeled armored vehicle with 8x8 drive wheels and four drive axles is as follows: The multi-purpose shaft transmission system of the all-terrain vehicle has a dual-axle power transmission structure. The front axle of the dual-axle structure is a four-wheel drive independent suspension steering front dual-axle structure. When transmitting power, it is equipped with two sets of independent suspension knuckle shaft steering knuckles at the front and rear. The two drive wheels are installed on the left and right sides of the vehicle body of the all-terrain amphibious vehicle, wheeled armored vehicle, etc., and are coaxial. The knuckle of the steering system is connected to the frame through one of the preferred connection methods such as double A-arm, multi-link trailing arm or longitudinal swing arm.

Taking the power transmission of the first set of independent suspension knuckle steering knuckles as an example, the first set of new multi-purpose shaft transmission box assembly at the front of the vehicle body, the universal joint output shaft bevel gear right-angle transmission box housing 1402, the left power transmission half shaft 1421, the constant velocity ball cage universal joint 1417 of the first set of independent suspension knuckle steering knuckles on the left side of the vehicle body, and the right power transmission half shaft 1415, the constant velocity ball cage universal joint 1418 of the first set of independent suspension knuckle steering knuckles on the right side of the vehicle body, together form the first set of independent suspension steering front axle structure. The constant velocity ball cage universal joint 1417 of the left knuckle steering knuckle and the constant velocity ball cage universal joint 1418 of the right knuckle steering knuckle of the first set of independent suspension are installed in the center holes of the left and right knuckle steering knuckles on both sides of the vehicle body and connected to the vehicle body through double A-shaped arms. They are arranged and installed on the left and right sides of the first drive shaft at the front of the vehicle body of all-terrain amphibious vehicles, wheeled armored vehicles, etc. At the same time, the axes of the two coaxial left and right knuckle steering knuckles, the constant velocity ball cage universal joint 1417 and the constant velocity ball cage universal joint 1418, are located at the left universal joint output shaft bearing seat 118 and the right universal joint output shaft bearing seat 117 of the first set of universal joint output shaft bevel gear right-angle transmission box housing 1402, which is installed as an integral structure with the vehicle body, and at the lower part of the vehicle body. Moreover, the axes of the two coaxial left and right knuckle steering knuckles, the constant velocity ball cage universal joint 1417 and the constant velocity ball cage universal joint 1418, have a sufficient stroke distance from the vehicle chassis.

When the two sets of new multi-purpose shaft transmission box bodies in this scheme are applied to the independent suspension knuckle steering knuckles, the left universal joint output shaft bearing seat 118 and the right universal joint output shaft bearing seat 117 of the first set of new multi-purpose shaft transmission box body 1400 and the universal joint output splined shaft 113 extending laterally to both sides are installed in the middle position of the first independent suspension drive axle of the all-terrain amphibious vehicle or wheeled armored vehicle body at the front of the vehicle, and are also located in the middle position between the left knuckle steering knuckle's constant velocity ball cage universal joint 1417 and the left drive half shaft 1421 and the right knuckle steering knuckle's constant velocity ball cage universal joint 1418 and the right drive half shaft 1415 installed on both sides of the vehicle body, and are integrated with the vehicle body chassis.

The left end of the universal joint output splined shaft 113 on the left side of the first set of universal joint output shaft bevel gear right-angle transmission box housing 1402 installed at the first drive axle position on the vehicle body chassis is equipped with a left-end constant velocity ball cage universal joint outer cage 115 and is fastened with a center screw. The left end of the universal joint output splined shaft 113 of the right-angle transmission box housing 1402 with the conical gear of the universal joint output shaft is simultaneously installed with the left equal-speed ball cage universal joint outer cage 115. The inner cage center splined hole of the left equal-speed ball cage universal joint outer cage 115 is inserted with the transmission half shaft 1421 that extends laterally to the left. The inner cage installed at the right end of the transmission half shaft 1421 is meshed with the left equal-speed ball cage universal joint outer cage 115. The transmission half shaft 1421 that extends laterally to the left and is inserted into the inner cage center splined hole is extended laterally to the left and installed in the outer cage 1417 of the equal-speed ball cage universal joint with telescopic function that is installed to the right in the axle steering knuckle hole of the independent suspension on the left side of the vehicle body. The left end of the transmission half shaft 1421 is meshed with the inner cage center splined hole and transmits power.

The right end of the universal joint output splined shaft 113 on the right side of the first set of universal joint output shaft bevel gear right-angle transmission box housing 1402, which is laterally arranged and installed at the position of the first drive axle on the vehicle chassis, is simultaneously equipped with a right-end constant velocity ball cage universal joint outer cage 116 and fastened with a center screw. The right end of the universal joint output splined shaft 113 in the first set of universal joint output shaft bevel gear right-angle transmission box housing 1402 is simultaneously equipped with a right-side constant velocity ball cage universal joint outer cage 116, within which a transmission half shaft 1415 extending laterally to the right is inserted and installed through the center splined hole of the inner cage. The inner cage installed on the left end of the transmission half shaft 1415 meshes with the constant velocity ball cage universal joint outer cage 116, and the transmission half shaft 1415 extends laterally to the right and is inserted into the left side of the vehicle body's right independent suspension knuckle shaft steering knuckle shaft hole, where it is installed in a telescopic constant velocity ball cage universal joint outer cage 1418. The right end of the transmission half shaft 1415 meshes with the center splined hole of the inner cage and transmits power.

Taking the power transmission of the second set of independent suspension knuckle steering knuckles as an example, the second set of independent suspension steering double front axle structure is composed of the universal joint output shaft bevel gear right-angle transmission box housing 1403 of the second set of new multi-purpose shaft transmission box bodies combined at the front of the vehicle body, the left power transmission half shaft 1405, the constant velocity ball cage universal joint 1419 of the second set of independent suspension knuckle steering knuckles on the left side of the vehicle body, and the right power transmission half shaft 1406, as well as the constant velocity ball cage universal joint 1420 of the second set of independent suspension knuckle steering knuckles on the right side of the vehicle body. The constant velocity ball cage universal joint 1419 of the left knuckle steering knuckle of the second set of independent suspension and the constant velocity ball cage universal joint 1420 of the right knuckle steering knuckle of the second set of independent suspension are installed in the center holes of the left and right knuckle steering knuckles on the same axis and connected to the vehicle body through double A-shaped arms. They are arranged and installed on the left and right sides of the second drive shaft at the front of the vehicle body of all-terrain amphibious vehicles, wheeled armored vehicles, etc., and the axes of the two knuckle steering knuckles on the same axis are in line with the second set of universal joint output shaft bevel gear right-angle transmission box housing integrated with the vehicle body. The left universal joint output shaft bearing housing 118 and the right universal joint output shaft bearing housing 117 of the transmission box housing 1403, as well as the lower part of the vehicle body, and the centerlines of the left and right coaxial equal-speed ball cage universal joints 1419 and 1420 of the left and right knuckle shaft steering knuckles have a sufficient stroke distance from the vehicle chassis.

When the two sets of new multi-purpose shaft transmission box bodies in this scheme are applied to the independent suspension knuckle steering knuckles, the left universal joint output shaft bearing housing 118 and the right universal joint output shaft bearing housing 117 of the second set of new multi-purpose shaft transmission box body 1401, as well as the universal joint output splined shaft 113 extending laterally to both sides, are installed in the middle position of the second group of independent suspension drive axles at the front of the all-terrain amphibious vehicle or wheeled armored vehicle, and are arranged horizontally. At the same time, they are installed in the middle position between the constant velocity ball cage universal joint 1419 and the left drive half shaft 1405 of the left knuckle steering knuckle and the constant velocity ball cage universal joint 1420 and the right drive half shaft 1406 of the right knuckle steering knuckle, which are installed on both sides of the vehicle body, and are integrated with the vehicle body chassis.

The left end of the universal joint output splined shaft 113 on the left side of the second set of universal joint output shaft bevel gear right-angle transmission box housing 1403 installed at the position of the second drive axle on the vehicle chassis is simultaneously equipped with a left constant velocity ball cage universal joint outer cage 115 and is fastened with a center screw. The inner cage center splined hole of the left constant velocity ball cage universal joint outer cage 115 installed on the left end of the universal joint output splined shaft 113 of the second set of universal joint output shaft bevel gear right-angle transmission box housing 1403 has a transmission half shaft 1405 extending laterally to the left inserted and installed. The inner cage of the transmission half shaft 1405 on the right end is meshed with the constant velocity ball cage universal joint outer cage 115, and the transmission half shaft 1405 extending laterally to the left is inserted and installed into the right end of the left side of the vehicle body's independent suspension knuckle shaft steering knuckle shaft hole, which is equipped with an extendable constant velocity ball cage universal joint outer cage 1419. The left end of the transmission half shaft 1405 is meshed with the center splined hole of the inner cage and transmits power.

The right end of the right universal joint output shaft 113 installed on the right bearing housing 117 at the right side of the second set of universal joint output shaft bevel gear right-angle transmission box housing 1403 is simultaneously equipped with a right end constant velocity ball cage universal joint outer cage 116 and is fastened with a center screw. The inner cage center splined hole of the right constant velocity ball cage universal joint outer cage 116 installed on the right end of the universal joint output splined shaft 113 of the second set of universal joint output shaft bevel gear right-angle transmission box housing 1403 is inserted with a transmission half shaft 1406 extending laterally to the right. The inner cage of the transmission half shaft 1406 on the left end is installed with a constant velocity ball cage universal joint. The external ball cage 116 engages with each other, and the drive half shaft 1406 that transmits power to the right and is installed through the center splined hole of the inner ball cage extends laterally to the right into the outer ball cage 1420 of the constant velocity ball cage universal joint with telescopic function installed to the left in the steering knuckle shaft hole of the independent suspension on the right side of the vehicle body. Moreover, the right end of the drive half shaft 1406 engages with the center splined hole of the inner ball cage to transmit power.

The conical gear right-angle transmission box housing 112 of the described independent suspension knuckle with a universal joint output shaft can be optionally equipped with an inter-axle differential between the left universal joint output shaft bearing seat 118 and the right universal joint output shaft bearing seat 117, enabling the left constant velocity ball cage universal joint 115 installed on the left end of the universal joint output splined shaft 113 outside the left universal joint output shaft bearing seat 118 and the right constant velocity ball cage universal joint 116 installed on the right end of the universal joint output splined shaft 113 outside the right universal joint output shaft bearing seat 117, as well as the two drive half shafts and tires on the left and right sides, to have differential function.

The rear axle of the said double-axle structure is a four-wheel drive integral drive axle double rear axle structure. The third integral drive axle 1409 and the fourth integral drive axle 1410 installed in conjunction are composed of tubular axle tubes of suitable lengths, with an elliptical drive axle gear or sprocket chain drive box housing 1411 installed at the left end of the third integral drive axle tube 1409 and an elliptical drive axle gear or sprocket installed at the right end of the fourth integral drive axle tube 1410. The chain drive box housing 1412 is combined into an integral drive axle housing. The two sets of rear drive integral drive axles share a new type of multi-purpose shaft drive box housing.

The left universal joint output shaft bearing housing 118 and the right universal joint output shaft bearing housing 117 of the conical gear right-angle transmission box housing 1416 of the third set of new multi-purpose shaft transmission box 1404, as well as the universal joint output splined shaft 113 extending laterally to both sides, are installed transversely at the rear of the all-terrain amphibious vehicle or wheeled armored vehicle, in the middle position between the third integral drive axle 1409 and the fourth integral drive axle 1410, and are integrated with the vehicle chassis. At the same time, the left universal joint output shaft bearing housing 118 and the right universal joint output shaft bearing housing 117 of the conical gear right-angle transmission box housing 1416, as well as the universal joint output splined shaft 113 extending laterally to both sides, are installed in parallel with the third integral drive axle 1409 and the fourth integral drive axle 1410 of the double rear axles.

The left and right ends of the universal joint output splined shaft 113 extending outward from the left and right universal joint output shaft bearing seats 118 and 117 on the left and right sides of the bevel gear right-angle transmission box housing 1416 of the third set of new multi-purpose shaft transmission box 1404 installed in the chassis of an all-terrain amphibious vehicle or wheeled armored vehicle are simultaneously equipped with the left constant velocity ball cage universal joint outer cage 115 and the right constant velocity ball cage universal joint 116. Fasten with the central screw. Insert the drive half shaft 1407 that extends laterally to the left into the inner ball cage center splined hole of the left constant velocity ball cage universal joint outer ball cage 115, and insert the drive half shaft 1408 that extends laterally to the right into the inner ball cage center splined hole of the right constant velocity ball cage universal joint outer ball cage 116.

To correspond to the installation position of the left end of the left universal joint output shaft bearing seat 118 and the left end of the universal joint output splined shaft 113 of the third universal joint output shaft bevel gear right-angle transmission box housing 1416, the third integral drive axle gear (or sprocket chain) transmission box housing 1411 is preferably installed in a horizontal position at the left end of the third integral drive axle 1409 bridge tube. The installation position of the drive axle gear (or sprocket chain transmission box housing 1411) at the left end of the third integral drive axle 1409 bridge tube, which is parallel to the ground in a horizontal state, can also be in a vertical state or any position convenient for the installation of the drive half shaft 1407. Among them, the horizontal position for power transmission is the best demonstration example.

The third integral drive axle gear or chain sprocket transmission box housing 1411 installed at the left end of the integral drive axle 1409 is in a horizontal installation position, placing the universal joint and input splined shaft 1413 on the left side and at the rear end of the third integral drive axle 1409. This positions the extendable constant velocity ball cage universal joint outer cage 1413 installed on the right side of the input splined shaft on the outer right side of the integral drive axle gear or chain sprocket transmission box housing 1411 in a relative position to the constant velocity ball cage universal joint outer cage 115 installed on the left side of the universal joint output shaft splined shaft 113 at the left end of the universal joint output shaft bearing housing 118 on the left side of the third set of new multi-purpose shaft transmission box body 1404's universal joint output shaft bevel gear right-angle transmission box housing 1416. Preferably, the drive half shaft 1407 for leftward power transmission is installed horizontally within the constant velocity ball cage universal joint outer cage 115 on the left side of the universal joint output shaft splined shaft 113 at the left end of the universal joint output shaft bearing housing 118 on the left side of the third set of new multi-purpose shaft transmission box body 1404's universal joint output shaft bevel gear right-angle transmission box housing 1416. The drive half shaft 1407 extends laterally to the left within the constant velocity ball cage universal joint outer cage 115 and is inserted into the center splined hole of the inner cage, then extends laterally to the left and engages with the center splined hole of the inner cage of the extendable constant velocity ball cage universal joint outer cage 1413 extending to the right from the input shaft bearing housing on the outer right side of the integral drive axle gear or chain sprocket transmission box housing 1411 welded to the left end of the integral drive axle 1409, thereby transmitting power.

To correspond to the right side of the third universal joint output shaft bevel gear right-angle transmission box housing 1416, the universal joint output shaft bearing seat 117 and the universal joint output splined shaft 113 and the constant velocity ball cage universal joint (116) installed at the right end, the installation position of the drive half shaft 1408 that transmits power to the right is determined. At the same time, the fourth integral drive axle gear or sprocket chain transmission box housing 1412 is preferably installed in a horizontal position at the right end of the fourth integral drive axle 1410 bridge tube, and the drive axle gear (or sprocket chain transmission box housing) is installed at the right end of the fourth integral drive axle 1410 bridge tube. The installation position of 1412, which is parallel to the ground in a horizontal state, can also be in a vertical state or at any position convenient for installing the drive half shaft. Among them, the preferred example for transmitting power is in a horizontal position.

The fourth integral drive axle gear or chain sprocket transmission box housing 1412 installed at the right end of the integral drive axle 1410 is in a horizontal installation position, with the universal joint and input splined shaft 1414 located at the right front end of the fourth integral drive axle 1410. The outer ball cage 1414 of the telescopic function constant velocity universal joint installed on the left side of the input splined shaft of the integral drive axle gear or chain sprocket transmission box housing 1412 is in a relative position to the outer ball cage 116 of the constant velocity universal joint installed on the right side of the output splined shaft 113 of the right bearing housing 117 of the universal joint output shaft of the third set of new multi-purpose shaft transmission box 1404. At the same time, the preferred right output power transmission half shaft 1408 is laterally arranged and installed inside the outer ball cage 116 of the constant velocity universal joint installed on the right end of the output splined shaft 113 of the universal joint output shaft cone gear right-angle transmission box housing 1416 of the third set of new multi-purpose shaft transmission box 1404. The transmission half shaft 1408, which is inserted into the center splined hole of the inner ball cage, extends laterally to the right and enters the outer ball cage 1414 of the telescopic function constant velocity universal joint installed on the left side of the input shaft bearing housing of the integral drive axle gear or chain sprocket transmission box housing 1412 welded at the right end of the integral drive axle 1410, and meshes with the center splined hole of the inner ball cage to transmit power.

When the third set of the new multi-purpose shaft transmission box 1404 is used to drive the third and fourth integral drive axles 1409 and 1410, an inter-axle differential can be optionally installed at the middle position of the left and right universal joint output splined shafts 113 within the right-angle transmission box housing 1416 of the universal joint output shaft bevel gear of the new multi-purpose shaft transmission box 1404, enabling a differential function between the left constant velocity ball cage universal joint 115 and the left power output half shaft 1407, as well as between the right constant velocity ball cage universal joint 116 and the right power output half shaft 1408.

The extended application of the four-wheel drive with dual front drive axles is an independent suspension steering axle. The first set of new multi-purpose shaft transmission box 1400 and the second set of new multi-purpose shaft transmission box 1401, which are equipped with two sets of independent suspension front drive axles, and the dual rear drive axles are integral drive axles sharing a set of new multi-purpose shaft transmission box 1404. They are the same type of new multi-purpose shaft transmission box. To synchronize the rotational speeds of the wheel pairs between the dual front and rear axles, the transmission ratios of the gears or sprocket chains in the transmission box housing 1411 installed on the third integral drive axle 1409 and the transmission box housing 1412 installed on the fourth integral drive axle 1410 can be adjusted to make the rotational speeds of the front and rear wheel sets the same.

When the integral drive axle is used to expand the application to the double rear axle drive of all-terrain amphibious vehicles or wheeled armored vehicles, an inter-axle differential can be optionally installed between the left and right half shafts of the third integral drive axle gear (or sprocket chain) transmission box housing 1411 and the fourth integral drive axle gear or sprocket chain transmission box housing 1412, so that the left and right half shafts inside the integral drive axle tube and the driving wheels installed at both ends have a differential function.

The power transmission structure of the new multi-purpose shaft drive system for all-terrain vehicles as described in Example 2 is extended to the three-drive-axle 6x6 drive wheel all-terrain UTV, ATV or amphibious vehicle and wheeled armored vehicle. The transmission mode of the extended three-drive-axle structure is improved from the transmission mode of the four-drive-axle structure. The front axle of the double-axle structure is a four-wheel drive independent suspension steering axle. The first set of left independent suspension knuckle steering joint's constant velocity ball cage universal joint 1417 and the left power output drive half shaft 1421 installed, as well as the first set of right independent suspension knuckle steering joint's constant velocity ball cage universal joint 1418 and the right power output drive half shaft 1415 installed, are combined with the first set of new multi-purpose shaft drive box 1400's universal joint output shaft bevel gear right-angle transmission box housing 1402 to transmit power. At the same time, the second set of left independent suspension knuckle steering joint's constant velocity ball cage universal joint 1419 and the left power output drive half shaft 1405 installed, as well as the second set of right independent suspension knuckle steering joint's constant velocity ball cage universal joint 1420 and the right power output drive half shaft 1406 installed, are combined with the second set of new multi-purpose shaft drive box 140 l's universal joint output shaft bevel gear right-angle transmission box housing 1403 to transmit power.

When expanding the 6x6 drive structure with three drive axles, the first set of independent suspension knuckle steering knuckles of the front double axles is retained, while the second set is removed. Only the constant velocity ball joint 1417 and the left power transmission half shaft 1421 of the first set's left independent suspension knuckle steering knuckle, as well as the constant velocity ball joint 1418 and the right power transmission half shaft 1415 of the first set's right independent suspension knuckle steering knuckle are kept, and they are combined with the first set of new multi-purpose shaft transmission box 1400's universal joint output shaft bevel gear right-angle transmission box housing 1402 to transmit power. In the expanded three-drive axle structure, the rear axle of the double-axle structure is an integral drive axle with a double rear axle structure. The third set of integral drive axle 1409 and the fourth set of integral drive axle 1410 share the second set of new shaft transmission box 1404's universal joint output shaft bevel gear right-angle transmission box housing 1416 to combine and transmit power. The first set of independent suspension front axle and the two sets of integral drive rear axles form the transmission structure of the 6x6 drive wheels. In the above structure, the second set of independent suspension knuckle steering knuckles and constant velocity ball joints, as well as the second set of new multi-purpose shaft transmission box's universal joint output shaft bevel gear right-angle transmission box housing are omitted. The transmission box housing and the three sets of drive axles only use the universal joint output shaft bevel gear right-angle transmission box housing 1402 of the first set of the new multi-purpose shaft transmission box 1400 and the universal joint output shaft bevel gear right-angle transmission box housing 1416 of the third set of the new multi-purpose shaft transmission box 1404 to transmit power through the two sets of new multi-purpose shaft transmission boxes.

When the integral drive axle is used to expand the application to the dual rear axle drive of all-terrain amphibious vehicles or wheeled armored vehicles, an inter-axle differential can be optionally installed between the left and right half shafts of the third integral drive axle gear (or sprocket chain) transmission box housing 1411 and the fourth integral drive axle gear or sprocket chain transmission box housing 1412, so that the left and right half shafts inside the integral drive axle tube and the driving wheels installed at both ends have a differential function.

The structural feature of the multi-purpose shaft transmission system for all-terrain vehicles as described in Example 3, when extended to be applied to an 8x8 drive wheel special all-terrain amphibious vehicle or wheeled armored vehicle with an integral four-wheel drive bridge, is that the double-bridge structure of the front bridge is an integral drive bridge double front bridge structure. The first integral drive bridge 1507 is composed of a tubular bridge tube of appropriate length and an elliptical drive bridge gear or sprocket chain transmission box housing 1508 installed at the left end of the first integral drive bridge tube 1507 to form the integral drive bridge housing. The second integral drive bridge 1510 is composed of a tubular bridge tube of appropriate length and an elliptical drive bridge gear or sprocket chain transmission box housing 1511 installed at the right end of the second integral drive bridge tube 1510 to form the integral drive bridge housing. The first set of the new multi-purpose shaft transmission box 1501 is shared between the first integral drive bridge 1507 and the second integral drive bridge 1510 of the two groups of front bridges in the double-bridge drive.

The left universal joint output shaft bearing housing 118 and the right universal joint output shaft bearing housing 117 of the first set of new multi-purpose shaft transmission box body 1501 and the universal joint output splined shaft 113 extending laterally to both sides are installed in a transverse arrangement at the front chassis position of the all-terrain amphibious vehicle or wheeled armored vehicle, in the middle position between the first integral drive axle 1507 and the second integral drive axle 1510, and are installed as an integral structure with the vehicle chassis. At the same time, the left universal joint output shaft bearing housing 118 and the right universal joint output shaft bearing housing 117 of the universal joint output shaft bevel gear right-angle transmission box housing 1502 and the universal joint output splined shaft 113 extending laterally to both sides are installed in a parallel position with the first group of integral drive axles 1507 and the second group of integral drive axles 1510 of the double drive front axle.

The left end of the universal joint output splined shaft 113, which extends outward from the left side of the universal joint output shaft bearing seat 118 on the outside of the right-angle transmission box housing 1502 of the first set of new multi-purpose shaft transmission box 1501 installed on the chassis of an all-terrain amphibious vehicle or a wheeled armored vehicle, is simultaneously equipped with a left-end constant velocity ball cage universal joint. The external ball cage 115 of the extra joint is simultaneously installed on the right end of the output splined shaft 113 of the right universal joint, which extends outward from the bearing housing 117 of the output shaft of the right universal joint, and is fastened with a central screw. The right end constant velocity ball cage universal joint outer ball cage 116 is also installed on the output splined shaft 113.

The left end of the left universal joint output shaft splined shaft 113 installed in the left universal joint output shaft bearing seat 118 of the first set of universal joint output shaft bevel gear right-angle transmission box housing 1502 is inserted into the inner ball cage center splined hole of the constant velocity ball cage universal joint outer ball cage 115, and the leftward extending drive half shaft 1517 is installed. The inner ball cage installed at the right end of the drive half shaft 1517 meshes with the constant velocity ball cage universal joint outer ball cage 115 installed at the left end of the universal joint output splined shaft 113 to transmit power. The drive half shaft 1517 extends leftward and meshes with the inner splined hole of the rightward extending telescopic constant velocity ball cage universal joint outer ball cage 1509 installed on the right side of the input shaft bearing seat outside the drive axle gear or sprocket chain transmission box housing 1508 installed on the left side of the first integral drive axle 1507 of the dual drive front axle to transmit power.

The first integral drive axle gear or sprocket chain drive box housing 1508 installed at the left end of the integral drive axle 1507 is in a horizontal position, placing the universal joint and input splined shaft 1509 at the left side and rear end of the first integral drive axle 1507. The outer ball cage 1509 of the telescopic constant velocity universal joint installed on the right side of the input splined shaft of the integral drive axle gear or sprocket chain drive box housing 1508 is in a position opposite to the outer ball cage 115 of the constant velocity universal joint installed on the left side of the output splined shaft bearing housing 118 on the left side of the universal joint output shaft of the first set of new multi-purpose shaft drive box body 1501 and the universal joint output shaft bevel gear right-angle drive box housing 1502. The preferred leftward power transmission half shaft 1517 is installed horizontally in the outer ball cage 115 of the constant velocity universal joint installed on the left side of the output splined shaft 113 of the universal joint output shaft of the first set of new multi-purpose shaft drive box body 1501 and the universal joint output shaft bevel gear right-angle drive box housing 1502. At the same time, the transmission half shaft 1517, which is inserted into the center splined hole of the inner ball cage in the outer ball cage 115, extends laterally to the right and is installed in the outer ball cage 1509 of the telescopic constant velocity universal joint installed on the right side of the input shaft bearing housing extending outward from the right side of the integral drive axle gear or sprocket chain drive box housing 1508 welded to the left end of the integral drive axle 1507, and meshes with the center splined hole of the inner ball cage to transmit power.

At the same time, the inner ball cage center splined hole inside the constant velocity ball cage universal joint outer ball cage 116 installed on the right side of the first universal joint output shaft bevel gear right-angle transmission box housing 1502, the right side universal joint output shaft bearing seat 117, and the right end of the universal joint output splined shaft 113, is inserted and installed with the transmission half shaft 1518 extending laterally to the right. The inner ball cage installed at the left end of the transmission half shaft 1518 is engaged with the constant velocity ball cage universal joint outer ball cage 116 installed at the right end of the universal joint output splined shaft 113, and the transmission half shaft 1518 transmitting power to the right extends laterally to the right to the double. The outer ball cage 1512 of the leftward extending telescopic constant velocity ball cage universal joint, which is installed on the left side of the input shaft bearing housing outside the drive axle gear or sprocket chain drive box housing 1511 on the right side of the second integral drive axle 1510 driving the front axle, meshes with the center splined hole of the inner ball cage and transmits power.

The second integral drive axle gear or chain sprocket transmission box housing 1511 installed at the right end of the integral drive axle 1510 is in a horizontal installation position, with the universal joint and input splined shaft 1512 located at the right front end of the second integral drive axle 1510. The outer ball cage 1512 of the telescopic constant velocity universal joint installed on the left side of the input splined shaft of the integral drive axle gear or chain sprocket transmission box housing 1511 is in a relative position to the outer ball cage 116 of the constant velocity universal joint installed on the right side of the splined output shaft 113 at the right end of the universal joint output shaft bevel gear right-angle transmission box housing 1502 of the first set of new multi-purpose shaft transmission box 1501. At the same time, the preferred rightward power transmission half shaft 1518 is horizontally arranged and installed inside the outer ball cage 116 of the constant velocity universal joint installed on the right end of the splined output shaft 113 of the universal joint output shaft bevel gear right-angle transmission box housing 1502 of the first set of new multi-purpose shaft transmission box 1501, and extends rightward and horizontally inside the outer ball cage 1512 of the telescopic constant velocity universal joint installed on the left side of the input shaft bearing housing of the drive axle gear (or chain sprocket transmission box housing 1511) at the right end of the second integral drive axle 1510, and meshes with the inner ball cage to transmit power.

When the first set of the new multi-purpose shaft transmission box 1501 and the universal joint output shaft bevel gear right-angle transmission box housing 1502 are used to drive the first integral drive axle 1507 and the second integral drive axle 1510 of the two sets of double front axles to transmit power, an inter-axle differential can be optionally installed in the middle position of the left and right two sets of constant velocity ball cage universal joint output splined shafts 113 in the first set of the new multi-purpose shaft transmission box 1501 and the universal joint output shaft bevel gear right-angle transmission box housing 1502, so that the constant velocity ball cage universal joint 115 installed at the left end of the left universal joint output splined shaft 113 and the drive half shaft 1517 transmitting power to the left, and the constant velocity ball cage universal joint 116 installed at the right end of the right universal joint output splined shaft 113 and the drive half shaft 1518 transmitting power to the right have a differential function.

The integral drive axle is extended to be applied in the transmission system of the four-wheel drive axle 8x8 drive wheels. When the new multi-purpose shaft transmission box is used in conjunction with the integral drive axle to transmit power to the double rear axles, the rear axle of the double-axle structure is the four-wheel drive integral drive axle double rear axle structure, which includes the third integral drive axle 1513 composed of a tubular axle tube of suitable length and an elliptical drive axle gear or sprocket chain drive box housing 1516 installed at the left end of the third integral drive axle tube 1513, and the same fourth integral drive axle 1506 is the double rear axle structure of the integral drive axle housing that is composed of a tubular bridge tube of suitable length and an elliptical drive axle gear or sprocket chain drive box housing 1505 installed at the right end of the fourth integral drive axle tube 1506. Between the third integral drive axle 1513 and the fourth integral drive axle 1506 of the two sets of rear axles in the dual-axle drive, a second set of new multi-purpose shaft drive box body 1503 is shared.

The left universal joint output shaft bearing housing 118 and the right universal joint output shaft bearing housing 117 of the conical gear right-angle transmission box housing 1504 of the second set of new multi-purpose shaft transmission box 1503, as well as the universal joint output splined shaft 113 extending laterally to both sides, are installed in a transverse arrangement at the rear chassis position of the all-terrain amphibious vehicle or wheeled armored vehicle, in the middle position between the third integral drive axle 1513 and the fourth integral drive axle 1506, and are installed as an integral structure with the vehicle chassis. At the same time, the left universal joint output shaft conical gear bearing housing 118 and the right universal joint output shaft conical gear bearing housing 117 of the conical gear right-angle transmission box housing 1504, as well as the universal joint output splined shaft 113 extending laterally to both sides, are installed in a parallel position with the third group of integral drive axles 1513 and the fourth group of integral drive axles 1506 of the double drive rear axle.

The left end universal joint output splined shaft 113, which extends outward from the left side of the universal joint output shaft bearing housing 118 of the second set of new multi-purpose shaft transmission box body 1503 installed in the chassis of an all-terrain amphibious vehicle or a wheeled armored vehicle, is simultaneously equipped with a left end constant velocity ball cage universal joint outer cage 115. Similarly, the right end universal joint output splined shaft 113, which extends outward from the right side of the universal joint output shaft bearing housing 117, is simultaneously equipped with a right end constant velocity ball cage universal joint outer cage 116, and both are fastened with a center screw.

The left end of the left universal joint output shaft splined shaft 113 installed in the left universal joint output shaft bearing seat 118 of the second set of universal joint output shaft bevel gear right-angle transmission box housing 1504 is inserted into the inner ball cage center splined hole of the constant velocity ball cage universal joint outer ball cage 115, and the leftward extending drive half shaft 1519 is installed. The inner ball cage installed at the right end of the drive half shaft 1519 meshes with the constant velocity ball cage universal joint outer ball cage 115 installed at the left end of the universal joint output shaft splined shaft 113, and the drive half shaft 1519 extending leftward transmits power to the inner ball cage of the rightward extending telescopic constant velocity ball cage universal joint outer ball cage 1514 installed on the right side of the input shaft bearing seat outside the drive bridge gear or sprocket chain transmission box housing 1516 installed on the left side of the third integral drive axle 1513 of the dual drive rear axle, and meshes with the center splined hole of the inner ball cage to transmit power.

The third set of integral drive axle gear or sprocket chain drive box housing 1516 installed at the left end of the integral drive axle 1513 is in a horizontal installation position, placing the universal joint and input splined shaft 1514 on the left side and at the rear end of the third integral drive axle 1513, so that the outer right side of the integral drive axle gear or sprocket chain drive box housing 1516 is for output. The outer ball cage 1514 of the telescopic constant velocity ball cage universal joint installed to the right on the splined shaft is in a relative position to the outer ball cage 115 of the constant velocity ball cage universal joint installed to the left on the end of the splined shaft 113 of the left bearing housing 118 of the universal joint output shaft of the 1503 second set of new multi-purpose shaft transmission box body's universal joint output shaft bevel gear right-angle transmission box housing 1504. Among them, the preferred left power transmission half shaft 1519 is transversely arranged and installed in the outer ball cage 115 of the constant velocity ball cage universal joint installed to the left on the end of the splined shaft 113 of the left bearing housing 118 of the universal joint output shaft of the 1503 second set of new multi-purpose shaft transmission box body's universal joint output shaft bevel gear right-angle transmission box housing 1504. At the same time, the transmission half shaft 1519, which is inserted into the center splined hole of the inner ball cage in the constant velocity ball cage universal joint outer ball cage 115, extends laterally to the right and is meshed with the center splined hole of the inner ball cage of the telescopic constant velocity ball cage universal joint outer ball cage 1514, which is extended out to the right from the input shaft bearing housing on the outer right side of the drive axle gear or sprocket chain drive box housing 1516 welded to the left end of the third integral drive axle 1513, to transmit power.

The inner ball cage center splined hole of the constant velocity ball cage universal joint outer ball cage 116 installed on the right end of the right universal joint output splined shaft 113 of the right universal joint output shaft bearing seat 117 on the right side of the second set of universal joint output shaft bevel gear right-angle transmission box housing 1504 is inserted with the transmission half shaft 1520 extending laterally to the right. The inner ball cage installed on the left end of the transmission half shaft 1520 meshes with the constant velocity ball cage universal joint outer ball cage 116 installed on the right end of the universal joint output splined shaft 113 and transmits power. The transmission half shaft 1520 extending laterally to the right is inserted into the inner ball cage of the constant velocity ball cage universal joint outer ball cage 1515 with telescopic function installed on the left side of the input shaft bearing seat outside the drive bridge gear or sprocket chain transmission box housing 1505 installed on the right side of the fourth integral drive axle 1506 of the dual drive rear axle, and meshes with the center splined hole of the inner ball cage to transmit power.

The fourth integral drive axle gear or sprocket chain drive box housing 1505 installed at the right end of the integral drive axle 1506 is in a horizontal installation position, with the universal joint and input splined shaft 1515 located on the right side of the fourth integral drive axle 1506 and at the front end. The outer ball cage 1515 of the telescopic constant velocity ball cage universal joint installed on the left side of the input splined shaft of the integral drive axle gear or sprocket chain drive box housing 1505 is in a position opposite to the outer ball cage 116 of the constant velocity ball cage universal joint installed on the right side of the splined shaft 113 at the end of the universal joint output shaft of the second set of new multi-purpose shaft drive box 1503's universal joint output shaft bevel gear right-angle drive box housing 1504. At the same time, the preferred rightward power transmission half shaft 1520 is laterally arranged and installed inside the outer ball cage 116 of the constant velocity ball cage universal joint installed on the right side of the splined shaft 113 at the end of the universal joint output shaft of the second set of new multi-purpose shaft drive box 1503's universal joint output shaft bevel gear right-angle drive box housing 1504, and at the same time, the transmission half shaft is inserted and installed into the center splined hole of the inner ball cage of the constant velocity ball cage universal joint 116. Shaft 1520 extends laterally to the right and engages with the center splined hole of the inner universal joint ball cage of the telescopic constant velocity ball cage universal joint that extends outward to the left from the input shaft bearing housing on the outer left side of the drive axle gear (or sprocket chain) transmission box housing 1505 welded to the right end of the fourth integral drive axle 1506, thereby transmitting power.

When the second set of the new multi-purpose shaft transmission box 1503 and the universal joint output shaft bevel gear right-angle transmission box housing 1504 are used to drive the third integral drive axle 1513 and the fourth integral drive axle 1506 of the two sets of double rear axles, an inter-axle differential can be optionally installed in the middle position of the left and right sets of constant velocity ball cage universal joint output splined shafts 113 within the second set of the new multi-purpose shaft transmission box 1503 and the universal joint output shaft bevel gear right-angle transmission box housing 1504, enabling the constant velocity ball cage universal joint 115 installed at the left end of the left universal joint output splined shaft 113 and the drive half shaft 1519 transmitting power to the left to have a differential function with the constant velocity ball cage universal joint 116 installed at the right end of the right universal joint output splined shaft 113 and the drive half shaft 1520 transmitting power to the right.

When the overall drive axle is applied to the all-terrain amphibious vehicle or the four-wheel drive bridge transmission power of the wheeled armored vehicle body, since the four drive axles are of the same overall drive axle structure and do not have the steering function of wheel load tire deflection, an inter-axle differential assembly must be installed between the left and right drive axle half shafts in each of the first overall drive axle gear or chain wheel chain transmission box housing 1508, the second overall drive axle gear or chain wheel chain transmission box housing 1511, the third overall drive axle gear or chain wheel chain transmission box housing 1516, and the fourth overall drive axle gear or chain wheel chain transmission box housing 1506. This enables the left and right drive axle half shafts installed on the inter-axle differential of the first overall drive axle 1507, the second overall drive axle 1510, the third overall drive axle 1513, and the fourth overall drive axle 1506, as well as the drive wheels installed at the ends of the two half shafts, to have a differential function, allowing the wheels on the left and right sides of the vehicle body chassis to have different rotational speeds and enabling the vehicle to achieve tire slippage and steering functions. At the same time, the vehicle body with the 8×8 drive wheel structure of the four-drive overall drive axle is equipped with two sets of left and right brake and steering systems. Among them, the four overall drive axles installed on the vehicle body chassis, including the first overall drive axle 1507, the second overall drive axle 1510, the third overall drive axle 1513, and the fourth overall drive axle 1506, are equipped with two sets of left and right brake systems. The left brake system is installed on the left wheel hub of the same overall drive axle, and the right brake system is installed on the right wheel hub. When the vehicle is in motion and one side's brake system is used, the rotational speed of the drive wheels on one side of the vehicle body is reduced, while the drive wheels on the opposite side of the same axle increase their rotational speed under the action of the differential. By rapidly adjusting the rotational speeds of the half shafts and drive wheels of the fast drive axle, a speed difference is simultaneously created between the drive wheels on both sides of the four integral drive axles, thereby enabling tire sliding steering or in-place turning.

The multi-purpose shaft transmission structure of the new type of all-terrain vehicle multi-purpose shaft transmission system described in Example 4 is extended to the transmission structure of the three-axle drive 6x6 drive wheel and four-axle drive 8x8 drive wheel. For the double-axle structure, the left universal joint output shaft bearing seat 118 and the right universal joint output shaft bearing seat 117 of the first set of new multi-purpose shaft transmission box body's universal joint output shaft bevel gear right-angle transmission box shell 1402 of the front axle, which is a four-wheel drive independent suspension steering front double axle structure, must be installed horizontally and transversely on the chassis of the all-terrain amphibious vehicle or wheeled armored vehicle to better install the universal joint and the transmission half shaft for power transmission. However, in order to obtain the power transmitted from the remote engine, the input shaft bevel gear right-angle transmission box shell 1400 of the first set of new multi-purpose shaft transmission box body, which is installed vertically, and the universal joint output shaft bevel gear right-angle transmission box shell 1402 must be rotated 90° and fixed on the axial position of the intermediate transmission shaft 108, so that the input splined shaft (101) inside the input shaft bevel gear right-angle transmission box shell 1400 of the vertically installed new multi-purpose shaft transmission box body is installed in a longitudinal position, parallel to the longitudinal axis of the all-terrain amphibious vehicle or wheeled armored vehicle body, and the universal joint output shaft (113) inside the horizontally installed universal joint output shaft bevel gear right-angle transmission box shell 1402 is at a 90° transmission phase difference on the axial position of the intermediate transmission shaft 108.

The left universal joint output shaft bearing housing 118 and the right universal joint output shaft bearing housing 117 of the second set of new multi-purpose shaft transmission box body's universal joint output shaft bevel gear right-angle transmission box housing 1403 must be installed horizontally and laterally on the chassis of the all-terrain amphibious vehicle or wheeled armored vehicle to better install the universal joint and the drive half shaft for power transmission. However, to obtain the power transmitted from the remote engine, the input shaft bevel gear right-angle transmission box housing 1401 of the second set of new multi-purpose shaft transmission box body, which is installed vertically, and the universal joint output shaft bevel gear right-angle transmission box housing 1403 must be fixed with the intermediate transmission shaft support protection tube 109 and the flange 110 rotated 90° in the axial position of the intermediate transmission shaft 108, so that the input splined shaft (101) inside the vertically installed new multi-purpose shaft transmission box body's input shaft bevel gear right-angle transmission box housing 1401 is in a longitudinal installation position, parallel to the longitudinal axis of the all-terrain amphibious vehicle or wheeled armored vehicle body, and perpendicular to the laterally installed universal joint on the chassis of the all-terrain amphibious vehicle or wheeled armored vehicle. The universal joint output shaft (113) in the conical gear right-angle transmission box housing 1403 is at a 90° transmission phase difference in the axial position of the intermediate transmission shaft 108.

The left universal joint output shaft bearing seat 118 and the right universal joint output shaft bearing seat 117 of the third set of new multi-purpose shaft transmission box body's universal joint output shaft bevel gear right-angle transmission box shell 1416 of the rear axle of the dual-axle structure in the four-wheel drive integral drive axle dual rear axle structure must be installed horizontally and transversely on the chassis of the all-terrain amphibious vehicle or wheeled armored vehicle to better arrange and install the universal joint and the transmission half shaft for power transmission. However, in order to obtain the power transmitted from the remote engine, the input shaft bevel gear right-angle transmission box shell 1404 of the third set of new multi-purpose shaft transmission box body installed vertically must be rotated 90° along with the intermediate transmission shaft support protection tube 109 and the flange 110 in the axial position of the intermediate transmission shaft 108 and fixed, so that the input splined shaft

(101) inside the input shaft bevel gear right-angle transmission box shell 1404 of the new multi-purpose shaft transmission box body installed vertically is in a longitudinal installation position, parallel to the longitudinal axis of the all-terrain amphibious vehicle or wheeled armored vehicle body, and at a 90° transmission phase difference with the universal joint output shaft (113) inside the universal joint output shaft bevel gear right-angle transmission box shell 1416 installed transversely on the chassis of the all-terrain amphibious vehicle or wheeled armored vehicle in the axial position of the intermediate transmission shaft 108.

To apply the integral drive axle to the transmission structure of the 8x8 drive wheel configuration with four-wheel drive, the left and right universal joint output shaft bearing seats 118 and 117 of the first set of new multi-purpose shaft transmission box bodies of the double-axle structure's front axle, which is a four-wheel drive integral drive axle double front axle structure, must be installed horizontally and laterally on the chassis of the all-terrain amphibious vehicle or wheeled armored vehicle to better arrange and install the universal joint and the transmission half shaft for power transmission. However, to obtain the power transmitted from the remote engine, the input shaft bevel gear right-angle transmission box shell 1501 of the first set of new multi-purpose shaft transmission box bodies installed vertically must be rotated 90° along with the intermediate shaft support protection tube 109 and the flange 110 in the axial position of the intermediate shaft 108 and fixed, so that the input splined shaft (101) inside the input shaft bevel gear right-angle transmission box shell 1501 of the new multi-purpose shaft transmission box body installed vertically is in a longitudinal installation position, parallel to the longitudinal axis of the all-terrain amphibious vehicle or wheeled armored vehicle body, and perpendicular to the lateral installation position of the universal joint output shaft bevel gear right-angle transmission box shell 1502 on the chassis of the all-terrain amphibious vehicle or wheeled armored vehicle. The universal joint output shaft (113) inside the right-angle transmission box housing 1502 has a 90° transmission phase difference in the axial position of the intermediate transmission shaft 108.

The left universal joint output shaft bearing seat 118 and the right universal joint output shaft bearing seat 117 of the second set of new multi-purpose shaft transmission box body's universal joint output shaft bevel gear right-angle transmission box shell 1504 of the rear axle with the double-axle structure and the integral drive axle of the four-wheel drive must be installed horizontally and transversely on the chassis of the all-terrain amphibious vehicle or wheeled armored vehicle to better arrange and install the universal joint and the transmission half shaft for power transmission. However, in order to obtain the power transmitted from the remote engine, the input shaft bevel gear right-angle transmission box shell 1503 of the second set of new multi-purpose shaft transmission box body, which is installed vertically, must be connected with the universal joint output shaft bevel gear right-angle transmission box shell 1504 in the middle transmission. The intermediate transmission shaft support and protection tube 109 and the flange 110 are rotated 90 degrees and fixed at the axial position of the shaft 108, so that the input splined shaft (101) in the input conical gear right-angle transmission box shell 1503 of the new multi-purpose shaft transmission box body installed in the vertical position is in a longitudinal installation position, parallel to the longitudinal axis of the all-terrain amphibious vehicle or wheeled armored vehicle body, and the universal joint output shaft (113) in the universal joint output shaft conical gear right-angle transmission box shell 1504 installed in the chassis position of the all-terrain amphibious vehicle or wheeled armored vehicle body is at a 90-degree transmission phase difference at the axial position of the intermediate transmission shaft 108.

The multi-purpose shaft transmission box structure of the new multi-purpose shaft transmission system for all-terrain vehicles as described in Example 5 must be installed in a vertical arrangement at the chassis position of the all-terrain amphibious vehicle or wheeled armored vehicle. Therefore, for the double-bridge structure, the first set of the new multi-purpose shaft transmission box with the input shaft bevel gear right-angle transmission box housing 1400 and the input splined shaft 101, as well as the combination components such as the transmission shaft and the transmission shaft universal joint connected in series with the engine, are installed in the middle position inside the chassis of the all-terrain amphibious vehicle or wheeled armored vehicle in a longitudinal installation position. The second set of the new multi-purpose shaft transmission box with the input shaft bevel gear right-angle transmission box housing 1401 and the input splined shaft 101, as well as the combination components such as the transmission shaft and the transmission shaft universal joint connected in series with the engine, are also installed in the middle position inside the chassis of the all-terrain amphibious vehicle or wheeled armored vehicle in a longitudinal installation position.

The input splined shaft 101 of the bevel gear right-angle transmission box housing 1404 of the third set of new multi-purpose shaft transmission box body, which is installed in a longitudinal position and shared by the two sets of rear integral drive axles of the four-wheel drive integral drive axle double rear axle structure with the matching double-axle structure rear axle, is connected in series with the engine. The transmission shaft and universal joint, as well as other combined components, are installed in the middle of the vehicle body chassis of the all-terrain amphibious vehicle or wheeled armored vehicle. The transmission shaft and universal joint at the engine end are connected in series to the input shaft bevel gears of the new multi-purpose shaft transmission box bodies installed longitudinally. The input shaft splined shafts outside the input shaft bevel gear right-angle transmission box shells are used to provide rotational driving force to each group of new multi-purpose shaft transmission box bodies. The chassis armor can effectively prevent the damage to the transmission system inside the vehicle body chassis caused by explosive fragments and shock waves. Meanwhile, the first set of universal joint output shaft bevel gear right-angle transmission box shell 1402 on the left side of the vehicle body chassis exterior is equipped with universal joint 115 drive half shaft 1421 and on the right side with universal joint 116 drive half shaft 1406. The second set of universal joint output shaft bevel gear right-angle transmission box shell 1403 is equipped with universal joint 115 drive half shaft 1405 on the left side and universal joint 116 drive half shaft 1406 on the right side. The third set of universal joint output shaft bevel gear right-angle transmission box shell 1416 is equipped with universal joint 115 drive half shaft 1407 on the left side and universal joint 116 drive half shaft 1408 on the right side. These components, along with the third and fourth integral drive axles 1409 and 1410, are made of high-strength alloy materials with a large redundancy design to enhance the resistance to explosive fragments and shock waves, thereby improving the battlefield survivability of the all-terrain amphibious vehicle or wheeled armored vehicle to maintain rapid movement.

The overall drive axle is extended to be applied in the transmission structure of the 8x8 drive wheel configuration with four-axle drive. The front axle of the double-axle structure is the first set of new multi-purpose shaft transmission box bodies in a longitudinal installation position shared by the two sets of front overall drive axles of the four-wheel drive overall drive axle double front axle structure. The input shaft splined shaft 101 of the input shaft bevel gear right-angle transmission box housing 1501, the transmission shaft 1521 connected in series with the engine, the transmission shaft universal joint 1522 and the end output shaft universal joint 1523, and other combined components are installed in the middle position of the vehicle body chassis of the all-terrain amphibious vehicle or wheeled armored vehicle. The rear axle of the double-axle structure is the second set of new multi-purpose shaft transmission box bodies in a longitudinal installation position shared by the two sets of rear overall drive axles of the four-wheel drive overall drive axle double rear axle structure. The input shaft splined shaft 101 of the input shaft bevel gear right-angle transmission box housing 1503, the intermediate transmission shaft 1524, and the transmission shaft universal joint 1525, and other combined components are installed in the middle position of the vehicle body chassis of the all-terrain amphibious vehicle or wheeled armored vehicle.

The input splined shaft 101 of the transmission shaft universal joint 1522 connected to the engine rear output transmission shaft 1521, which is installed in a longitudinal position parallel to the longitudinal axis of the vehicle body, extends rearward in a horizontal position and is inserted into the input shaft bevel gear right-angle transmission box housing 1501 of the first set of new multi-purpose shaft transmission boxes installed in a longitudinal position and coaxially in parallel. The longitudinal axis of the vehicle body is the engine intermediate drive shaft 1524, which is installed in a longitudinal position with parallel lines, is connected to the output splined shaft (101) at the end of the input shaft bevel gear right-angle transmission box housing 1501 of the first set of new multi-purpose shaft transmission boxes. At the same time, the engine intermediate drive shaft 1524 transmits power to the output splined shaft 101 located at the rear of the coaxial universal joint 1525 in a horizontal position and extending longitudinally backward, and then enters the input shaft bevel gear right-angle transmission box housing 1503 of the second set of new multi-purpose shaft transmission boxes, which are installed in parallel and coaxially in a longitudinal position, to transfer power. The chassis armor can effectively prevent the damage to the internal transmission system of the vehicle chassis caused by the shock wave of explosive fragments.

The first set of universal joint output shaft bevel gear right-angle transmission box housing 1502 of the new multi-purpose shaft transmission box body installed on the external position of the chassis of the all-terrain amphibious vehicle or wheeled armored vehicle, the left-mounted universal joint 115 drive half shaft 1517 and the right-mounted universal joint 116 drive half shaft 1518, and the first integral drive axle 1507 and the second integral drive axle 1510 combination components, as well as the second set of universal joint output shaft bevel gear right-angle transmission box housing 1504 of the new multi-purpose shaft transmission box body, the left-mounted universal joint 115 drive half shaft 1519 and the right-mounted universal joint 116 drive half shaft 1520, and the third integral drive axle 1513 and the fourth integral drive axle 1506 combination components are all made of high-strength alloy materials with a large redundancy design to enhance the anti-destruction capability against explosive fragment shock waves and thereby improve the battlefield survivability of the all-terrain amphibious vehicle or wheeled armored vehicle to maintain rapid movement.

The constant velocity ball cage universal joint used in the novel multi-purpose shaft transmission system of the present invention serves as an exemplary illustration. In this transmission system, it is not specifically limited to the constant velocity ball cage universal joint. To reduce the actual production and usage costs, the constant velocity ball cage universal joint in the exemplary embodiment of the present invention can be replaced with a cross-axis universal joint or a flexible universal joint coupling, or other types of universal joints for power transmission.

The structure and method for the application of the new multi-purpose shaft transmission system to the power transmission of three-drive axle 6×6 drive wheels and four-drive axle 8×8 drive wheels serves as an example. In the vehicle transmission system, it is not limited to the power transmission of three-drive axles and four-drive axles. To meet the higher requirements of special vehicles for off-road performance and load-bearing capacity, multiple sets of new multi-purpose shaft transmission boxes can be installed on the chassis of long special vehicles in a reasonable combination mode, along with multiple sets of independent suspension knuckle shaft steering knuckles and multiple sets of integral drive axle transmission systems for power transmission.

In the present invention, when the integral drive axle is in operation to transmit power in conjunction with the novel multi-purpose shaft drive system, the three sets of transmission gears or sprocket chains installed in the transmission box housing of the integral drive axle gear or sprocket chain are For demonstration purposes, in this transmission system, it is not specifically limited to three sets of transmission gears or sprocket combinations. In production and use, the number of transmission gear or sprocket sets installed in the transmission box housing of the entire drive axle can be increased or decreased according to the actual working conditions to achieve the best transmission matching.

The working principle of the transmission structure in the embodiment is illustrated by taking the structure form of the new multi-purpose shaft transmission box body installed in a vertical arrangement, which is used in conjunction with an integral drive axle to transmit power and an independent suspension knuckle shaft steering knuckle to transmit power as an example.

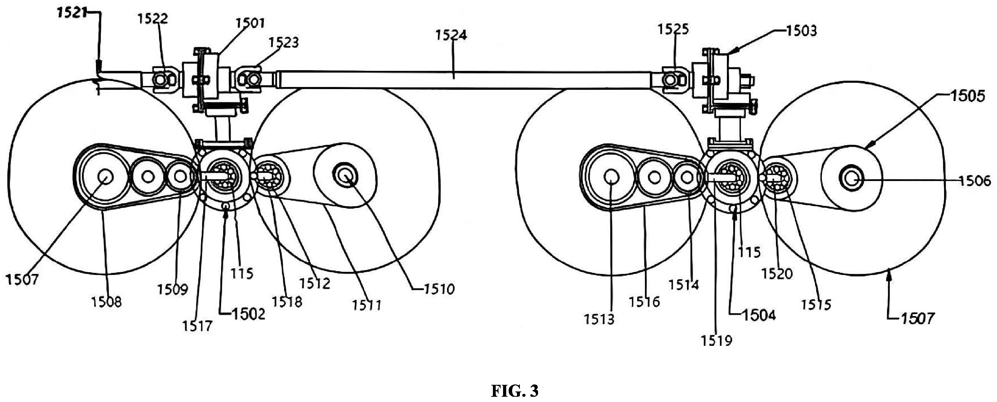

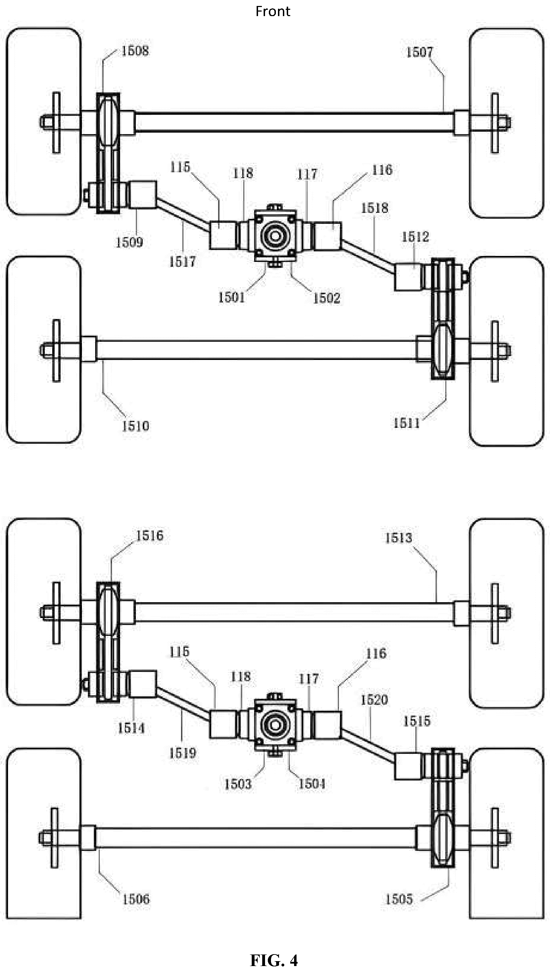

The new multi-purpose shaft transmission box shown in Figures 3 and 4 is vertically installed in the middle of the vehicle body of an all-terrain amphibious vehicle or a wheeled armored vehicle. The universal joint output shaft of the new multi-purpose shaft transmission box and the universal joint output shaft of the bevel gear right-angle transmission box are laterally arranged and installed in the middle of the integral drive axle at the front and rear of the vehicle chassis, ensuring a suitable distance between the universal joint output shaft bearing seat of the new multi-purpose shaft transmission box and the bridge tube of the integral drive axle, and maintaining a parallel power transmission position of the two shafts. The outer universal joint output splined shaft of the new multi-purpose shaft transmission box, which is laterally arranged and installed in the vehicle chassis, has two equal-speed ball cage universal joint outer cages installed at both ends, and is fastened with a center screw. Inside the two equal-speed ball cage universal joint outer cages, two transmission half shafts that mesh with the inner cages are simultaneously installed, and the two transmission half shafts extend to the left and right to the input shaft end of the drive axle gear or chain wheel chain transmission box installed at the left or right end of the integral drive axle bridge tube. The outer cage of the equal-speed ball cage universal joint that rotates to output power to the left drives the transmission half shaft installed with the inner cage to rotate simultaneously, and meshes with the outer cage of the equal-speed ball cage universal joint that extends to the right and has a telescopic function, which is installed outside the input shaft bearing seat of the drive axle gear or chain wheel chain transmission box at the left end of the integral drive axle bridge tube. This drives the equal-speed ball cage universal joint with telescopic function and the input shaft first transmission gear or chain wheel installed on the splined shaft between the two input shaft bearing seats in the drive axle gear or chain wheel chain transmission box shell to rotate simultaneously, and transmits power to the second intermediate transmission gear or chain guide wheel installed on the intermediate shaft between the two bearing seats in the middle of the drive axle gear or chain wheel chain transmission box, which rotates simultaneously. This also drives the third transmission large gear or large sprocket installed on the integral drive shaft in the drive axle gear or chain wheel chain transmission box to rotate simultaneously. The integral drive shaft rotates inside the integral drive axle bridge tube and transmits power to the driving wheels installed at both ends of the integral drive shaft to rotate simultaneously, driving the vehicle forward. When the vehicle travels on a bumpy road, the integral drive axle jumps up and down with the road surface, and the vehicle frame chassis also jumps up and down accordingly. The splined shaft end of the drive half shaft that transmits power to the left is connected and inserted into the splined shaft end of the universal joint output shaft on the left side of the new multi-purpose shaft transmission box body installed on the vehicle chassis, and is located at a position that remains relatively stationary with respect to the vehicle body during movement. The splined shaft end of the drive half shaft that transmits power to the left is also connected and inserted into the splined shaft end of the universal joint output shaft on the right side of the right-angle transmission box shell of the new multi-purpose shaft transmission box body installed on the vehicle chassis, and is located at a position that remains relatively stationary with respect to the vehicle body during movement. The splined shaft end of the drive half shaft that transmits power to the right is connected and inserted into the splined shaft end of the universal joint output shaft on the right side of the right-angle transmission box shell of the new multi-purpose shaft transmission box body installed on the vehicle chassis, and is located at a position that remains relatively stationary with respect to the vehicle body during movement. The splined shaft end of the drive half shaft that transmits power to the right is also connected and inserted into the splined shaft end of the universal joint output shaft on the left side of the right-angle transmission box shell of the new multi-purpose shaft transmission box body installed on the vehicle chassis, and is located at a position that remains relatively stationary with respect to the vehicle body during movement. The universal joint output shaft of the right-angle transmission box shell outside the new multi-purpose shaft transmission box body, with the universal joint on the left end and the universal joint on the right end, and the universal joint with telescopic function on the left or right end of the input shaft of the integral drive axle gear transmission box body can compensate for the changes in angular momentum and displacement of the drive half shaft under various working conditions, ensuring the smooth transmission of power in the transmission system.

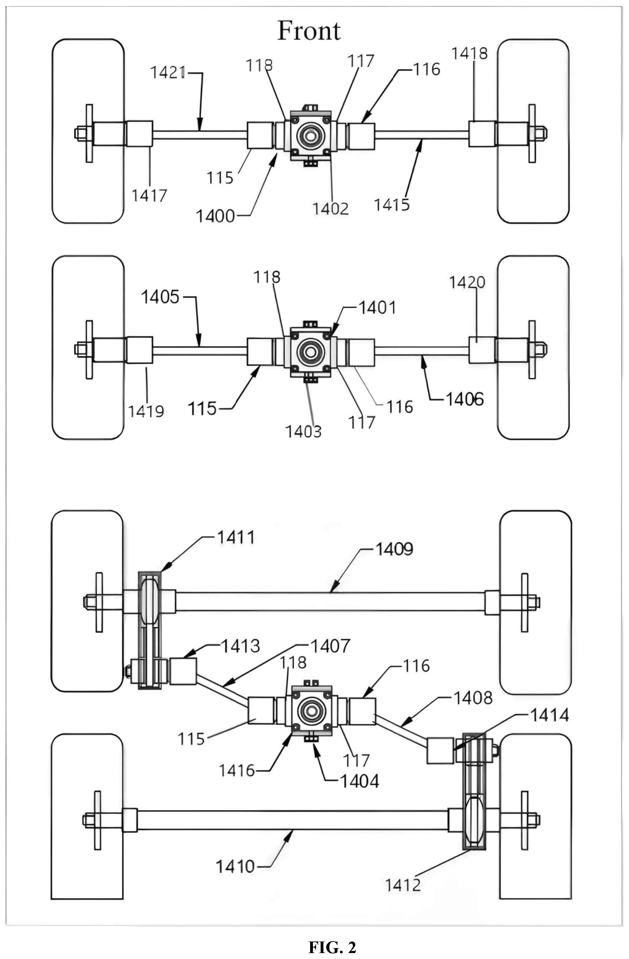

Figure 2 takes the structure form of the new multi-purpose shaft transmission box installed vertically and transmitting power to the independent suspension knuckle of the front drive as an example. The new multi-purpose shaft transmission box is vertically installed inside the vehicle body of an all-terrain amphibious vehicle or a wheeled armored vehicle. The bearing seat of the universal joint output shaft of the new multi-purpose shaft transmission box is laterally installed at the position of the front drive axle of the all-terrain amphibious vehicle or the wheeled armored vehicle chassis, so that the output splined shaft of the bearing seat of the universal joint output shaft of the new multi-purpose shaft transmission box and the axis of the independent suspension knuckle on the right side of the vehicle body of the all-terrain amphibious vehicle or the wheeled armored vehicle at the front drive position are in the same vertical plane. Among them, the universal joint output shaft of the new multi-purpose shaft transmission box laterally installed at the position of the vehicle body chassis of the all-terrain amphibious vehicle or the wheeled armored vehicle. Both ends of the output shaft of the universal joint outside the bearing housing of the shaft are simultaneously equipped with left and right equal-speed ball cage universal joints and are fastened with a central screw. Preferably, the left and right equal-speed ball cage universal joints installed at both ends of the rotating output shaft of the universal joint are simultaneously equipped with left and right drive half shafts that mesh with the central splined holes of the left and right inner ball cages and rotate simultaneously. The left and right drive half shafts extend laterally to the left and right sides of the vehicle body of the all-terrain amphibious vehicle or wheeled armored vehicle, and are meshed with the left and right sets of independent suspension knuckle shaft steering knuckles with telescopic function on the bearing housing. They mesh with the inner ball cages and drive the left and right wheel hub flanges on the knuckle shaft steering knuckles to rotate, thereby driving the vehicle forward. When the vehicle is moving forward on an uneven road, the left and right knuckle shaft steering knuckles on both sides of the vehicle body jump up and down with the road surface, performing vertical bouncing movements relative to the vehicle body or cross-axis movements relative to the front axle. In the transmission system, the left and right drive half shafts that simultaneously output power to the left and right are connected to the left and right ends of the universal joint output shaft bearing housing of the new multi-purpose shaft transmission box installed on the chassis frame. In the movement state, they maintain a relatively stationary power transmission position with the chassis frame, while the outer ends of the left and right drive half shafts extend to the left and right to mesh with the left and right sets of knuckle shaft steering knuckles with telescopic function on the bearing housing. When the left and right sets of knuckle shaft steering knuckles perform large-amplitude bouncing movements in the movement state, the continuity of power transmission in the transmission system is maintained.

The above description sets forth the basic principles and main features of the present invention. Those skilled in the art should understand that the present invention is not limited to the above embodiments. The embodiments and descriptions in the specification are merely illustrative of the principles of the present invention. Under the premise of not departing from the spirit and scope of the present invention, there will be various changes and improvements to the present invention, and all such changes and improvements fall within the scope of the present invention as defined by the appended claims and their equivalents.

## Claims

1. The structural features of the multi-drive axle power transmission of the new multi-purpose shaft drive system for all-terrain vehicles include:
The new multi-purpose shaft transmission box adopts a vertical installation method to transfer power. The front double-axle structure with a dual-axle configuration is a four-wheel drive independent suspension steering front double-axle structure, and the rear double-axle structure is a four-wheel drive integral drive axle double rear axle structure. The universal joint output shaft bevel gear right-angle transmission box shell of the vertically installed new multi-purpose shaft transmission box is installed in the middle position between the front and rear drive axles of the all-terrain amphibious vehicle, armored vehicle, and wheeled vehicle chassis longitudinal axis. The first set of transmission box shell (1402), the second set of transmission box shell (1403), and the third set of transmission box shell (1404) of the transmission box shell, as well as the left universal joint output shaft bearing seat (118) and the right universal joint output shaft bearing seat (117) of each set of transmission box shell and the universal joint output splined shaft (113) are arranged horizontally.
The left universal joint output shaft bearing housing (118) and the right universal joint output shaft bearing housing (117) and the universal joint output splined shaft (113) of the first set of universal joint output shaft bevel gear right-angle transmission box housing (1402) arranged horizontally are installed at the middle position of the first drive shaft at the front of the vehicle chassis. The left independent suspension knuckle steering knuckle (1417) and the right independent suspension knuckle steering knuckle (1418) of the first set of drive axles are arranged horizontally and installed at the front of the left and right sides of the vehicle body of all-terrain amphibious vehicles, wheeled armored vehicles, etc., at the position of the first drive shaft. The left universal joint output shaft bearing housing (118) and the right universal joint output shaft bearing housing (117) and the universal joint output splined shaft (113) of the second set of universal joint output shaft bevel gear right-angle transmission box housing (1403) arranged horizontally are installed at the middle position of the second drive shaft at the front of the vehicle chassis. The left independent suspension knuckle steering knuckle (1419) and the right independent suspension knuckle steering knuckle (1420) of the second set of drive axles are arranged horizontally and installed at the front of the left and right sides of the vehicle body of all-terrain amphibious vehicles, wheeled armored vehicles, etc., at the position of the second drive shaft. Meanwhile, the third integral drive axle (1409) and the fourth integral drive axle (1410) are arranged horizontally and installed at the position of the third and fourth drive shafts at the rear of the vehicle body of all-terrain amphibious vehicles, wheeled armored vehicles, etc. The left universal joint output shaft bearing housing (118) and the right universal joint output shaft bearing housing of the third set of universal joint output shaft bevel gear right-angle transmission box housing (1416) arranged horizontally The bearing housing (117) and the universal joint output splined shaft (113) are laterally arranged and installed at the middle position between the two sets of bridge tubes of the third integral drive axle (1409) and the fourth integral drive axle (1410), maintaining a parallel installation position of the three shafts.
The first set of transmission box housing (1402), the second set of transmission box housing (1403), and the third set of transmission box housing (1404) of the universal joint output shaft bevel gear right-angle transmission box housing of the new multi-purpose shaft transmission box body are integrated with the left universal joint output bearing seat (118), the right universal joint output shaft bearing seat (117), and the universal joint output splined shaft (113) of each set of transmission box housing, and are installed as a whole with the vehicle chassis, maintaining a fixed position relative to the vehicle body for power transmission.
The left independent suspension knuckle steering knuckle of the first drive axle under the lower part of the vehicle chassis. The left independent suspension knuckle steering knuckle (1417) of the first set of drive axles is connected to the left side of the vehicle body through double A-type arms, and the right independent suspension knuckle steering knuckle (1418) is connected to the right side of the vehicle body through double A-type arms. The left independent suspension knuckle steering knuckle (1419) of the second set of drive axles is connected to the left side of the vehicle body through double A-type arms, and the right independent suspension knuckle steering knuckle (1420) is connected to the right side of the vehicle body through double A-type arms. Meanwhile, the third integral drive axle (1409) and the fourth integral drive axle (1410) are flexibly connected to the vehicle body chassis through longitudinally placed four-link and transversely placed Panhard rods. The suspension is supported by coil springs, air springs or leaf springs.
The new multi-purpose shaft transmission box is composed of three parts: the input shaft bevel gear right-angle transmission box housing, the intermediate transmission shaft support and protection tube, and the universal joint output shaft bevel gear right-angle transmission box housing. The input shaft bevel gear right-angle transmission box housing (100) is equipped with an input splined shaft (101) and a bevel gear bearing assembly (102) installed inside. The intermediate transmission shaft support and protection tube (109) is of an appropriate length and houses the intermediate transmission shaft (108) and the driven bevel gear (106) inside. The universal joint output shaft bevel gear right-angle transmission box housing (112) is equipped with an intermediate output shaft bevel gear bearing assembly (111) inside, along with a driven bevel gear (119) at the left end, a driven bevel gear (120) at the right end, and an output splined shaft (113) at the end. The input shaft bevel gear right-angle transmission box housing (100) is made up of multiple cylindrical shells of different diameters, and it includes a large shaft. The cylindrical shell of the driving bevel gear (103), the small bearing housing cylindrical shell (104), the driven bevel gear cylindrical shell (105), and the driven bevel gear bearing housing cylindrical shell (107) are combined to form an irregular input shaft bevel gear right-angle transmission box housing. The cylindrical shell of the driving bevel gear (103) and the small bearing housing cylindrical shell (104) are welded together in the horizontal position of the input shaft direction. In the vertical direction, the driven bevel gear cylindrical shell (105) is welded to the cylindrical shells of the driving bevel gear (103) and the small bearing (104) in the horizontal direction to form an integrated structure. In the horizontal direction, the cylindrical shell of the driving bevel gear is provided with the flange of (103) that is fastened to the flange of the large bearing housing cylindrical shell of the driven bevel gear bearing housing cylindrical shell (107) with bolts; in the vertical direction, the flange of the driven bevel gear bearing housing cylindrical shell (107) is fastened to the flange of the driven bevel gear cylindrical shell (105) with bolts. The input shaft bevel gear right-angle transmission box shell (100) of the new multi-purpose shaft transmission box is installed with the input shaft (101), the input bevel gear assembly (102), and the driven bevel gear assembly of the intermediate transmission shaft (108). The rear end of the universal joint (1522) of the engine transmission shaft or the universal joint (1525) of the intermediate transmission shaft is in a horizontal position and extends longitudinally backward, and the input splined shaft (101) is inserted into the input shaft bevel gear right-angle transmission box shell (100) of the new multi-purpose shaft transmission box which is installed in parallel and coaxially in a longitudinal position. In the input shaft bevel gear right-angle transmission box shell (100) in the horizontal direction, the large bearing housing (103) is installed with two sets of large bearings, and in the large bearing holes, there are internal splined shaft sleeves that can mesh with the input splined shaft (101). Moreover, the inner end of the internal splined shaft sleeve of suitable length is welded with a bevel gear, that is, the integral internal splined shaft bevel gear assembly (102). In the input shaft bevel gear right-angle transmission box shell (100) in the horizontal direction, the small bearing housing of the input shaft is provided with two sets of small bearings are installed inside (104). On the left and right sides of the small bearing holes, there are shims for adjusting the clearance. The input splined shaft (101) of the universal joint (1522) of the engine drive shaft or the universal joint (1525) of the intermediate drive shaft is inserted into the splined hole of the integral internal gear splined shaft bevel gear (102) installed in the large bearing hole of the input shaft bevel gear right-angle transmission box housing (100), and meshes with the splined shaft part of the input shaft (101) to transmit power. The smooth shaft part on the same axis then passes through the bearing holes of the two sets of small bearings installed inside the small bearing housing (104) and extends to the end of the input shaft bevel gear right-angle transmission box housing (104). The exposed splined shaft section is fitted with a universal joint and fastened with a large nut. The output splined shaft (101) extending horizontally and longitudinally forward and backward from the outside of the bearing housing (104) at the end of the input shaft bevel gear right-angle transmission box housing (100) and the universal joints at both ends of the input splined shaft (101) connected to the intermediate transmission shaft are the coaxial splined shaft (101) of the input shaft bevel gear right-angle transmission box housing (100).
The intermediate transmission shaft support and protection tube (109) of the said new multi-purpose shaft transmission box is composed of multiple sets of cylindrical shell tubes of different diameters and lengths, including: the vertical driven conical gear bearing seat cylindrical shell (107), the cylindrical shell (109) of the intermediate transmission shaft support and protection tube with suitable length, and the cylindrical shell (110) of the end input shaft conical gear bearing seat of the intermediate transmission shaft (108) are welded into a coaxial intermediate transmission shaft support and protection tube (109); in the vertical direction, the flange of the cylindrical shell (105) of the driven conical gear of the input shaft conical gear right-angle transmission box shell is fastened to the flange of the cylindrical shell (107) of the driven conical gear bearing seat of the intermediate transmission shaft support and protection tube with bolts; in the vertical direction, the flange of the cylindrical shell (110) of the end input shaft conical gear bearing seat of the intermediate transmission shaft support and protection tube (109) is fastened to the flange of the cylindrical shell (110) of the end input shaft conical gear bearing seat installed on the universal joint output shaft conical gear right-angle transmission box shell (112) with bolts; the driven conical gear (106) installed in the bearing seat of the cylindrical shell (107) in the vertical direction in the input shaft conical gear right-angle transmission box shell is perpendicularly installed between the horizontal input shaft (101), and the input shaft driving conical gear (102) installed on the horizontal input splined shaft (101) meshes with the driven conical gear (106) installed in the vertical direction of the intermediate transmission shaft and transmits power; the intermediate transmission shaft (108) of suitable length is installed in the tube cavity of the intermediate transmission shaft support and protection tube (109) which is perpendicularly installed to the horizontal input shaft (101), and both ends of the intermediate transmission shaft are splined shaft parts, the upper splined head part meshes with the splined slot in the center splined hole of the driven conical gear (106) meshing with the input shaft driving conical gear (102) in the input shaft conical gear right-angle transmission box shell (100), and the lower splined head part is inserted into the universal joint output shaft conical gear right-angle transmission box shell (112) and meshes with the horizontal universal joint output splined shaft. The splines in the center splined hole of the input conical gear (111) at the end of the intermediate transmission shaft mesh with the splines in the left output shaft driven conical gear (119) and the right output shaft driven conical gear (120) installed on the key shaft (113), and power is transmitted.
The universal joint output shaft bevel gear right-angle transmission box housing (112) of the said new multi-purpose shaft transmission box is composed of multiple cylindrical shell bodies of different diameters, including: the cylindrical shell body (118) of the left universal joint output shaft bearing seat in the horizontal position and the cylindrical shell body (117) of the right universal joint output shaft bearing seat, the cylindrical shell body (112) of the universal joint output shaft bevel gear in the middle position, and the cylindrical shell body (110) of the bevel gear at the end of the intermediate transmission shaft installed in the vertical position. The cylindrical shell body (118) of the left output shaft bearing seat and the cylindrical shell body (117) of the right output shaft bearing seat are welded to the left and right sides of the cylindrical shell body (112) of the universal joint output shaft bevel gear. A group of cylindrical shell bodies (110) of the bevel gear at the end of the intermediate transmission shaft is installed in the vertical direction on the cylindrical shell body (112) of the universal joint output shaft bevel gear. The flange of the cylindrical shell body (110) of the bevel gear bearing seat at the end of the intermediate transmission shaft support protection tube (109) is fastened to the flange of the cylindrical shell body (110) of the bevel gear at the end of the intermediate transmission shaft of the universal joint output shaft bevel gear right-angle transmission box housing (112) with bolts.
The output bevel gear (111) at the end of the intermediate transmission shaft (108) installed vertically in the universal joint output bevel gear right-angle transmission box housing (112) is the input bevel gear (111) meshing with the intermediate transmission shaft (108) in the universal joint output bevel gear right-angle transmission box housing (112). The input bevel gear (111) meshing with the intermediate transmission shaft (108) and the bearing are combined and installed in the cylindrical housing of the output bevel gear bearing seat at the end of the intermediate transmission shaft (110), and it meshes with the left output shaft driven bevel gear (119) and the right output shaft driven bevel gear (120) installed on the output splined shaft (113) in the horizontal position in the universal joint output bevel gear right-angle transmission box housing (112) to transmit power.
In the left output shaft bearing housing (118) and the right output shaft bearing housing (117) located in a horizontal position inside the right-angle transmission box housing (112) of the universal joint output shaft bevel gear, each is equipped with two sets of bearings. Inside the holes of these two sets of bearings, the left output shaft driven bevel gear (119) and the right output shaft driven bevel gear (120) are respectively installed. The end universal joint output splined shaft (113) is inserted into the center holes of the left driven bevel gear (119) and the right driven bevel gear (120). The left driven bevel gear (119) and the right driven bevel gear (120) are installed at the middle position of the end universal joint output splined shaft (113). The sliding splined sleeve (114) is inserted into the end universal joint output splined shaft (113). The center holes of the left driven bevel gear (119) and the right driven bevel gear (120) are smooth holes without internal splined grooves, while the center hole of the sliding splined sleeve (114) inserted into the end universal joint output splined shaft (113) has an internal splined groove structure and meshes with the output splined shaft (113). At the same time, the sliding splined sleeve (114) can slide left and right, and mesh with the inner teeth of the left driven bevel gear (119) or the right driven bevel gear (120) on the end universal joint output splined shaft (113), thereby enabling the end output shaft driven bevel gears and the output splined shaft to have the function of forward and reverse rotation, providing the vehicle with the reverse gear function. Meanwhile, the left universal joint output shaft bearing seat (118) and the right universal joint output shaft bearing seat (117) installed horizontally outside the universal joint output shaft bevel gear right-angle transmission box housing (112) have the end universal joint output splined shaft (113) installed at both ends, with the left end universal joint ball cage (115) and the right end universal joint (116) installed at both ends, respectively, to output power to both sides, providing convenient conditions for the subsequent installation of the drive half shaft.
The conical gear right-angle transmission box housing (112) at the output shaft of the universal joint can be optionally equipped with a differential between the half shafts, enabling the two constant velocity ball cage universal joints installed at the left and right ends of the universal joint output splined shaft (113) to have a differential function. Inside the conical gear right-angle transmission box housing (112) at the horizontal position, there are two sets of bearings installed in the left universal joint output shaft bearing housing (118) and the right universal joint output shaft bearing housing (117), respectively. The edges of the protrusions on both sides of the differential housing are installed in these two sets of bearing holes. Inside the differential housing, there is a differential gear assembly, and outside the differential housing, there is a large conical gear at the end of the output shaft of the differential that meshes with the vertically installed intermediate transmission shaft (108) inside the conical gear right-angle transmission box housing (112). The conical gears (111) on the input shafts mesh with each other. Meanwhile, two transmission splined half shafts are installed in the bearing holes of the left universal joint output shaft bearing housing (118) and the right universal joint output shaft bearing housing (117). These two splined half shafts are respectively inserted into the center splined holes of the left and right conical gears installed in the differential housing and mesh with each other. At the end of the left splined half shaft, a left end constant velocity ball cage universal joint (115) is installed, and at the end of the right splined half shaft, a right end constant velocity ball cage universal joint (116) is installed, simultaneously transmitting power to both sides.
The integral drive axle used for power transmission in multi-drive axle systems is the same type of integral drive axle. Meanwhile, an integral drive shaft is inserted and installed within the integral drive axle tube. The drive axle gear (or sprocket chain) transmission box housing installed at the left or right end of the integral drive axle tube has a longitudinal cross-section in an elliptical shape. It consists of a rectangular cross-section housing and semi-cylindrical end housings at both ends of the rectangular housing, as well as an integral drive axle gear (or sprocket chain) transmission box housing with an appropriate length and an internal structure suitable for installing a transmission gear set or a transmission sprocket chain set. Taking the drive axle gear transmission box housing as an example, multiple sets of transmission gears arranged in sequence and meshing with each other are installed inside the drive axle gear transmission box housing. On the inner walls of the integral drive axle tube end positions on both the left and right sides, there are left and right symmetrical drive axle tube bearing seats welded. The integral drive shaft is inserted and installed in the left and right symmetrical drive axle tube bearing seats. On the integral drive shaft, there is a first large drive gear, and on both sides of the first large gear, there are bearings installed on the integral drive shaft, which are also installed in the left and right symmetrical drive axle tube bearing seats on the inner walls of the drive axle gear transmission box housing, maintaining the first large gear installed on the integral drive shaft in the middle transmission position between the left and right two bearing seats of the drive axle tube. On the inner walls of the left and right sides of the middle position of the drive axle gear transmission box housing, there are left and right symmetrical middle transmission gear set bearing seats. Inside the left and right two bearing seats, there are bearings and middle transmission gear shafts, as well as a second middle transmission gear installed on the middle transmission gear shaft at the middle position between the two sets of bearings. On the inner walls of the left and right sides of the input shaft end of the drive axle gear transmission box housing, there are left and right symmetrical input shaft bearing seats. Inside the bearing holes of the left and right two bearing seats, there is a constant velocity drive shaft inserted. The splined shaft of the outer cage of the ball cage universal joint and the input shaft's third drive pinion installed on the splined shaft of the constant velocity ball cage universal joint's outer cage at the middle position between the left and right bearing seats; the splined shaft of the outer cage of the constant velocity ball cage universal joint passes through the bearing seat at the input shaft end of the drive axle gear transmission box housing, and is fastened with a nut at the extended part outside; the bearing seats at the left and right ends of the integral drive axle tube are installed with left and right two sets of bearings, which are used to fix the integral drive shaft installed in the tube cavity of the integral drive axle, and there are splined teeth at both ends of the integral drive shaft. The flange plates for installing fixed wheel load tires and the flange plates for installing fixed brake discs can be installed and fastened with nuts on the extended parts of the two end flange plates of the integral drive shaft. Outside the integral drive axle housing, there are also welded longitudinal and transverse push-pull rod brackets, shock absorber spring brackets, brake pump brackets and other accessories to control the movement posture of the integral drive axle.
To expand the broader applicability of the integral drive axle, according to the vehicle usage requirements, the first large gear installed on the integral drive shaft in the gear transmission box housing of the integral drive axle can be replaced with a differential large gear assembly with differential function, and the integral drive shaft installed in the bridge tube of the integral drive axle can be replaced with two drive axle half shafts on the left and right that are compatible with the differential assembly. The feature is that the differential large gear assembly is installed in the gear transmission box housing of the drive axle. In the middle position of the two symmetrical bridge tube bearing seats on the left and right, the protruding edges on the left and right sides of the differential housing are respectively embedded in the left and right bridge tube bearing seats of the gear transmission box housing of the drive axle. Inside the differential housing, a differential conical gear assembly is installed. The splined shafts of the two drive axle half shafts on the left and right that are inserted into the left and right ends of the integral drive axle bridge tube are respectively inserted into the center splined shaft holes of the two differential conical gears on the left and right inside the differential housing and mesh with each other to transmit power. Bearings are installed in the bearing seats at the left and right ends of the integral drive axle bridge tube to fix the two drive axle half shafts on the left and right, enabling the two drive axle half shafts to have a differential function.
The transmission chain and sprocket assembly within the integral drive axle chain and sprocket transmission box housing is an improvement of the transmission gear structure within the integral drive axle gear transmission box housing. Specifically, the first large transmission gear installed on the integral drive shaft at the middle position between the two symmetrical drive axle tube bearing seats on the left and right sides of the integral drive axle gear transmission box housing is replaced with the first large transmission sprocket, and on the intermediate transmission gear shaft at the middle position within the integral drive axle gear transmission box housing, The second intermediate gear is replaced with an intermediate chain guide wheel. The third small gear on the splined shaft of the outer ball cage of the constant velocity universal joint between the two symmetrical input shaft bearing seats on the left and right ends of the input shaft in the integral drive axle gear transmission box housing is replaced with a third small sprocket for transmission. A set of transmission chains are used to mesh with each other between the various transmission sprockets to transmit power, and the intermediate chain guide wheel assists the smooth operation of the chain. The integral drive axle sprocket chain transmission box housing and the integral drive axle gear transmission box housing have the same shape, the same installation position, and the same function. The installation positions of each shaft in the transmission box housing are the same.
The transmission structure characteristics of the special all-terrain amphibious vehicle or wheeled armored vehicle with four drive axles and 8x8 drive wheels are:
The multi-purpose all-terrain vehicle's new type of multi-drive axle transmission system's power transmission structure is composed of a dual-axle structure with a front axle featuring four-wheel drive, independent suspension and steering, and a rear axle with a dual-axle structure featuring four-wheel drive and an integral drive axle.
When the two sets of universal joint output shaft bevel gear right-angle transmission box shells of the new multi-purpose shaft transmission box bodies in this scheme are applied to the two sets of independent suspension knuckle shaft steering knuckle drive axles, the left universal joint output shaft bearing seat (118) and the right universal joint output shaft bearing seat (117) of the universal joint output shaft splined shaft (113) extending laterally to both sides of the first set of new multi-purpose shaft transmission box body (1400) universal joint output shaft bevel gear right-angle transmission box shell (1402) are installed laterally in the middle position of the first drive axle at the front of the all-terrain amphibious vehicle or wheeled armored vehicle body, and at the same time, they are installed in the middle position between the left knuckle shaft steering knuckle constant velocity ball cage universal joint (1417) and the left drive half shaft (1421) and the right knuckle shaft steering knuckle constant velocity ball cage universal joint (1418) and the right drive half shaft (1415) installed on both sides of the vehicle body, and are integrated with the vehicle body chassis.
When the power is transmitted by two sets of independent suspension knuckle steering axle drive bridges, the two knuckle steering axles installed on the left and right sides of the vehicle body of all-terrain amphibious vehicles, wheeled armored vehicles, etc., and on the same axis are connected to the frame through one of the preferred connection methods such as double A-arm, multi-link trailing arm or longitudinal swing arm. Taking the first set of independent suspension knuckle steering axle for power transmission as an example, the first set of new multi-purpose shaft transmission box bodies installed at the front of the vehicle body is connected to the frame through universal joints. The first independent suspension steering front axle structure is composed of the bevel gear right-angle transmission box housing (1402) for the steering shaft, the left power transmission half shaft (1421), the constant velocity ball cage universal joint (1417) of the first set of independent suspension knuckle shaft steering knuckle on the left side of the vehicle body, the right power transmission half shaft (1415), and the constant velocity ball cage universal joint (1418) of the first set of independent suspension knuckle shaft steering knuckle on the right side of the vehicle body. The constant velocity ball cage universal joint (1417) of the knuckle shaft steering knuckle on the left side of the first independent suspension and the constant velocity ball cage universal joint (1418) of the knuckle shaft steering knuckle on the right side are installed in the center holes of the left and right knuckle shaft steering knuckles on the left and right sides of the vehicle body, respectively, and are connected to the vehicle body through double A-shaped arms. They are arranged and installed on the left and right sides of the first drive shaft at the front of the vehicle body of all-terrain amphibious vehicles, wheeled armored vehicles, etc. At the same time, the axes of the left and right knuckle shaft steering knuckles' constant velocity ball cage universal joints (1417 and 1418) are coaxial and are located at the left and right universal joint output shaft bearing seats (118 and 117) of the first set of universal joint output shaft bevel gear right-angle transmission box housing (1402) that is integrated with the vehicle body and the lower part of the vehicle body. Moreover, the axes of the left and right knuckle shaft steering knuckles' constant velocity ball cage universal joints (1417 and 1418) have a sufficient stroke distance from the vehicle chassis.
The left end of the universal joint output splined shaft (113) on the left side of the first set of universal joint output shaft bevel gear right-angle transmission box housing (1402) installed on the first drive axle position on the vehicle chassis is equipped with a left end constant velocity ball cage universal joint outer cage (115) and is fastened with a center screw. At the same time, the left end of the universal joint output splined shaft (113) of the first set of universal joint output shaft bevel gear right-angle transmission box housing (1402) is also installed with a leftward extending transmission half shaft (1421). The inner cage installed on the right end of the transmission half shaft (1421) is meshed with the constant velocity ball cage universal joint outer cage (115), and the transmission half shaft (1421) extending leftward is inserted into the inner cage center splined hole and extends to the right into the outer cage (1417) of the constant velocity ball cage universal joint with telescopic function installed in the left independent suspension knuckle shaft steering knuckle hole of the vehicle body. Moreover, the left end of the drive half shaft (1421) engages with the center splined hole of the inner ball cage to transmit power.
The right end of the universal joint output splined shaft (113) on the right side of the first set of universal joint output shaft bevel gear right-angle transmission box housing (1402) installed on the first drive axle position on the vehicle chassis is simultaneously equipped with a right-end constant velocity ball cage universal joint outer cage (116) and fastened with a center screw. The right end of the universal joint output splined shaft (113) in the first set of universal joint output shaft bevel gear right-angle transmission box housing (1402) is simultaneously equipped with a right-end constant velocity ball cage universal joint outer cage (116), and a transmission half shaft (1415) extending laterally to the right is inserted into the inner cage center splined hole within the right-end constant velocity ball cage universal joint outer cage (116). The inner cage installed on the left end of the transmission half shaft (1415) meshes with the constant velocity ball cage universal joint outer cage (116), and the transmission half shaft (1415) extends laterally to the right and is inserted into the left-end constant velocity ball cage universal joint outer cage (1418) with telescopic function installed in the steering knuckle shaft hole of the right independent suspension of the vehicle body. The right end of the transmission half shaft (1415) meshes with the center splined hole of the inner cage and transmits power.
When the two sets of new multi-purpose shaft transmission box bodies in this scheme are applied to the independent suspension knuckle steering knuckles, the left universal joint output shaft bearing housing (118) and the right universal joint output shaft bearing housing (117) of the second set of new multi-purpose shaft transmission box body (1401) and the universal joint output splined shaft (113) extending laterally to both sides are also installed in the middle position of the second group of independent suspension drive axles at the front of the all-terrain amphibious vehicle or wheeled armored vehicle, and are arranged horizontally. At the same time, they are installed in the middle position between the constant velocity ball cage universal joint (1419) and the left drive half shaft (1405) of the left knuckle steering knuckle and the constant velocity ball cage universal joint (1420) and the right drive half shaft (1406) of the right knuckle steering knuckle on both sides of the vehicle body, and are integrated with the vehicle body chassis.
When the power is transmitted by the two sets of independent suspension knuckle shaft steering drive axles, the two knuckle shafts installed on the left and right sides of the vehicle body of all-terrain amphibious vehicles, wheeled armored vehicles, etc., and on the same axis, rotate. The double-A type support arm, multi-link trailing arm or longitudinal swing arm, among others, is preferably selected as the connection method to the frame. Taking the second set of independent suspension knuckle steering knuckle for power transmission as an example, the second set of new multi-purpose shaft transmission box body's universal joint output shaft bevel gear right-angle transmission box shell (1403), the left power transmission half shaft (1405), the constant velocity ball cage universal joint (1419) of the second set of independent suspension knuckle steering knuckle on the left side of the vehicle body, the right power transmission half shaft (1406), and the constant velocity ball cage universal joint (1420) of the second set of independent suspension knuckle steering knuckle on the right side of the vehicle body form the second set of independent suspension steering double front axle structure. The constant velocity ball cage universal joint (1419) of the knuckle steering knuckle on the left side of the second set of independent suspension and the constant velocity ball cage universal joint (1420) of the knuckle steering knuckle on the right side are installed in the center holes of the two coaxial knuckle steering knuckles and connected to the vehicle body through the double-A type support arm. They are arranged and installed on the left and right sides of the second drive shaft at the front of the vehicle body of all-terrain amphibious vehicles, wheeled armored vehicles, etc. At the same time, the axes of the two coaxial knuckle steering knuckles, namely the constant velocity ball cage universal joint (1419) on the left and the constant velocity ball cage universal joint (1420) on the right, are located at the left universal joint output shaft bearing seat (118) and the right universal joint output shaft bearing seat (117) of the second set of universal joint output shaft bevel gear right-angle transmission box shell (1403) that is integrally installed with the vehicle body, as well as the lower part of the vehicle body. Moreover, the axes of the two coaxial left constant velocity ball cage universal joint (1419) and right constant velocity ball cage universal joint (1420) have a sufficient stroke distance from the vehicle chassis.
The left end of the universal joint output splined shaft (113) installed on the left side of the second set of universal joint output shaft bevel gear right-angle transmission box housing (1403) located at the position of the second drive axle on the vehicle chassis is simultaneously fitted with a left equal-speed ball cage universal joint outer cage (115) and fastened with a center screw. The inner cage center splined hole of the left equal-speed ball cage universal joint outer cage (115) installed on the left end of the universal joint output splined shaft (113) of the second set of universal joint output shaft bevel gear right-angle transmission box housing (1403) is inserted with a transmission half shaft (1405) extending laterally to the left. The inner cage installed on the right end of the transmission half shaft (1405) is connected with the equal-speed ball cage universal joint outer cage (115). The leftward power-transmitting drive half shaft (1405) that is installed by engaging with the center splined hole of the inner ball cage extends laterally to the left into the rightward-mounted telescopic constant-velocity ball cage universal joint outer ball cage (1419) of the independent suspension knuckle shaft on the left side of the vehicle body, and the left end of the drive half shaft (1405) engages with the center splined hole of the inner ball cage to transmit power.
The second set of universal joint transmission, which is arranged laterally at the position of the second drive axle on the vehicle chassis, is described.
The right universal joint output shaft bearing housing of the right-angle transmission box housing with conical gears on the output shaft (1403) The right end of the universal joint output spline shaft (113) at the outer right end is simultaneously equipped with The outer ball cage (116) of the right-end constant-velocity ball cage universal joint is fastened with a central screw; in the second set. The universal joint output spline of the right-angle drive box housing (1403) with conical gear on the universal joint output shaft The inner ball inside the right constant velocity ball cage universal joint outer cage (116) installed at the right end of the shaft (113). A transmission half shaft (1406) extending laterally to the right is inserted into the splined hole at the center of the cage for transmission. The inner ball cage installed at the left end of the half shaft is mated with the outer ball cage (116) of the constant velocity ball cage universal joint. The drive half shaft that transmits power to the right is engaged and installed through the splined hole at the center of the inner ball cage. The right end of the drive half shaft (1406) extends laterally to the right and is installed into the left side of the outer ball cage (1420) of the telescopic constant velocity ball joint within the steering knuckle axle hole of the independent suspension on the right side of the vehicle body. The right end of the drive half shaft (1406) meshes with the center splined hole of the inner ball cage to transmit power.
The conical gear right-angle transmission box housing (112) of the independent suspension knuckle shaft steering knuckle described herein can be optionally equipped with an inter-axle differential between the left universal joint output shaft bearing seat (118) and the right universal joint output shaft bearing seat (117), enabling the left constant velocity ball cage universal joint (115) installed on the left end of the universal joint output splined shaft (113) outside the left universal joint output shaft bearing seat (118) and the right constant velocity ball cage universal joint (116) installed on the right end of the universal joint output splined shaft (113) outside the right universal joint output shaft bearing seat (117), as well as the two drive half shafts and tires on the left and right sides, to have differential function.
The rear axle of the described double-axle structure is a four-wheel drive integral drive axle double rear axle structure. The third integral drive axle (1409) and the fourth integral drive axle (1410) installed in conjunction are composed of tubular axle tubes of suitable lengths, with the third integral drive axle tube (1409) having a left end where a component is installed. The elliptical drive axle gear (or sprocket chain) transmission box housing (1411) located at the head position and the elliptical drive axle gear (or sprocket chain) transmission box housing (1412) installed at the right end of the fourth integral drive axle tube (1410) are combined to form the integral drive axle housing; the two sets of rear drive integral drive axles share a new type of multi-purpose shaft transmission box (1404).
The left universal joint output shaft bearing housing (118) and the right universal joint output shaft bearing housing (117) of the third set of new multi-purpose shaft transmission box body (1404) and the universal joint output splined shaft (113) extending laterally to both sides are installed laterally at the rear of the all-terrain amphibious vehicle or wheeled armored vehicle, in the middle position between the third integral drive axle (1409) and the fourth integral drive axle (1410), and are installed as an integral structure with the vehicle chassis. At the same time, the left universal joint output shaft bearing housing (118) and the right universal joint output shaft bearing housing (117) of the universal joint output bevel gear right-angle transmission box housing (1416) and the universal joint output splined shaft (113) extending laterally to both sides are installed in parallel with the third integral drive axle (1409) and the fourth integral drive axle (1410) of the double rear axles.
The left and right universal joint output shaft bearing seats (118 and 117) at the left and right ends of the universal joint output shaft splined shaft (113) extending outward from the left side of the third set of new multi-purpose shaft transmission box housing (1404) installed on the chassis of an all-terrain amphibious vehicle or wheeled armored vehicle are simultaneously equipped with the left constant velocity ball cage universal joint outer cage (115) and the right constant velocity ball cage universal joint (116), which are fastened with a central screw. A drive half shaft (1407) extending laterally to the left is inserted into the inner cage center splined hole of the left constant velocity ball cage universal joint outer cage (115), and a drive half shaft (1408) extending laterally to the right is inserted into the inner cage center splined hole of the right constant velocity ball cage universal joint outer cage (116). To correspond to the installation position of the drive half shaft (1407) extending laterally to the left from the left universal joint output shaft bearing seat (118) and the end of the universal joint output splined shaft (113) of the third set of universal joint output shaft bevel gear right-angle transmission box housing (1416), the third integral drive axle gear (or sprocket chain) transmission box housing is installed.
The preferred installation position of the transmission box housing (1411) of the drive axle gear (or sprocket chain) on the left end of the third integral drive axle (1409) is in a horizontal position parallel to the ground. However, it can also be installed in a vertical position or at any position convenient for the installation of the drive half shaft. Among them, the horizontal position for power transmission is the best demonstration example.
The third integral drive axle gear (or sprocket chain) transmission box housing (1411) installed at the left end of the integral drive axle (1409) is in a horizontal position. The universal joint and the input splined shaft (1413) are located at the left end and the rear end of the third integral drive axle (1409). The outer ball cage (1413) of the telescopic constant velocity ball cage universal joint installed on the right side of the input splined shaft of the integral drive axle gear (or sprocket chain) transmission box housing (1411) is in a position opposite to the outer ball cage (115) of the constant velocity ball cage universal joint installed on the left end of the splined output shaft (113) on the left side of the universal joint output shaft bearing housing (118) of the third set of new multi-purpose shaft transmission box (1404) with a right-angle transmission box housing (1416). Preferably, the drive half shaft (1407) for leftward power transmission is installed horizontally inside the outer ball cage (115) of the constant velocity ball cage universal joint installed on the left end of the splined output shaft (113) on the left side of the universal joint output shaft bearing housing (118) of the third set of new multi-purpose shaft transmission box (1404) and extends laterally to the right into the inner ball cage center splined hole of the outer ball cage (1413) with telescopic function installed on the right side of the input shaft bearing housing of the integral drive axle gear (or sprocket chain) transmission box housing (1411) welded to the left end of the third integral drive axle (1409) to mesh with the inner ball cage center splined hole and transmit power.
To correspond to the right side of the universal joint output shaft bearing housing (117) and the splined output shaft (113) and the constant velocity ball cage universal joint (116) installed at the right end of the third set of universal joint output shaft bevel gear right-angle transmission box housing (1416), the drive half shaft (1408) for rightward power transmission is installed at the corresponding position. Meanwhile, the fourth integral drive axle gear (or sprocket chain) transmission box housing (1412) is preferably installed in a horizontal position at the right end of the fourth integral drive axle (1410) bridge tube. The drive axle gear (or sprocket chain) transmission box housing (1412) installed at the right end of the fourth integral drive axle (1410) bridge tube is driven. The installation position of the transmission box housing (1412) of the bridge gear (or sprocket chain) can be in a horizontal state parallel to the ground, a vertical state, or any position convenient for installing the drive half shaft. Among them, the preferred position for transmitting power is the horizontal position, which is the best demonstration example.
The fourth integral drive axle gear (or sprocket chain) transmission box housing (1412) installed at the right end of the integral drive axle (1410) is in a horizontal installation position, with the universal joint and input splined shaft (1414) located at the right front end of the fourth integral drive axle (1410). The outer ball cage (1414) of the telescopic function constant velocity universal joint on the left side of the input splined shaft of the integral drive axle gear (or sprocket chain) transmission box housing (1412) is in a relative position to the outer ball cage (116) of the constant velocity universal joint on the right side of the output splined shaft (113) at the right end of the output splined shaft of the third set of new multi-purpose shaft transmission box (1404) with a right-angle transmission box housing (1416). At the same time, the preferred right output power drive half shaft (1408) is installed horizontally inside the outer ball cage (116) of the constant velocity universal joint on the right side of the output splined shaft (113) at the right end of the third set of new multi-purpose shaft transmission box (1404) with a right-angle transmission box housing (1416). The drive half shaft (1408) extends laterally to the left inside the outer ball cage (1414) of the telescopic function constant velocity universal joint on the left side of the input shaft bearing housing of the integral drive axle gear (or sprocket chain) transmission box housing (1412) welded at the right end of the integral drive axle (1410), and meshes with the inner ball cage center splined hole to transmit power.
When the third set of new multi-purpose shaft transmission box (1404) is used to drive the third group of integral drive axles (1409) and the fourth group of integral drive axles (1410), an inter-axle differential can be optionally installed at the middle position of the left and right output splined shafts (113) inside the right-angle transmission box housing (1416) of the new multi-purpose shaft transmission box (1404), enabling a differential function between the left constant velocity universal joint (115) and the left output power drive half shaft (1407) as well as the right constant velocity universal joint (116) and the right output power drive half shaft (1408).
The extended application of the four-axle drive with dual front-axle drive bridges is an independent suspension steering bridge, which is equipped with the first set of new multi-purpose shaft transmission box (1400) and the second set of new multi-purpose shaft transmission box (1401) for two sets of independent suspension front drive bridges. The dual rear-axle drive bridge is an integral drive bridge, which is equipped with a shared new multi-purpose shaft transmission box (1404). It is the same type of new multi-purpose shaft transmission box. To synchronize the rotational speeds of the wheel pairs between the dual front axles and the dual rear axles, the transmission ratios of the transmission gears (or sprocket chains) in the transmission box housing (1411) installed on the third integral drive bridge (1409) and the transmission box housing (1412) installed on the fourth integral drive bridge (1410) can be adjusted to make the rotational speeds of the front wheel group and the rear wheel group the same.
When the integral drive axle is extended for application in the dual rear axle drive of an all-terrain amphibious vehicle or a wheeled armored vehicle, an inter-axle differential can be optionally installed between the left and right half shafts of the third integral drive axle gear (or sprocket chain) transmission box housing (1411) and the fourth integral drive axle gear (or sprocket chain) transmission box housing (1412), enabling the left and right half shafts within the integral drive axle tube and the drive wheels installed at both ends to have differential function.

2. The power transmission structure of the multi-purpose shaft drive system for all-terrain vehicles as claimed in claim 1, when extended to a three-drive-axle 6x6 drive wheel all-terrain UTV, ATV or amphibious vehicle and wheeled armored vehicle, has the following characteristics: the transmission mode of the extended three-drive-axle structure is improved from the transmission mode of the four-drive-axle structure, wherein the front double-axle structure of the double-axle structure is a four-wheel drive independent suspension steering front double-axle structure, and the first set of left independent suspension knuckle shaft steering knuckle's constant velocity ball cage universal joint (1417) and the left power output drive half shaft (1421) installed, as well as the first set of right independent suspension knuckle shaft steering knuckle's constant velocity ball cage universal joint (1418) and the right power output drive half shaft (1415) installed, are combined with the first set of new multi-purpose shaft drive box (1400) universal joint output shaft bevel gear right-angle transmission box housing (1402) to transmit power, and at the same time, the second set of left independent suspension knuckle shaft steering knuckle's constant velocity ball cage universal joint (1419) and the left power output drive half shaft (1405) installed, as well as the second set of right independent suspension knuckle shaft steering knuckle's constant velocity ball cage universal joint (1420) and the right power output drive half shaft installed, are combined with the second set of new multi-purpose shaft drive box (1400) universal joint output shaft bevel gear right-angle transmission box housing (1402) to transmit power. The universal joint output shaft bevel gear right-angle transmission box shell (1403) is combined with the second set of new multi-purpose shaft transmission box body (1401) to transmit power.
When expanding the 6x6 drive structure with three drive axles, the second set of independent suspension knuckle steering knuckles of the front double axles is removed, and only the first set of left independent suspension knuckle steering knuckles' constant velocity ball cage universal joint (1417) and the drive half shaft (1421) transmitting power to the left, as well as the first set of right independent suspension knuckle steering knuckles' constant velocity ball cage universal joint (1418) and the drive half shaft (1415) transmitting power to the right, are retained. These are combined with the first set of new multi-purpose shaft transmission box (1400) and its universal joint output shaft bevel gear right-angle transmission box housing (1402) to transmit power. In the expanded three-drive axle structure, the rear double axles are integral drive axles. The third set of integral drive axle (1409) and the fourth set of integral drive axle (1410) share the third set of new multi-purpose shaft transmission box (1404) and its universal joint output shaft bevel gear right-angle transmission box housing (1416) to transmit power. The first set of independent suspension front axle and the two sets of integral drive rear axles are combined to form the transmission structure of the 6x6 drive wheels. In the above structure, the second set of independent suspension knuckle steering knuckles and constant velocity ball cage universal joints, as well as the second set of new multi-purpose shaft transmission box's universal joint output shaft bevel gear right-angle transmission box housing, are omitted. Only the first set of new multi-purpose shaft transmission box (1400) and its universal joint output shaft bevel gear right-angle transmission box housing (1402), and the third set of new multi-purpose shaft transmission box (1404) and its universal joint output shaft bevel gear right-angle transmission box housing (1416) are used to transmit power.
When the overall drive axle is extended for application in the dual rear axle drive of an all-terrain amphibious vehicle or a wheeled armored vehicle, an inter-axle differential can be optionally installed between the left and right half shafts of the third overall drive axle gear (or sprocket chain) transmission box housing (1411) and the fourth overall drive axle gear (or sprocket chain) transmission box housing (1412), enabling the left and right half shafts within the overall drive axle tube and the drive wheels installed at both ends to have a differential function.

3. The multi-drive bridge power transmission structure of the new multi-purpose shaft drive system for all-terrain vehicles as described in claim 1 is further applied to the overall four-drive bridge 8x8 drive wheel of a special all-terrain amphibious vehicle. The structural feature of a vehicle or wheeled armored vehicle is that the front double-axle structure is a four-wheel drive integral drive axle double front axle structure. The first integral drive axle (1507) is composed of a tubular axle tube of appropriate length and an elliptical drive axle gear (or sprocket chain) transmission box housing (1508) installed at the left end of the first integral drive axle tube (1507) to form the integral drive axle housing. The second integral drive axle (1510) is the same, composed of a tubular axle tube of appropriate length and an elliptical drive axle gear (or sprocket chain) transmission box housing (1511) installed at the right end of the second integral drive axle tube (1510) to form the integral drive axle housing. Between the first integral drive axle (1507) and the second integral drive axle (1510) of the double-axle drive's two sets of front axles, a first set of new multi-purpose shaft transmission box (1501) is shared.
The left universal joint output shaft bearing housing (118) and the right universal joint output shaft bearing housing (117) of the first set of new multi-purpose shaft transmission box body (1501) and the universal joint output splined shaft (113) extending laterally to both sides are installed in a transverse arrangement at the front chassis position of the all-terrain amphibious vehicle or wheeled armored vehicle, in the middle position between the first integral drive axle (1507) and the second integral drive axle (1510), and are installed as an integral structure with the vehicle chassis. At the same time, the left universal joint output shaft bearing housing (118) and the right universal joint output shaft bearing housing (117) of the universal joint output shaft bevel gear right-angle transmission box housing (1502) and the universal joint output splined shaft (113) extending laterally to both sides are installed in a parallel position with the first group of integral drive axles (1507) and the second group of integral drive axles (1510) of the double drive front axle.
The left end of the universal joint output splined shaft (113) extending outward from the left side of the universal joint output shaft bevel gear right-angle transmission box housing (1502) of the first set of new multi-purpose shaft transmission box (1501) installed on the chassis of an all-terrain amphibious vehicle or wheeled armored vehicle is simultaneously equipped with a left end constant velocity ball cage universal joint outer cage (115), and the right end of the universal joint output splined shaft (113) extending outward from the right side of the universal joint output shaft bearing housing (117) is simultaneously equipped with a right end constant velocity ball cage universal joint outer cage (116), which are fastened with a central screw.
The left end of the left universal joint output splined shaft (113) installed in the left universal joint output shaft bearing seat (118) on the left side of the first set of universal joint output shaft bevel gear right-angle transmission box housing (1502) has an inner ball cage center splined hole into which a leftward extending drive half shaft (1517) is installed. The inner ball cage installed at the right end of the drive half shaft (1517) meshes with the outer ball cage (115) of the constant velocity ball cage universal joint installed at the left end of the universal joint output splined shaft (113) to transmit power. The drive half shaft (1517) extends leftward and meshes with the inner ball cage center splined hole of the rightward extending, telescopic outer ball cage (1509) installed on the right side of the input shaft bearing seat outside the drive axle gear (or sprocket chain) transmission box housing (1508) on the left side of the first integral drive axle (1507) of the dual-drive front axle to transmit power.
The first integral drive axle gear (or sprocket chain) transmission box housing (1508) installed at the left end of the integral drive axle (1507) is in a horizontal installation position. The universal joint and the input splined shaft (1509) are located at the left side and the rear end of the first integral drive axle (1507). The outer ball cage (1509) of the universal joint with telescopic function and constant velocity installed on the right side of the input splined shaft of the integral drive axle gear (or sprocket chain) transmission box housing (1508) is in a relative position to the outer ball cage (115) of the universal joint with constant velocity installed on the left side of the bearing housing of the universal joint output shaft (113) at the left end of the first set of new multi-purpose shaft transmission box body (1501) and the bevel gear right-angle transmission box housing (1502). The preferred leftward power transmission half shaft (1517) is installed horizontally inside the outer ball cage (115) of the universal joint with constant velocity installed on the left end of the universal joint output splined shaft (113) of the bevel gear right-angle transmission box housing (1502) of the first set of new multi-purpose shaft transmission box body (1501), and at the same time, the transmission half shaft (1517) inserted into the center splined hole of the inner ball cage inside the outer ball cage (115) extends laterally to the right from the input shaft bearing housing extending outward from the right side of the integral drive axle gear (or sprocket chain) transmission box housing (1508) welded to the left end of the integral drive axle (1507). Inside the outer cage (1509) of the ball cage universal joint, it meshes with the central splined hole of the inner cage and transmits power.
The transmission half shaft (1518) extending laterally to the right is installed in the inner ball cage center splined hole of the constant velocity ball cage universal joint outer ball cage (116) on the right end of the right universal joint output splined shaft (113) in the right universal joint output shaft bearing seat (117) on the right side of the first set of universal joint output shaft bevel gear right-angle transmission box housing (1502). The inner ball cage installed at the left end of the transmission half shaft (1518) meshes with the constant velocity ball cage universal joint outer ball cage (116) installed at the right end of the universal joint output splined shaft (113) to transmit power. The transmission half shaft (1518) extends laterally to the right and reaches the input shaft bearing seat on the left side of the drive axle gear (or sprocket chain) transmission box housing (1511) installed on the right side of the second integral drive axle (1510) of the dual-drive front axle, where it meshes with the inner splined hole of the constant velocity ball cage universal joint outer ball cage (1512) extending to the left with telescopic function and transmits power.
The second integral drive axle gear (or sprocket chain) transmission box housing (1511) installed at the right end of the integral drive axle (1510) is in a horizontal installation position, with the universal joint and input splined shaft (1512) located at the right side and the front end of the second integral drive axle (1510). The outer ball cage (1512) of the telescopic constant velocity ball cage universal joint installed on the left side of the input splined shaft of the integral drive axle gear (or sprocket chain) transmission box housing (1511) is in a relative position to the outer ball cage (116) of the constant velocity ball cage universal joint installed on the right side of the output splined shaft bearing seat (117) on the right side of the universal joint output shaft conical gear right-angle transmission box housing (1502) of the first set of new multi-purpose shaft transmission box (1501). At the same time, the preferred rightward power output drive half shaft (1518) is horizontally arranged and installed inside the outer ball cage (116) of the constant velocity ball cage universal joint installed on the right side of the output splined shaft (113) of the universal joint output shaft conical gear right-angle transmission box housing (1502) of the first set of new multi-purpose shaft transmission box (1501), and the drive half shaft (1518) is inserted into the center splined hole of the inner ball cage and extends rightward horizontally to the drive axle gear (or sprocket chain) transmission box housing welded to the right end of the second integral drive axle (1510) bridge tube. Inside the outer ball cage (1512) of the telescopic constant velocity ball cage universal joint that extends outward to the left from the left input shaft bearing housing (1511) of the first set of new multi-purpose shaft transmission box (1501), it meshes with the inner ball cage to transmit power.
When the first set of new multi-purpose shaft transmission box (1501) is used in conjunction with the universal joint output shaft bevel gear right-angle transmission box housing (1502) to drive the first integral drive axle (1507) and the second integral drive axle (1510) of the two sets of double front axles, an inter-axle differential can be optionally installed in the middle position of the two sets of constant velocity ball cage universal joint output splined shafts (113) in the universal joint output shaft bevel gear right-angle transmission box housing (1502) of the first set of new multi-purpose shaft transmission box (1501), enabling the constant velocity ball cage universal joint (115) at the left end of the left universal joint output splined shaft (113) and the drive half shaft (1517) transmitting power to the left to have a differential function with the constant velocity ball cage universal joint (116) at the right end of the right universal joint output splined shaft (113) and the drive half shaft (1518) transmitting power to the right.
The integral drive axle is extended to be applied in the transmission system of the four-wheel drive axle 8x8 drive wheels. When the new multi-purpose shaft transmission box is used in conjunction with the integral drive axle to transmit power to the double rear axles, the double-axle structure of the rear axle is a four-wheel drive integral drive axle double rear axle structure. It includes the third integral drive axle (1513), which is composed of a tubular axle tube of appropriate length and an elliptical drive axle gear (or sprocket chain) transmission box housing (1516) installed at the left end of the third integral drive axle tube (1513) to form the integral drive axle housing. The same, the fourth integral drive axle (1506) is composed of a tubular axle tube of appropriate length and an elliptical drive axle gear (or sprocket chain) transmission box housing (1505) installed at the right end of the fourth integral drive axle tube (1506) to form the integral drive axle housing. The double rear axle structure shares the second set of new multi-purpose shaft transmission boxes (1503) between the third integral drive axle (1513) and the fourth integral drive axle (1506) of the two sets of rear axles in the double-axle drive.
The left universal joint output shaft bearing housing (118) and the right universal joint output shaft bearing housing (117) of the second set of new multi-purpose shaft transmission box body (1503) and the universal joint output splined shaft (113) extending laterally to both sides are installed in a transverse arrangement at the rear chassis position of the all-terrain amphibious vehicle or wheeled armored vehicle, located between the third integral drive axle (1513) and the fourth integral drive axle. It is installed at the middle position of the vehicle body chassis in an integrated structure. Meanwhile, the left universal joint output shaft bevel gear bearing seat (118) and the right universal joint output shaft bevel gear bearing seat (117) of the universal joint output shaft bevel gear right-angle transmission box housing (1504), as well as the universal joint output spline shaft (113) extending outward to the left and right, are installed in parallel with the third group of integral drive axles (1513) and the fourth group of integral drive axles (1506) of the dual-drive rear axle.
The left end of the universal joint output splined shaft (113) extending outward from the left universal joint output shaft bearing seat (118) of the second set of new multi-purpose shaft transmission box body (1503) installed on the chassis of an all-terrain amphibious vehicle or wheeled armored vehicle in a transverse arrangement is simultaneously equipped with a left end constant velocity ball cage universal joint outer cage (115), and the right end of the universal joint output splined shaft (113) extending outward from the right universal joint output shaft bearing seat (117) is simultaneously equipped with a right end constant velocity ball cage universal joint outer cage (116), which are fastened with a central screw.
The left end of the left universal joint output splined shaft (113) installed in the left universal joint output shaft bearing seat (118) on the left side of the second set of universal joint output shaft bevel gear right-angle transmission box housing (1504) has a constant velocity ball cage universal joint outer cage (115) installed. The inner cage center splined hole of this outer cage is inserted with a transmission half shaft (1519) extending laterally to the left. The inner cage installed at the right end of the transmission half shaft (1519) meshes with the constant velocity ball cage universal joint outer cage (115) installed at the left end of the universal joint output splined shaft (113) to transmit power. The transmission half shaft (1519) extends laterally to the left and is connected to the inner cage of the rightward extending telescopic constant velocity ball cage universal joint outer cage (1514) installed on the right side of the input shaft bearing seat outside the transmission box housing (1516) of the left side of the third integral drive axle (1513) of the dual drive rear axle, and the inner cage center splined hole meshes with it to transmit power.
The third set of integral drive axle gear (or sprocket chain) transmission box housing (1516) installed at the left end of the integral drive axle (1513) is in a horizontal installation position, with the universal joint and input splined shaft (1514) located on the left side of the third integral drive axle (1513) and at the rear end of the installation position, so that the integral drive axle gear (or sprocket chain) transmission box housing (1516) is outside.
The outer ball cage (1514) of the telescopic constant velocity ball cage universal joint installed to the right on the right input splined shaft is in a relative position to the outer ball cage (115) of the constant velocity ball cage universal joint installed to the left on the left end of the splined output shaft (113) of the left universal joint output shaft bearing housing (118) of the right-angle transmission box shell (1504) of the second set of new multi-purpose shaft transmission box (1503). Among them, the preferred left output power drive half shaft (1519) is laterally arranged and installed in the outer ball cage (115) of the constant velocity ball cage universal joint installed to the left on the left end of the splined output shaft (113) of the left universal joint output shaft bearing housing (118) of the right-angle transmission box shell (1504) of the second set of new multi-purpose shaft transmission box (1503), and at the same time, the drive half shaft (1519) inserted into the center splined hole of the inner ball cage in the outer ball cage (115) extends laterally to the right and engages with the center splined hole of the inner ball cage of the telescopic constant velocity ball cage universal joint (1514) installed to the right on the right side of the input shaft bearing housing of the drive axle gear (or sprocket chain) transmission box shell (1516) welded to the left end of the third integral drive axle (1513) to transmit power.
The transmission half shaft (1520) extending laterally to the right is inserted into the center splined hole of the inner cage within the constant velocity ball cage universal joint outer cage (116) installed at the right end of the right universal joint output splined shaft (113) in the right universal joint output shaft bearing housing (117) on the right side of the second set of universal joint output shaft bevel gear right-angle transmission box housing (1504). The inner cage installed at the left end of the transmission half shaft (1520) meshes with the outer cage (116) of the constant velocity ball cage universal joint installed at the right end of the universal joint output splined shaft (113) to transmit power. The transmission half shaft (1520) extends laterally to the right and reaches the input shaft bearing housing on the left side of the drive axle gear (or sprocket chain) transmission box housing (1505) installed on the right side of the fourth integral drive axle (1506) of the dual drive rear axle, where it meshes with the center splined hole of the inner cage within the outer cage (1515) of the constant velocity ball cage universal joint with telescopic function extending to the left and transmits power.
The fourth integral drive axle gear (or sprocket chain) transmission box housing (1505) installed at the right end of the integral drive axle (1506) is in a horizontal installation position, with the universal joint and input splined shaft (1515) located on the right side of the fourth integral drive axle (1506) and at the front end. The outer ball cage (1515) of the telescopic constant velocity ball cage universal joint installed on the left end of the input splined shaft of the transmission box housing (1505) on the left side of the overall drive axle gear (or sprocket chain) is positioned in a relative position to the outer ball cage (116) of the constant velocity ball cage universal joint installed on the right end of the splined shaft of the bearing housing (117) on the right side of the output shaft of the universal joint of the second set of multi-purpose shaft transmission box (1503) and the right-angle transmission box housing (1504). At the same time, the preferred rightward output power transmission half shaft (1520) is laterally arranged and installed inside the outer ball cage (116) of the constant velocity ball cage universal joint installed on the right end of the splined shaft (113) of the right side of the output shaft of the universal joint of the second set of multi-purpose shaft transmission box (1503) and the right-angle transmission box housing (1504). At the same time, the transmission half shaft (1520) is inserted into the center splined hole of the inner ball cage and extends laterally to the right to the inner splined hole of the inner ball cage of the telescopic constant velocity ball cage universal joint (1515) installed on the left side of the input shaft bearing housing extending outward to the left of the drive axle gear (or sprocket chain) transmission box housing (1505) welded to the right end of the fourth overall drive axle (1506) to mesh and transmit power.
When the second set of the new multi-purpose shaft transmission box (1503) and the universal joint output shaft bevel gear right-angle transmission box housing (1504) are used to drive the third integral drive axle (1513) and the fourth integral drive axle (1506) with two sets of double rear axles to transmit power, an inter-axle differential can be optionally installed in the middle position of the left and right two sets of constant velocity ball cage universal joint output splined shafts (113) in the second set of the new multi-purpose shaft transmission box (1503) and the universal joint output shaft bevel gear right-angle transmission box housing (1504), so that the constant velocity ball cage universal joint (115) installed at the left end of the left universal joint output splined shaft (113) and the drive half shaft (1519) transmitting power to the left, and the constant velocity ball cage universal joint (116) installed at the right end of the right universal joint output splined shaft (113) and the drive half shaft (1520) transmitting power to the right have a differential function.
When the overall drive axle is extended for application in all-terrain amphibious vehicles or in the transmission of power through four drive axles in the body of a wheeled armored vehicle, since all four drive axles are of the same integral drive axle structure and do not have the steering function of wheel hub tire deflection, it is necessary to install the first group Axial differential assemblies are installed between the left and right drive axle half shafts in each of the integral drive axle gear transmission box housings (1508), (1511), (1516), and (1506). This enables the left and right drive axle half shafts mounted on the axial differentials and the drive wheels installed at the ends of the two half shafts in the first integral drive axle (1507), the second integral drive axle (1510), the third integral drive axle (1513), and the fourth integral drive axle (1506) to have differential functions. Only in this way can the speed difference be generated between the wheel pairs on the left and right sides of the vehicle chassis on the same axis, allowing the vehicle to achieve tire slippage and steering functions.
The vehicle body with an 8×8 drive wheel structure of a four-wheel drive integral drive axle is equipped with two sets of brake and steering systems on the left and right sides. Among the four integral drive axles installed on the vehicle chassis, namely the first integral drive axle (1507), the second integral drive axle (1510), the third integral drive axle (1513), and the fourth integral drive axle (1506), there are two sets of brake systems on each side. The left brake system is installed on the left wheel well of the same integral drive axle, and the right brake system is installed on the right wheel well. When the vehicle is in motion and one side's brake system is used, the rotational speed of the drive wheels on one side of the vehicle body decreases, while the drive wheels on the opposite side of the same axle increase their rotational speed under the action of the differential, creating a speed difference between the left and right drive wheels of the four integral drive axles, thereby achieving tire sliding steering or in-place turning.

4. The multi-drive bridge power transmission structure of the new multi-purpose shaft transmission system for all-terrain vehicles as described in claim 1 is extended to be applied in the transmission structure of three-bridge drive 6x6 drive wheels and four-bridge drive 8x8 drive wheels. For the dual-bridge structure, the left universal joint output shaft bearing seat (118) and the right universal joint output shaft bearing seat (117) of the first set of new multi-purpose shaft transmission box body's bevel gear right-angle transmission box shell (1402) of the front double bridge structure, which is four-wheel drive and independent suspension steering, must be arranged horizontally and laterally on the chassis of the all-terrain amphibious vehicle or wheeled armored vehicle to better install the universal joint and the drive half shaft for power transmission. However, in order to obtain the power transmitted from the remote engine, the input shaft of the first set of new multi-purpose shaft transmission box body, which is installed vertically, must be arranged. The conical gear right-angle transmission box housing (1400) and the universal joint output shaft conical gear right-angle transmission box housing (1402) are installed and fixed by rotating 90° the intermediate transmission shaft support and protection tube (109) and the flange (110) at the axial position of the intermediate transmission shaft (108), so that the input splined shaft (101) in the input conical gear right-angle transmission box housing (1400) of the new multi-purpose shaft transmission box body installed in the vertical position is in a longitudinal installation position, parallel to the longitudinal axis of the all-terrain amphibious vehicle or wheeled armored vehicle body, and the universal joint output shaft (113) in the universal joint output shaft conical gear right-angle transmission box housing (1402) installed in the chassis position of the all-terrain amphibious vehicle or wheeled armored vehicle body in a transverse arrangement has a 90° transmission phase difference at the axial position of the intermediate transmission shaft (108).
The left universal joint output shaft bearing housing (118) and the right universal joint output shaft bearing housing (117) of the second set of new multi-purpose shaft transmission box body's universal joint output shaft bevel gear right-angle transmission box housing (1403) must be installed in a horizontal position and laterally on the chassis of the all-terrain amphibious vehicle or wheeled armored vehicle to better arrange and install the universal joint and the transmission half shaft for power transmission. However, in order to obtain the power transmitted from the remote engine, the input shaft bevel gear right-angle transmission box housing (1401) of the second set of new multi-purpose shaft transmission box body, which is installed vertically, and the universal joint output shaft bevel gear right-angle transmission box housing (1403) must be rotated 90 degrees and fixed at the axial position of the intermediate transmission shaft (108), so that the input splined shaft (101) inside the vertically installed new multi-purpose shaft transmission box body's input shaft bevel gear right-angle transmission box housing (1401) is installed in a longitudinal position, parallel to the longitudinal axis of the all-terrain amphibious vehicle or wheeled armored vehicle body, and the universal joint output shaft (113) inside the laterally installed universal joint output shaft bevel gear right-angle transmission box housing (1403) on the chassis of the all-terrain amphibious vehicle or wheeled armored vehicle has a 90-degree transmission phase difference at the axial position of the intermediate transmission shaft (108).
The left universal joint output shaft bearing housing (118) and the right universal joint output shaft bearing housing (117) of the third set of new multi-purpose shaft transmission box housing of the right-angle transmission box shell (1416) shared between the two sets of rear integral drive axles of the four-wheel drive integral drive axle with the double-axle structure at the rear must be in a horizontal position and transverse. The layout and installation of the universal joint and the drive half shaft for power transmission can be better achieved when the multi-purpose shaft transmission box is installed on the chassis of an all-terrain amphibious vehicle or a wheeled armored vehicle. However, in order to obtain the power transmitted from the remote engine, the input shaft bevel gear right-angle transmission box housing (1404) of the third set of the newly designed multi-purpose shaft transmission box, which is installed vertically, and the output shaft bevel gear right-angle transmission box housing (1416) of the universal joint, which is installed horizontally on the chassis of the all-terrain amphibious vehicle or the wheeled armored vehicle, must be rotated 90 degrees and fixed on the axial position of the intermediate drive shaft (108), with the support and protection tube (109) and the flange (110) of the intermediate drive shaft. This ensures that the input splined shaft (101) inside the input shaft bevel gear right-angle transmission box housing (1404) of the vertically installed multi-purpose shaft transmission box is in a longitudinal installation position, parallel to the longitudinal axis of the vehicle body of the all-terrain amphibious vehicle or the wheeled armored vehicle, and forms a 90-degree transmission phase difference with the output shaft (113) of the universal joint inside the horizontally installed output shaft bevel gear right-angle transmission box housing (1416) on the chassis of the vehicle at the axial position of the intermediate drive shaft (108).
When the overall drive axle is applied to the transmission structure of the 8x8 drive wheel configuration with four-wheel drive, the left and right universal joint output shaft bearing seats (118 and 117) of the first set of new multi-purpose shaft transmission box body's universal joint output shaft bevel gear right-angle transmission box shell (1502) of the double-axle structure's front axle, which is a four-wheel drive overall drive axle double front axle structure, must be installed in a horizontal position and laterally on the chassis of the all-terrain amphibious vehicle or wheeled armored vehicle to better arrange and install the universal joint and the transmission half shaft for power transmission. However, in order to obtain the power transmitted from the remote engine, the input shaft bevel gear right-angle transmission box shell (1501) of the first set of new multi-purpose shaft transmission box body, which is installed vertically, and the universal joint output shaft bevel gear right-angle transmission box shell (1502) must be rotated 90° and fixed on the axial position of the intermediate transmission shaft (108), with the intermediate transmission shaft support protection tube (109) and the flange (110) in between. This ensures that the input splined shaft (101) inside the vertically installed new multi-purpose shaft transmission box body's input shaft bevel gear right-angle transmission box shell (1501) is in a longitudinal installation position, parallel to the longitudinal axis of the all-terrain amphibious vehicle or wheeled armored vehicle's body, and is in line with the laterally installed universal joint output shaft bevel gear right-angle transmission box shell on the chassis of the all-terrain amphibious vehicle or wheeled armored vehicle. The output shaft (113) of the universal joint inside the right-angle transmission box housing (1502) has a 90° transmission phase difference in the axial position of the intermediate transmission shaft (108).
The left universal joint output shaft bearing seat (118) and the right universal joint output shaft bearing seat (117) of the second set of new multi-purpose shaft transmission box body's universal joint output shaft bevel gear right-angle transmission box shell (1504) of the rear double-axle structure of the four-wheel drive integral drive axle must be in a horizontal position and installed transversely on the chassis of the all-terrain amphibious vehicle or wheeled armored vehicle to better install the universal joint and the drive half shaft for power transmission. However, in order to obtain the power transmitted from the remote engine, the input shaft bevel gear right-angle transmission box shell (1503) of the second set of new multi-purpose shaft transmission box body, which is installed vertically, and the universal joint output shaft bevel gear right-angle transmission box shell (1504) must be rotated 90° and fixed on the axial position of the intermediate transmission shaft (108), with the intermediate transmission shaft support protection tube (109) and the flange (110). This makes the input splined shaft (101) inside the vertically installed new multi-purpose shaft transmission box body's input shaft bevel gear right-angle transmission box shell (1503) in a longitudinal installation position, parallel to the longitudinal axis of the all-terrain amphibious vehicle or wheeled armored vehicle body, and at a 90° transmission phase difference with the universal joint output shaft (113) inside the horizontally installed universal joint output shaft bevel gear right-angle transmission box shell (1504) on the chassis of the all-terrain amphibious vehicle or wheeled armored vehicle at the axial position of the intermediate transmission shaft (108).

5. The multi-purpose shaft transmission structure of the new type of all-terrain vehicle as claimed in claim 1, when applied to the power transmission of an all-terrain amphibious vehicle or a wheeled armored vehicle, the new multi-purpose shaft transmission box must be installed in a vertical arrangement at the chassis position of the vehicle body. Therefore, for the double-bridge structure where the front bridge is a four-wheel drive independent suspension steering front double-bridge structure, the first set of new multi-purpose shaft transmission boxes in a longitudinal installation position, the input shaft bevel gear right-angle transmission box shell (1400) of the new multi-purpose shaft transmission box, the input splined shaft (101), and the combination components such as the transmission shaft connected in series with the engine and the transmission shaft universal joint are installed in the middle position inside the chassis of the all-terrain amphibious vehicle or the wheeled armored vehicle, and the input splined shaft (101) of the input shaft bevel gear right-angle transmission box shell (1401) of the second set of new multi-purpose shaft transmission boxes in a longitudinal installation position. It is installed in the middle of the vehicle body chassis of an all-terrain amphibious vehicle or a wheeled armored vehicle together with the transmission shaft and universal joint of the transmission shaft and other combined components; the chassis armor can effectively prevent the damage to the transmission system inside the vehicle body chassis caused by the shock wave of explosive fragments.
The input splined shaft (101) of the input bevel gear right-angle transmission box housing (1404) of the third set of new multi-purpose shaft transmission box, which is installed in a longitudinal position and shared by the two sets of rear integral drive axles of the four-wheel drive integral drive axle with a double rear axle structure, and the combination components such as the transmission shaft and universal joint connected in series with the engine are installed in the middle position of the vehicle body chassis of the all-terrain amphibious vehicle or wheeled armored vehicle. The transmission shaft and universal joint at the engine end output power and are connected in series to the input splined shaft outside the input bevel gear right-angle transmission box housing of each set of longitudinally installed new multi-purpose shaft transmission box, so that each set of new multi-purpose shaft transmission box can obtain rotational driving force.
The first set of universal joint output shaft bevel gear right-angle transmission box shell (1402) installed on the left side of the new multi-purpose shaft transmission box body simultaneously installed on the external position of the all-terrain amphibious vehicle or wheeled armored vehicle chassis, the universal joint (115) drive half shaft (1421) and the universal joint (116) drive half shaft (1406) installed on the right side, and the second set of universal joint output shaft bevel gear right-angle transmission box shell (1403) installed on the left side, the universal joint (115) drive half shaft (1405) and the universal joint (116) drive half shaft (1406) installed on the right side, as well as the third set of universal joint output shaft bevel gear right-angle transmission box shell (1416) installed on the left side, the universal joint (115) drive half shaft (1407) and the universal joint (116) drive half shaft (1408) installed on the right side, and the third integral drive axle (1409) and the fourth integral drive axle (1410) and other combined components are manufactured with high-strength alloy materials and a large redundancy design.
The overall drive axle is extended to be applied in the transmission structure of the 8x8 drive wheel configuration with four-axle drive. In the double-axle structure, the front axle is the first set of new multi-purpose shaft transmission box body with a longitudinal installation position shared by the two sets of front overall drive axles of the four-wheel drive double front axle structure. It includes the input shaft splined shaft (101) of the input shaft bevel gear right-angle transmission box shell (1501) and the transmission shaft (1521) connected in series with the engine as well as the transmission shaft universal joint (1522). The combination components such as the universal joint (1523) at the end of the output shaft and the second set of new multi-purpose shaft transmission box body with the input shaft bevel gear right-angle transmission box shell (1503), the input shaft splined shaft (101), the intermediate transmission shaft (1524), and the transmission shaft universal joint (1525) are installed in the middle position inside the vehicle body chassis of the all-terrain amphibious vehicle or wheeled armored vehicle. The rear axle with a double-axle structure is a four-wheel drive integral drive axle, and the two sets of rear integral drive axles share the second set of new multi-purpose shaft transmission box body with the input shaft bevel gear right-angle transmission box shell (1503) installed in a longitudinal position.
The output drive shaft (1521) of the engine, which is installed in a longitudinal position parallel to the longitudinal axis of the vehicle body, is connected to the input splined shaft (101) of the drive shaft universal joint (1522). The output splined shaft (101) of the engine drive shaft universal joint (1522) extends horizontally to the rear in a longitudinal position and is inserted into the input shaft bevel gear right-angle transmission box housing (1501) of the first set of new multi-purpose shaft transmission boxes, which are installed in parallel and coaxially in a longitudinal position. The engine intermediate drive shaft (1524), which is also installed in a longitudinal position parallel to the longitudinal axis of the vehicle body, is connected to the output splined shaft (101) of the output shaft universal joint (1523) at the end of the input shaft bevel gear right-angle transmission box housing (1501) of the first set of new multi-purpose shaft transmission boxes. At the same time, the engine intermediate drive shaft (1524) transmits power to the output splined shaft (101) located at the rear of the universal joint (1525) in a horizontal position and extending longitudinally to the rear, and this shaft is inserted into the input shaft bevel gear right-angle transmission box housing (1503) of the second set of new multi-purpose shaft transmission boxes, which are installed in parallel and coaxially in a longitudinal position, to transmit power. The vehicle's underbody armor can effectively prevent the damage to the internal transmission system of the vehicle chassis caused by the shock waves from explosive fragments. The universal joint output shaft bevel gear right-angle transmission box shell (1502) of the first set of new multi-purpose shaft transmission box bodies installed on the external position of the chassis of the all-terrain amphibious vehicle or wheeled armored vehicle, the universal joint (115) drive half shaft (1517) installed on the left side and the universal joint (116) drive half shaft (1518) installed on the right side, and the first integral drive axle (1507) and the second integral drive axle (1510) combined components, as well as the universal joint output shaft bevel gear right-angle transmission box shell (1504) of the second set of new multi-purpose shaft transmission box bodies, the universal joint (115) drive half shaft (1519) installed on the left side and the universal joint installed on the right side. The drive half shaft (1520), along with the associated third integral drive axle (1513) and fourth integral drive axle (1506) and other combined components, are manufactured using high-strength alloy materials with a large redundancy design to enhance the resistance to the impact of explosive fragments and shock waves, thereby improving the battlefield survivability of the all-terrain amphibious vehicle or wheeled armored vehicle in maintaining rapid movement.
The constant velocity ball cage universal joint used in the novel multi-purpose shaft drive system described in this invention serves as a demonstration example. In this drive system, it is not specifically limited to the constant velocity ball cage universal joint. To reduce the actual production and usage costs, the demonstration example of the constant velocity ball cage universal joint in this invention can be replaced with various types of universal joints such as the cross-axis universal joint or the flexible universal joint coupling for power transmission.
The structure of the new multi-purpose shaft transmission system described in this invention, which is applied to the power transmission of three-drive axle 6×6 drive wheels and four-drive axle 8×8 drive wheels, serves as a demonstration. In the vehicle transmission system, it is not limited to the power transmission of three-drive axles and four-drive axles. To meet the higher requirements of special vehicles for off-road performance and load-bearing capacity, multiple sets of new multi-purpose shaft transmission boxes can be installed on the chassis of long special vehicles in a reasonable combination mode, along with multiple sets of independent suspension knuckle shaft steering knuckles and multiple sets of integral drive axle transmission structures for power transmission.
In the present invention, when the integrated drive axle transmission system is in operation, the three sets of transmission gear groups installed in the transmission box housing of the integrated drive axle serve as an example. In this transmission system, it is not specifically limited to three sets of transmission gear combinations. During production and use, the number of transmission gears or sprocket groups installed in the transmission box housing of the integrated drive axle can be increased or decreased according to the actual working conditions to achieve the best transmission matching.
